(19) Europäisches Patentamt
European Patent Office
Office européen des brevets

(11) **EP 4 387 280 A1**

(12) **EUROPEAN PATENT APPLICATION**
published in accordance with Art. 153(4) EPC

(43) Date of publication:
**19.06.2024 Bulletin 2024/25**

(21) Application number: **22885436.0**

(22) Date of filing: **08.09.2022**

(51) International Patent Classification (IPC):
***H04W 4/02*** (2018.01)    ***H04W 16/28*** (2009.01)
***H04L 12/28*** (2006.01)

(52) Cooperative Patent Classification (CPC):
**H04L 12/28; H04W 4/02; H04W 16/28;** Y02D 30/70

(86) International application number:
**PCT/CN2022/117923**

(87) International publication number:
**WO 2023/071547 (04.05.2023 Gazette 2023/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.10.2021 CN 202111243793**

(71) Applicant: **Huawei Technologies Co., Ltd.**
**Shenzhen, Guangdong 518129 (CN)**

(72) Inventors:
• **DONG, Wei**
**Shenzhen, Guangdong 518129 (CN)**
• **XU, Haowei**
**Shenzhen, Guangdong 518129 (CN)**
• **XU, Bingkun**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **HUMAN BODY PERCEPTION-BASED AUTOMATIC CONTROL METHOD, FIRST ELECTRONIC DEVICE, AND SYSTEM**

(57) This application provides a human sensing-based automatic control method, a first electronic device, and a system, and relates to the field of automatic control. The system includes a first electronic device and a second electronic device. The first electronic device includes a first ultra-wide band module and a millimeter-wave radar module. Position information of the second electronic device and position information of a user are obtained based on position measurement for the second electronic device, measurement for a human body position, and conversion that are performed by the first electronic device. At least one second electronic device automatically performs a preset operation based on the position information of the user and the position information of the second electronic device. In this application, the user does not need to carry a device, and automatic control of an IoT device is implemented. This is convenient and quick.

S1: Establish a first coordinate system, a second coordinate system, a third coordinate system, a fourth coordinate system, and a fifth coordinate system, and obtain position information of a device, an area, and a user in the fifth coordinate system through conversion from the first coordinate system, the second coordinate system, the third coordinate system, and the fourth coordinate system to the fifth coordinate system

S2: A second electronic device performs a preset operation based on the position information of the user and position information of the second electronic device

(a)

Hub device 200
Determine, based on the coordinates of the second electronic device and the coordinates of the user, that the second electronic device executes a preset instruction

Coordinates of the second electronic device and a room or an area in which the second electronic device is located

Report coordinates of a user in a whole house and a room or an area in which the user is located

Deliver the preset instruction

First electronic device 100

UWB module | Millimeter-wave radar module

Second electronic device 300

(b)

FIG. 26

**Description**

This application claims priority to Chinese Patent Application No. 202111243793.6, filed with the China National Intellectual Property Administration on October 25, 2021 and entitled "HUMAN SENSING-BASED AUTOMATIC CONTROL METHOD, FIRST ELECTRONIC DEVICE, AND SYSTEM", which is incorporated herein by reference in its entirety.

**TECHNICAL FIELD**

This application relates to the field of automatic control, and in particular, to a human sensing-based automatic control method, a first electronic device, and a system.

**BACKGROUND**

With rapid development of smart homes, more users install internet of things (Internet of Things, IoT) devices (which may also be referred to as IoT devices, smart devices, or the like) in places such as homes or offices, and even install IoT devices throughout a house (which may also be referred to as whole-house intelligence, an all-in-one smart home, a smart manager, or the like). The users can experience convenience brought by the IoT devices. However, in the conventional technology, the user needs to carry a mobile device (for example, a smartphone or a wearable device) to implement automatic control of the IoT device through communication and sensing between the mobile device and the IoT device, and the like. The user sometimes forgets to carry the mobile device in places such as the home or the office, and cannot implement automatic control of the IoT device. As a result, inconvenience is brought to the user, and user experience is affected.

**SUMMARY**

On a basis of the foregoing background, how to make automatic control of an IoT device by a user more convenient, and further improve user experience becomes a problem to be considered.

To resolve the foregoing technical problem, this application provides a human sensing-based automatic control method, a first electronic device, and a system. According to the technical solutions of this application, when a user approaches or moves away from an IoT device, the IoT device automatically performs an operation, without performing any operation by the user and carrying any electronic device by the user neither. This greatly improves user experience. In addition, hardware of the IoT device does not need to be modified neither. For example, a smart speaker generally has no camera and does not need to be additionally equipped with a camera.

According to a first aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a routing device and a terminal device. R is a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device. The hub device sends a first message to the routing device. The routing device receives the first message, and adjusts a beam based on a position of the routing device and a position of the user, so that a maximum gain point of an adjusted beam points to the user.

In this manner, the routing device is controlled, based on the position of the user, the position of the routing device, and a position of the terminal device, to automatically adjust the beam (for example, according to a beamforming algorithm), so that the terminal device can finally receive a narrow beam provided by a routing device 300a. In this way, the terminal device can obtain a signal that has a large gain and accurate coverage and that is provided by the routing device. The user does not need to perform a manual operation or carry any device. The routing device automatically performs adjustment based on the position of the user.

According to the first aspect, if the hub device learns that a distance between the user and the terminal device is less than a preset error range, the hub device sends the first message to the routing device. That the distance between the user and the terminal device is less than the preset error range indicates that the user and the terminal device are in a same position. To be specific, it may be considered that the user uses the terminal device. In other words, if it is determined that the user uses the terminal device, the beam of the routing device is adjusted.

According to the first aspect or any implementation of the first aspect, if the hub device learns that a position change of the user is greater than a first preset range, or the hub device learns that a position change of the terminal device is greater than a second preset range, the hub device obtains the position information of the R second electronic devices and the position information of the user in the whole-house coordinate system provided by the hub device.

In this manner, if it is determined that the user moves or the terminal device moves, the routing device is triggered to adjust the beam. In this way, the beam of the routing device is aligned with the user.

According to a second aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a routing device and N terminal devices. R and N each are a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device. A quantity of users whose distances from the N terminal devices fall within a preset error range in the M users is M1, where M1>0. The hub device sends a first message to the routing device. The routing device receives the first message, and adjusts a beam based on a position of the routing device and positions of the M1 users, so that maximum beam gain points alternately point to the positions of the M1 users in a time division multiplexing manner.

In this manner, when there are the M users, positions of the M users and positions of the N terminal devices can be obtained. Then, M1 positions in which the positions of the N terminal devices are consistent with or have an error within the preset range with the positions of the M users may be obtained. In this case, the routing device may be controlled to automatically adjust the beam (for example, according to a beamforming algorithm). The routing device provides narrow pulse signals to the M1 positions in the time division multiplexing manner or the like. Because a time division slot is short, the user does not perceive the time division slot. Finally, all maximum beam gain points provided by the routing device point to terminal devices in the M1 positions in the time division multiplexing manner. All the terminal devices in the M1 positions can receive narrow beams provided by the routing device.

According to the second aspect, if the hub device learns that a position change of at least one of the M users is greater than a first preset range, or the hub device learns that a position change of at least one of the N terminal devices is greater than a second preset range, the hub device obtains the position information of the R second electronic devices and the position information of the M users in the whole-house coordinate system provided by the hub device.

In this manner, if it is determined that the at least one user moves or the at least one terminal device moves, the routing device is triggered to adjust the beam. In this way, the beam of the routing device is alternately aligned with each user.

According to a third aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1. The hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device. The hub device sends a first message to the first device. The first device receives the first message, and cleans an area in a whole house other than a first area to which the user belongs.

In this manner, a cleaning device automatically avoids, during cleaning based on a position of the user, a room or an area in which the user is located, to avoid disturbing the user.

According to the third aspect, the hub device obtains, based on position measurement and conversion performed by the first electronic device on the mobile device and communication between the hub device and the first electronic device, position information of M pieces of furniture in the whole-house coordinate system provided by the hub device. If the hub device learns that a distance between the user and one of the M pieces of furniture is less than a preset first error range, and optionally, if the hub device further learns that an attitude of the user is a lying attitude or a sitting attitude, the hub device sends the first message to the first device.

In this manner, if it is determined that the user is resting, the room or the area in which the user is located is not cleaned.

According to the third aspect or any implementation of the third aspect, if the user and the first device belong to a same area, after receiving the first message, the first device leaves the first area to which the user belongs.

According to the third aspect or any implementation of the third aspect, the hub device learns that a change of the user within preset duration is greater than or equal to a preset second error range. The hub device sends a third message to the first device. The first device receives the third message, and enters the first area to which the user belongs.

In this manner, if it is determined that the user starts an activity or the user leaves the room or the area, the cleaning device automatically enters the room or area for cleaning.

According to the third aspect or any implementation of the third aspect, the hub device obtains, based on position measurement and conversion performed by the first electronic device on the mobile device and communication between the hub device and the first electronic device, a coordinate range of each area in the whole house in the whole-house coordinate system provided by the hub device. The hub device sends coordinate range information of each area in the whole house to the first device. The first device performs cleaning based on the coordinate range information of each area in the whole house.

According to a fourth aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. The hub device obtains a first user whose distance from the first device is less than a preset first error range in the one or more users. The hub device obtains at least one of height information, breath frequency information, and heartbeat frequency information of the first user. The hub device sends a first message to the first device. The first message includes the at least one of the height information, the breath frequency information, and the heartbeat frequency information of the first user.

In this manner, the user does not need to manually input information, and the user does not need to carry any device neither. Human body information such as a height, a breath frequency, and a heartbeat frequency of the user is automatically obtained, to obtain body data of the user.

According to the fourth aspect, the first device receives the first message, and obtains at least one of a body fat rate, a body mass index BMI, a muscle mass, a basal metabolic rate, and a visceral fat level of the first user based on the at least one of the height information, the breath frequency information, and the heartbeat frequency information of the first user.

According to the fourth aspect or any implementation of the fourth aspect, the first device sends a first request message to the hub device. The first request message indicates the hub device to obtain user data. If the hub device receives the first request message, the hub device obtains the first user whose distance from the first device is less than the preset first error range.

In this manner, a health management device triggers the hub device to obtain the information such as the height, the breath frequency, and the heartbeat frequency of the user.

According to the fourth aspect or any implementation of the fourth aspect, the R second electronic devices include a mobile device. The mobile device includes a second ultra-wide band module. Position measurement performed by the first electronic device on the first device includes: The first electronic device measures a position of the mobile device, and measures a position of the first device based on the position of the mobile device. In this implementation, if the first device does not include a UWB module, the first device can be calibrated by using a mobile device that includes a UWB module.

According to a fifth aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. A distance between the first device and the ground is a first height. If the hub device learns that a distance between a first user in the one or more users and the first device is less than a preset first distance, and optionally, if the hub device further learns that the first user performs a preset action, the hub device sends a first message to the first device. The first device receives the first message, and descends to a second height above the ground. The second height is less than the first height.

In this manner, a drying device automatically descends based on a position of the user, without performing a manual operation by the user. This improves user experience.

According to the fifth aspect, the hub device obtains height information of the first user. The hub device sends indication information to the first device. The indication information indicates a height of the first user. The first device receives the indication information, and obtains the second height based on the indication information.

In this manner, a descent height of the drying device is determined based on a height of the user.

According to the fifth aspect or any implementation of the fifth aspect, if the hub device learns that duration within which the distance between the first user and the first device is less than the preset first distance is greater than a preset value, the hub device sends the first message to the first device.

In this manner, if it is determined that the user stays next to the drying device for specific duration, the drying device descends. This avoids a misoperation.

According to the fifth aspect or any implementation of the fifth aspect, the hub device learns that the distance between the first user and the first device is greater than or equal to the preset first distance, and sends a second message to the first device. The first device receives the second message, and ascends to the first height above the ground.

In this manner, the drying device automatically ascends based on the position of the user, without performing a manual operation by the user. This improves user experience.

According to the fifth aspect or any implementation of the fifth aspect, the R second electronic devices include a mobile device. The mobile device includes a second ultra-wide band module. Position measurement performed by the first electronic device on the first device includes: The first electronic device measures a position of the mobile device, and measures a position of the first device based on the position of the mobile device. In this implementation, if the first device does not include a UWB module, the first device can be calibrated by using a mobile device that includes a UWB module.

According to a sixth aspect, this application provides a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. If a preset condition is met between a position of the first device and a position of a first user in the one or more users, the hub device notifies the first device to adjust light. The first device adjusts the light based on the notification of the hub device.

In this manner, on/off, brightness, a color, and the like of a lighting device are automatically adjusted based on a relative position between the user and the lighting device. This improves user experience.

In an implementation, the preset condition includes that the first user enters a first area to which the first device belongs, a distance between the first user and the first device is less than or equal to a preset distance, or the first user enters a second area in a preset direction of the first device. That the hub device notifies the first device to adjust the light includes: The hub device sends a first message to the first device. The first message indicates to light the first device. Optionally, the hub device obtains an identity of the first user and a first brightness value corresponding to the identity of the first user. The hub device sends first indication information to the first device. The first indication information indicates the first brightness value. The first device receives the first indication information, and lights up with the first brightness value based on the first indication information. Optionally, the hub device obtains an identity of the first user and a first color corresponding to the identity of the first user. The hub device sends second indication information to the first device. The second indication information indicates the first color. The first device receives the second indication information, and lights up with the first color based on the second indication information.

In an implementation, the preset condition includes that the first user leaves a first area to which the first device belongs, a distance between the first user and the first device is greater than a preset distance, or the first user leaves a second area in a preset direction of the first device. That the hub device notifies the first device to adjust the light includes: The hub device sends a second message to the first device. The second message indicates to extinguish the first device.

In an implementation, the preset condition includes that a distance between the first user and the first device changes. That the hub device notifies the first device to adjust the light includes: The hub device sends a third message to the first device. The third message indicates the first device to reduce brightness. Alternatively, the hub device sends a fourth message to the first device. The fourth message indicates the first device to increase brightness.

According to the sixth aspect, the R second electronic devices include a mobile device. The mobile device includes a second ultra-wide band module. Position measurement performed by the first electronic device on the first device includes: The first electronic device measures a position of the mobile device, and measures the position of the first device based on the position of the mobile device. In this implementation, if the first device does not include a UWB module, the first device can be calibrated by using a mobile device that includes a UWB module.

According to a seventh aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a routing device and a terminal device. R is a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device. The hub device sends a first message to the routing device. The routing device receives the first message, and adjusts a beam based on a position of the routing device and a position of the user, so that a maximum gain point of an adjusted beam points to the user.

In this manner, the routing device is controlled, based on the position of the user, the position of the routing device, and a position of the terminal device, to automatically adjust the beam (for example, according to a beamforming algorithm), so that the terminal device can finally receive a narrow beam provided by a routing device 300a. In this way, the terminal device can obtain a signal that has a large gain and accurate coverage and that is provided by the routing device. The user does not need to perform a manual operation or carry any device. The routing device automatically performs adjustment based on the position of the user.

According to the seventh aspect, if the hub device learns that a distance between the user and the terminal device is less than a preset error range, the hub device sends the first message to the routing device. That the distance between the user and the terminal device is less than the preset error range indicates that the user and the terminal device are in a same position. To be specific, it may be considered that the user uses the terminal device. In other words, if it is determined that the user uses the terminal device, the beam of the routing device is adjusted.

According to the seventh aspect or any implementation of the seventh aspect, if the hub device learns that a position change of the user is greater than a first preset range, or the hub device learns that a position change of the terminal device is greater than a second preset range, the hub device obtains the position information of the R second electronic devices and the position information of the user in the whole-house coordinate system provided by the hub device.

In this manner, if it is determined that the user moves or the terminal device moves, the routing device is triggered to adjust the beam. In this way, the beam of the routing device is aligned with the user.

According to an eighth aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a routing device and N terminal devices. R and N each are a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device. A quantity of users whose distances from the N terminal devices fall within a preset error range in the M users is M1, where M1>0. The hub device sends a first message to the routing device. The routing device receives the first message, and adjusts a beam based on a position of the routing device and positions of the M1 users, so that maximum beam gain points alternately point to the positions of the M1 users in a time division multiplexing manner.

In this manner, when there are the M users, positions of the M users and positions of the N terminal devices can be obtained. Then, M1 positions in which the positions of the N terminal devices are consistent with or have an error within the preset range with the positions of the M users may be obtained. In this case, the routing device may be controlled to automatically adjust the beam (for example, according to a beamforming algorithm). The routing device provides narrow pulse signals to the M1 positions in the time division multiplexing manner or the like. Because a time division slot is short, the user does not perceive the time division slot. Finally, all maximum beam gain points provided by the routing device point to terminal devices in the M1 positions in the time division multiplexing manner. All the terminal devices in the M1 positions can receive narrow beams provided by the routing device.

According to the eighth aspect, if the hub device learns that a position change of at least one of the M users is greater than a first preset range, or the hub device learns that a position change of at least one of the N terminal devices is greater than a second preset range, the hub device obtains the position information of the R second electronic devices and the position information of the M users in the whole-house coordinate system provided by the hub device.

In this manner, if it is determined that the at least one user moves or the at least one terminal device moves, the routing device is triggered to adjust the beam. In this way, the beam of the routing device is alternately aligned with each user.

According to a ninth aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1. The hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device. The hub device sends a first message to the first device. The first device receives the first message, and cleans an area in a whole house other than a first area to which the user belongs.

In this manner, a cleaning device automatically avoids, during cleaning based on a position of the user, a room or an area in which the user is located, to avoid disturbing the user.

According to the ninth aspect, the hub device obtains, based on position measurement and conversion performed by the first electronic device on the mobile device and communication between the hub device and the first electronic device, position information of M pieces of furniture in the whole-house coordinate system provided by the hub device. If the hub device learns that a distance between the user and one of the M pieces of furniture is less than a preset first error range, and optionally, if the hub device further learns that an attitude of the user is a lying attitude or a sitting attitude, the hub device sends the first message to the first device.

In this manner, if it is determined that the user is resting, the room or the area in which the user is located is not cleaned.

According to the ninth aspect or any implementation of the ninth aspect, if the user and the first device belong to a same area, after receiving the first message, the first device leaves the first area to which the user belongs.

According to the ninth aspect or any implementation of the ninth aspect, the hub device learns that a change of the user within preset duration is greater than or equal to a preset second error range. The hub device sends a third message to the first device. The first device receives the third message, and enters the first area to which the user belongs.

In this manner, if it is determined that the user starts an activity or the user leaves the room or the area, the cleaning device automatically enters the room or area for cleaning.

According to the ninth aspect or any implementation of the ninth aspect, the hub device obtains, based on position measurement and conversion performed by the first electronic device on the mobile device and communication between the hub device and the first electronic device, a coordinate range of each area in the whole house in the whole-house coordinate system provided by the hub device. The hub device sends coordinate range information of each area in the whole house to the first device. The first device performs cleaning based on the coordinate range information of each area in the whole house.

According to a tenth aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. The hub device obtains a first user whose distance from the first device is less than a preset first error range in the one or more users. The hub device obtains at least one of height information, breath frequency information, and heartbeat frequency information of the first user. The hub device sends a first message to the first device. The first message includes the at least one of the height information, the breath frequency information, and the heartbeat frequency information of the first user.

In this manner, the user does not need to manually input information, and the user does not need to carry any device neither. Human body information such as a height, a breath frequency, and a heartbeat frequency of the user is automatically obtained, to obtain body data of the user.

According to the tenth aspect, the first device receives the first message, and obtains at least one of a body fat rate, a body mass index BMI, a muscle mass, a basal metabolic rate, and a visceral fat level of the first user based on the at least one of the height information, the breath frequency information, and the heartbeat frequency information of the first user.

According to the tenth aspect or any implementation of the tenth aspect, the first device sends a first request message to the hub device. The first request message indicates the hub device to obtain user data. If the hub device receives the first request message, the hub device obtains the first user whose distance from the first device is less than the preset first error range.

In this manner, a health management device triggers the hub device to obtain the information such as the height, the breath frequency, and the heartbeat frequency of the user.

According to the tenth aspect or any implementation of the tenth aspect, the R second electronic devices include a mobile device. The mobile device includes a second ultra-wide band module. Position measurement performed by the first electronic device on the first device includes: The first electronic device measures a position of the mobile device, and measures a position of the first device based on the position of the mobile device. In this implementation, if the first device does not include a UWB module, the first device can be calibrated by using a mobile device that includes a UWB module.

According to an eleventh aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. A distance between the first device and the ground is a first height. If the hub device learns that a distance between a first user in the one or more users and the first device is less than a preset first distance, and optionally, if the hub device further learns that the first user performs a preset action, the hub device sends a first message to the first device. The first device receives the first message, and descends to a second height above the ground. The second height is less than the first height.

In this manner, a drying device automatically descends based on a position of the user, without performing a manual operation by the user. This improves user experience.

According to the eleventh aspect, the hub device obtains height information of the first user. The hub device sends indication information to the first device. The indication information indicates a height of the first user. The first device receives the indication information, and obtains the second height based on the indication information.

In this manner, a descent height of the drying device is determined based on a height of the user.

According to the eleventh aspect or any implementation of the eleventh aspect, if the hub device learns that duration within which the distance between the first user and the first device is less than the preset first distance is greater than a preset value, the hub device sends the first message to the first device.

In this manner, if it is determined that the user stays next to the drying device for specific duration, the drying device descends. This avoids a misoperation.

According to the eleventh aspect or any implementation of the eleventh aspect, the hub device learns that the distance between the first user and the first device is greater than or equal to the preset first distance, and sends a second message to the first device. The first device receives the second message, and ascends to the first height above the ground.

In this manner, the drying device automatically ascends based on the position of the user, without performing a manual operation by the user. This improves user experience.

According to the eleventh aspect or any implementation of the eleventh aspect, the R second electronic devices include a mobile device. The mobile device includes a second ultra-wide band module. Position measurement performed by the first electronic device on the first device includes: The first electronic device measures a position of the mobile device, and measures a position of the first device based on the position of the mobile device. In this implementation, if the first device does not include a UWB module, the first device can be calibrated by using a mobile device that includes a UWB module.

According to a twelfth aspect, this application provides a human sensing-based automatic control method, applied to a human sensing-based communication system. The system includes a hub device, a first electronic device, and R second electronic devices. Any two of the hub device, the first electronic device, and any one of the R second electronic devices communicate in a wired communication or wireless communication manner. The first electronic device includes a first ultra-wide band module and a millimeter-wave radar module. The R second electronic devices include a first device. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. If a preset condition is met between a position of the first device and a position of a first user in the one or more users, the hub device notifies the first device to adjust light. The first device adjusts the light based on the notification of the hub device.

In this manner, on/off, brightness, a color, and the like of a lighting device are automatically adjusted based on a relative position between the user and the lighting device. This improves user experience.

In an implementation, the preset condition includes that the first user enters a first area to which the first device belongs, a distance between the first user and the first device is less than or equal to a preset distance, or the first user enters a second area in a preset direction of the first device. That the hub device notifies the first device to adjust the light includes: The hub device sends a first message to the first device. The first message indicates to light the first device. Optionally, the hub device obtains an identity of the first user and a first brightness value corresponding to the identity of the first user. The hub device sends first indication information to the first device. The first indication information indicates the first brightness value. The first device receives the first indication information, and lights up with the first brightness value based on the first indication information. Optionally, the hub device obtains an identity of the first user and a first color corresponding to the identity of the first user. The hub device sends second indication information to the first device. The second indication information indicates the first color. The first device receives the second indication information, and lights up with the first color based on the second indication information.

In an implementation, the preset condition includes that the first user leaves a first area to which the first device belongs, a distance between the first user and the first device is greater than a preset distance, or the first user leaves a second area in a preset direction of the first device. That the hub device notifies the first device to adjust the light includes: The hub device sends a second message to the first device. The second message indicates to extinguish the first device.

In an implementation, the preset condition includes that a distance between the first user and the first device changes. That the hub device notifies the first device to adjust the light includes: The hub device sends a third message to the first device. The third message indicates the first device to reduce brightness. Alternatively, the hub device sends a fourth message to the first device. The fourth message indicates the first device to increase brightness.

According to the twelfth aspect, the R second electronic devices include a mobile device. The mobile device includes a second ultra-wide band module. Position measurement performed by the first electronic device on the first device includes: The first electronic device measures a position of the mobile device, and measures the position of the first device based on the position of the mobile device. In this implementation, if the first device does not include a UWB module, the first device can be calibrated by using a mobile device that includes a UWB module.

According to a thirteenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a routing device and a terminal device. R is a positive integer greater than or equal to 1. The hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device. The hub device sends a first message to the routing device. The first message indicates the routing device to adjust a beam based on a position of the routing device and a position of the user, so that a maximum gain point of an adjusted beam points to the user.

In this manner, the routing device is controlled, based on the position of the user, the position of the routing device, and a position of the terminal device, to automatically adjust the beam (for example, according to a beamforming algorithm), so that the terminal device can finally receive a narrow beam provided by a routing device 300a. In this way, the terminal device can obtain a signal that has a large gain and accurate coverage and that is provided by the routing device. The user does not need to perform a manual operation or carry any device. The routing device automatically performs adjustment based on the position of the user.

According to the thirteenth aspect, if the hub device learns that a distance between the user and the terminal device is less than a preset error range, the hub device sends the first message to the routing device. That the distance between the user and the terminal device is less than the preset error range indicates that the user and the terminal device are in a same position. To be specific, it may be considered that the user uses the terminal device. In other words, if it is determined that the user uses the terminal device, the beam of the routing device is adjusted.

According to the thirteenth aspect or any implementation of the thirteenth aspect, if the hub device learns that a position change of the user is greater than a first preset range, or the hub device learns that a position change of the terminal device is greater than a second preset range, the hub device obtains the position information of the R second electronic devices and the position information of the user in the whole-house coordinate system provided by the hub device.

In this manner, if it is determined that the user moves or the terminal device moves, the routing device is triggered to adjust the beam. In this way, the beam of the routing device is aligned with the user.

According to a fourteenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a routing device and N terminal devices. R and N each are a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device. A quantity of users whose distances from the N terminal devices fall within a preset error range in the M users is M1, where M1>0. The hub device sends a first message to the routing device. The first message indicates the routing device to adjust a beam based on a position of the routing device and positions of the M1 users, so that maximum beam gain points alternately point to the positions of the M1 users in a time division multiplexing manner.

In this manner, when there are the M users, positions of the M users and positions of the N terminal devices can be obtained. Then, M1 positions in which the positions of the N terminal devices are consistent with or have an error within the preset range with the positions of the M users may be obtained. In this case, the routing device may be controlled to automatically adjust the beam (for example, according to a beamforming algorithm). The routing device provides narrow pulse signals to the M1 positions in the time division multiplexing manner or the like. Because a time division slot is short, the user does not perceive the time division slot. Finally, all maximum beam gain points provided by the routing device point to terminal devices in the M1 positions in the time division multiplexing manner. All the terminal devices in the M1 positions can receive narrow beams provided by the routing device.

According to the fourteenth aspect, if the hub device learns that a position change of at least one of the M users is greater than a first preset range, or the hub device learns that a position change of at least one of the N terminal devices is greater than a second preset range, the hub device obtains the position information of the R second electronic devices and the position information of the M users in the whole-house coordinate system provided by the hub device.

In this manner, if it is determined that the at least one user moves or the at least one terminal device moves, the routing device is triggered to adjust the beam. In this way, the beam of the routing device is alternately aligned with each user.

According to a fifteenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1. The hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device. The hub device sends a first message to the first device. The first message indicates the first device to clean an area in a whole house other than a first area to which the user belongs.

In this manner, a cleaning device automatically avoids, during cleaning based on a position of the user, a room or an area in which the user is located, to avoid disturbing the user.

According to the fifteenth aspect, the hub device obtains, based on position measurement and conversion performed by the first electronic device on the mobile device and communication between the hub device and the first electronic device, position information of M pieces of furniture in the whole-house coordinate system provided by the hub device. If the hub device learns that a distance between the user and one of the M pieces of furniture is less than a preset first error range, and optionally, if the hub device further learns that an attitude of the user is a lying attitude or a sitting attitude, the hub device sends the first message to the first device.

In this manner, if it is determined that the user is resting, the room or the area in which the user is located is not cleaned.

According to the fifteenth aspect or any implementation of the fifteenth aspect, the hub device learns that a change of the user within preset duration is greater than or equal to a preset second error range. The hub device sends a third message to the first device. The third message indicates the first device to enter the first area to which the user belongs.

In this manner, if it is determined that the user starts an activity or the user leaves the room or the area, the cleaning device automatically enters the room or area for cleaning.

According to the fifteenth aspect or any implementation of the fifteenth aspect, the hub device obtains, based on position measurement and conversion performed by the first electronic device on the mobile device and communication between the hub device and the first electronic device, a coordinate range of each area in the whole house in the whole-house coordinate system provided by the hub device. The hub device sends coordinate range information of each area in the whole house to the first device. The first device performs cleaning based on the coordinate range information of each area in the whole house.

According to a sixteenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. The hub device obtains a first user whose distance from the first device is less than a preset first error range in the one or more users. The hub device obtains at least one of height information, breath frequency information, and heartbeat frequency information of the first user. The hub device sends a first message to the first device. The first message includes the at least one of the height information, the breath frequency information, and the heartbeat frequency information of the first user.

In this manner, the user does not need to manually input information, and the user does not need to carry any device neither. Human body information such as a height, a breath frequency, and a heartbeat frequency of the user is automatically obtained, to obtain body data of the user.

According to the sixteenth aspect or any implementation of the sixteenth aspect, if the hub device receives a first request message from the first device, the hub device obtains the first user whose distance from the first device is less than the preset first error range. The first request message indicates the hub device to obtain user data.

In this manner, a health management device triggers the hub device to obtain the information such as the height, the breath frequency, and the heartbeat frequency of the user.

According to a seventeenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. A distance between the first device and the ground is a first height. If the hub device learns that a distance between a first user in the one or more users and the first device is less than a preset first distance, and optionally, if the hub device further learns that the first user performs a preset action, the hub device sends a first message to the first device. The first message indicates the first device to descend to a second height above the ground. The second height is less than the first height.

In this manner, a drying device automatically descends based on a position of the user, without performing a manual operation by the user. This improves user experience.

According to the seventeenth aspect, the hub device obtains height information of the first user. The hub device sends indication information to the first device. The indication information indicates a height of the first user. The height of the first user is for obtaining the second height.

In this manner, a descent height of the drying device is determined based on a height of the user.

According to the seventeenth aspect or any implementation of the seventeenth aspect, if the hub device learns that duration within which the distance between the first user and the first device is less than the preset first distance is greater than a preset value, the hub device sends the first message to the first device.

In this manner, if it is determined that the user stays next to the drying device for specific duration, the drying device descends. This avoids a misoperation.

According to the seventeenth aspect or any implementation of the seventeenth aspect, the hub device learns that the distance between the first user and the first device is greater than or equal to the preset first distance, and sends a second message to the first device. The second message indicates the first device to ascend to the first height above the ground.

In this manner, the drying device automatically ascends based on the position of the user, without performing a manual operation by the user. This improves user experience.

According to an eighteenth aspect, this application provides a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. If a preset condition is met between a position of the first device and a position of a first user in the one or more users, the hub device notifies the first device to adjust light.

In this manner, on/off, brightness, a color, and the like of a lighting device are automatically adjusted based on a relative position between the user and the lighting device. This improves user experience.

In an implementation, the preset condition includes that the first user enters a first area to which the first device belongs, a distance between the first user and the first device is less than or equal to a preset distance, or the first user enters a second area in a preset direction of the first device. That the hub device notifies the first device to adjust the light includes: The hub device sends a first message to the first device. The first message indicates to light the first device. Optionally, the hub device obtains an identity of the first user and a first brightness value corresponding to the identity of the first user. The hub device sends first indication information to the first device. The first indication information indicates the first brightness value. The first device receives the first indication information, and lights up with the first brightness value based on the first indication information. Optionally, the hub device obtains an identity of the first user and a first color corresponding to the identity of the first user. The hub device sends second indication information to the first device. The second indication information indicates the first color. The first device receives the second indication information, and lights up with the first color based on the second indication information.

In an implementation, the preset condition includes that the first user leaves a first area to which the first device belongs, a distance between the first user and the first device is greater than a preset distance, or the first user leaves a second area in a preset direction of the first device. That the hub device notifies the first device to adjust the light includes: The hub device sends a second message to the first device. The second message indicates to extinguish the first device.

In an implementation, the preset condition includes that a distance between the first user and the first device changes. That the hub device notifies the first device to adjust the light includes: The hub device sends a third message to the first device. The third message indicates the first device to reduce brightness. Alternatively, the hub device sends a fourth message to the first device. The fourth message indicates the first device to increase brightness.

According to a nineteenth aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a routing device and a terminal device. R is a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device. The hub device sends a first message to the routing device. The first message indicates the routing device to adjust a beam based on a position of the routing device and a position of the user, so that a maximum gain point of an adjusted beam points to the user.

In this manner, the routing device is controlled, based on the position of the user, the position of the routing device, and a position of the terminal device, to automatically adjust the beam (for example, according to a beamforming algorithm), so that the terminal device can finally receive a narrow beam provided by a routing device 300a. In this way, the terminal device can obtain a signal that has a large gain and accurate coverage and that is provided by the routing device. The user does not need to perform a manual operation or carry any device. The routing device automatically performs adjustment based on the position of the user.

According to the nineteenth aspect, if the hub device learns that a distance between the user and the terminal device is less than a preset error range, the hub device sends the first message to the routing device. That the distance between the user and the terminal device is less than the preset error range indicates that the user and the terminal device are in a same position. To be specific, it may be considered that the user uses the terminal device. In other words, if it is determined that the user uses the terminal device, the beam of the routing device is adjusted.

According to the nineteenth aspect or any implementation of the nineteenth aspect, if the hub device learns that a position change of the user is greater than a first preset range, or the hub device learns that a position change of the terminal device is greater than a second preset range, the hub device obtains the position information of the R second electronic devices and the position information of the user in the whole-house coordinate system provided by the hub device.

In this manner, if it is determined that the user moves or the terminal device moves, the routing device is triggered to adjust the beam. In this way, the beam of the routing device is aligned with the user.

According to a twentieth aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a routing device and N terminal devices. R and N each are a positive integer greater than or equal to 1.

The hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device. A quantity of users whose distances from the N terminal devices fall within a preset error range in the M users is M1, where M1>0. The hub device sends a first message to the routing device. The first message indicates the routing device to adjust a beam based on a position of the routing device and positions of the M1 users, so that maximum beam gain points alternately point to the positions of the M1 users in a time division multiplexing manner.

In this manner, when there are the M users, positions of the M users and positions of the N terminal devices can be obtained. Then, M1 positions in which the positions of the N terminal devices are consistent with or have an error within the preset range with the positions of the M users may be obtained. In this case, the routing device may be controlled to automatically adjust the beam (for example, according to a beamforming algorithm). The routing device provides narrow pulse signals to the M1 positions in the time division multiplexing manner or the like. Because a time division slot is short, the user does not perceive the time division slot. Finally, all maximum beam gain points provided by the routing device point to terminal devices in the M1 positions in the time division multiplexing manner. All the terminal devices in the M1 positions can receive narrow beams provided by the routing device.

According to the twentieth aspect, if the hub device learns that a position change of at least one of the M users is greater than a first preset range, or the hub device learns that a position change of at least one of the N terminal devices is greater than a second preset range, the hub device obtains the position information of the R second electronic devices and the position information of the M users in the whole-house coordinate system provided by the hub device.

In this manner, if it is determined that the at least one user moves or the at least one terminal device moves, the routing device is triggered to adjust the beam. In this way, the beam of the routing device is alternately aligned with each user.

According to a twenty-first aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1. The hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device. The hub device sends a first message to the first device. The first message indicates the first device to clean an area in a whole house other than a first area to which the user belongs.

In this manner, a cleaning device automatically avoids, during cleaning based on a position of the user, a room or an area in which the user is located, to avoid disturbing the user.

According to the twenty-first aspect, the hub device obtains, based on position measurement and conversion performed by the first electronic device on the mobile device and communication between the hub device and the first electronic device, position information of M pieces of furniture in the whole-house coordinate system provided by the hub device. If the hub device learns that a distance between the user and one of the M pieces of furniture is less than a preset first error range, and optionally, if the hub device further learns that an attitude of the user is a lying attitude or a sitting attitude, the hub device sends the first message to the first device.

In this manner, if it is determined that the user is resting, the room or the area in which the user is located is not cleaned.

According to the twenty-first aspect or any implementation of the twenty-first aspect, the hub device learns that a change of the user within preset duration is greater than or equal to a preset second error range. The hub device sends a third message to the first device. The third message indicates the first device to enter the first area to which the user belongs.

In this manner, if it is determined that the user starts an activity or the user leaves the room or the area, the cleaning device automatically enters the room or area for cleaning.

According to the twenty-first aspect or any implementation of the twenty-first aspect, the hub device obtains, based on position measurement and conversion performed by the first electronic device on the mobile device and communication between the hub device and the first electronic device, a coordinate range of each area in the whole house in the whole-house coordinate system provided by the hub device. The hub device sends coordinate range information of each area in the whole house to the first device. The first device performs cleaning based on the coordinate range information of each area in the whole house.

According to a twenty-second aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. The hub device obtains a first user whose distance from the first device is less than a preset first error range in the one or more users. The hub device obtains at least one of height information, breath frequency information, and heartbeat frequency information of the first user. The hub device sends a first message to the first device. The first message includes the at least one of the height information, the breath frequency information, and the heartbeat frequency information of the first user.

In this manner, the user does not need to manually input information, and the user does not need to carry any device neither. Human body information such as a height, a breath frequency, and a heartbeat frequency of the user is automatically obtained, to obtain body data of the user.

According to the twenty-second aspect or any implementation of the twenty-second aspect, if the hub device receives a first request message from the first device, the hub device obtains the first user whose distance from the first device is less than the preset first error range. The first request message indicates the hub device to obtain user data.

In this manner, a health management device triggers the hub device to obtain the information such as the height, the breath frequency, and the heartbeat frequency of the user.

According to a twenty-third aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. A distance between the first device and the ground is a first height. If the hub device learns that a distance between a first user in the one or more users and the first device is less than a preset first distance, and optionally, if the hub device further learns that the first user performs a preset action, the hub device sends a first message to the first device. The first message indicates the first device to descend to a second height above the ground. The second height is less than the first height.

In this manner, a drying device automatically descends based on a position of the user, without performing a manual operation by the user. This improves user experience.

According to the twenty-third aspect, the hub device obtains height information of the first user. The hub device sends indication information to the first device. The indication information indicates a height of the first user. The height of the first user is for obtaining the second height.

In this manner, a descent height of the drying device is determined based on a height of the user.

According to the twenty-third aspect or any implementation of the twenty-third aspect, if the hub device learns that duration within which the distance between the first user and the first device is less than the preset first distance is greater than a preset value, the hub device sends the first message to the first device.

In this manner, if it is determined that the user stays next to the drying device for specific duration, the drying device descends. This avoids a misoperation.

According to the twenty-third aspect or any implementation of the twenty-third aspect, the hub device learns that the distance between the first user and the first device is greater than or equal to the preset first distance, and sends a second message to the first device. The second message indicates the first device to ascend to the first height above the ground.

In this manner, the drying device automatically ascends based on the position of the user, without performing a manual operation by the user. This improves user experience.

According to a twenty-fourth aspect, this application provides a human sensing-based automatic control method, applied to a hub device. Any two of the hub device, a first electronic device, and any one of R second electronic devices communicate in a wired communication or wireless communication manner. The first electronic device includes a first ultra-wide band module and a millimeter-wave radar module. The R second electronic devices include a first device and a mobile device. The mobile device includes a second ultra-wide band module. R is a positive integer greater than or equal to 1.

The hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device. If a preset condition is met between a position of the first device and a position of a first user in the one or more users, the hub device notifies the first device to adjust light.

In this manner, on/off, brightness, a color, and the like of a lighting device are automatically adjusted based on a relative position between the user and the lighting device. This improves user experience.

In an implementation, the preset condition includes that the first user enters a first area to which the first device belongs, a distance between the first user and the first device is less than or equal to a preset distance, or the first user enters a second area in a preset direction of the first device. That the hub device notifies the first device to adjust the light includes: The hub device sends a first message to the first device. The first message indicates to light the first device. Optionally, the hub device obtains an identity of the first user and a first brightness value corresponding to the identity of the first user. The hub device sends first indication information to the first device. The first indication information indicates the first brightness value. The first device receives the first indication information, and lights up with the first brightness value based on the first indication information. Optionally, the hub device obtains an identity of the first user and a first color corresponding to the identity of the first user. The hub device sends second indication information to the first device. The second indication information indicates the first color. The first device receives the second indication information, and lights up with the first color based on the second indication information.

In an implementation, the preset condition includes that the first user leaves a first area to which the first device belongs, a distance between the first user and the first device is greater than a preset distance, or the first user leaves a second area in a preset direction of the first device. That the hub device notifies the first device to adjust the light includes: The hub device sends a second message to the first device. The second message indicates to extinguish the first device.

In an implementation, the preset condition includes that a distance between the first user and the first device changes. That the hub device notifies the first device to adjust the light includes: The hub device sends a third message to the first device. The third message indicates the first device to reduce brightness. Alternatively, the hub device sends a fourth message to the first device. The fourth message indicates the first device to increase brightness.

According to a twenty-fifth aspect, this application provides a computer-readable storage medium. The computer-readable storage medium includes a computer program. When the computer program is run on an electronic device, the electronic device is enabled to perform the method according to the nineteenth aspect or any implementation of the nineteenth aspect, perform the method according to the twentieth aspect or any implementation of the twentieth aspect, perform the method according to the twenty-first aspect or any implementation of the twenty-first aspect, perform the method according to the twenty-second aspect or any implementation of the twenty-second aspect, perform the method according to the twenty-third aspect or any implementation of the twenty-third aspect, or perform the method according to the twenty-fourth aspect or any implementation of the twenty-fourth aspect.

According to a twenty-sixth aspect, this application provides a computer program product. When the computer program product runs on the electronic device, the electronic device is enabled to perform the method according to the nineteenth aspect or any implementation of the nineteenth aspect, perform the method according to the twentieth aspect or any implementation of the twentieth aspect, perform the method according to the twenty-first aspect or any implementation of the twenty-first aspect, perform the method according to the twenty-second aspect or any implementation of the twenty-second aspect, perform the method according to the twenty-third aspect or any implementation of the twenty-third aspect, or perform the method according to the twenty-fourth aspect or any implementation of the twenty-fourth aspect.

The twenty-fifth aspect and any implementation of the twenty-fifth aspect separately correspond to the nineteenth aspect and any implementation of the nineteenth aspect, the twentieth aspect and any implementation of the twentieth aspect, the twenty-first aspect and any implementation of the twenty-first aspect, the twenty-second aspect and any implementation of the twenty-second aspect, the twenty-third aspect and any implementation of the twenty-third aspect, or the twenty-fourth aspect and any implementation of the twenty-fourth aspect For technical effects corresponding to the twenty-fifth aspect and the any implementation of the twenty-fifth aspect, refer to the technical effects corresponding to the foregoing corresponding implementations. Details are not described herein again.

The twenty-sixth aspect and any implementation of the twenty-sixth aspect separately correspond to the nineteenth aspect and any implementation of the nineteenth aspect, the twentieth aspect and any implementation of the twentieth aspect, the twenty-first aspect and any implementation of the twenty-first aspect, the twenty-second aspect and any implementation of the twenty-second aspect, the twenty-third aspect and any implementation of the twenty-third aspect, or the twenty-fourth aspect and any implementation of the twenty-fourth aspect For technical effects corresponding to the twenty-sixth aspect and the any implementation of the twenty-sixth aspect, refer to the technical effects corresponding to the foregoing corresponding implementations. Details are not described herein again.

**BRIEF DESCRIPTION OF DRAWINGS**

FIG. 1 is a schematic diagram of a scenario of a human sensing-based automatic control method according to an embodiment of this application;

FIG. 2 is a schematic diagram of a structure of a first electronic device in an automatic control method according to an embodiment of this application;

FIG. 3 is a schematic diagram of a structure of a hub device in an automatic control method according to an embodiment of this application;

FIG. 4 is a schematic diagram of a structure of a second electronic device in an automatic control method according to an embodiment of this application;

FIG. 5A is a schematic diagram of a structure of an ultra-wide band (Ultra-Wide Band, UWB) module in a first electronic device according to this application;

FIG. 5B is a schematic diagram of a structure of a millimeter-wave radar module in a first electronic device according to an embodiment of this application;

FIG. 6 is a schematic diagram of a structure of a UWB module in a second electronic device according to an embodiment of this application;

FIG. 7(a) to FIG. 7(e) are a schematic diagram of several antenna distributions of a UWB module in a first electronic device according to an embodiment of this application;

FIG. 8 is a schematic diagram of several antenna distributions of a millimeter-wave radar module in a first electronic device according to an embodiment of this application;

FIG. 9 is a schematic diagram of several manners of establishing a first coordinate system when a UWB module of a first electronic device includes three antennas according to an embodiment of this application;

FIG. 10 is a schematic diagram of a manner of establishing a second coordinate system according to an embodiment of this application;

FIG. 11 is a schematic diagram of a manner of establishing a third coordinate system according to an embodiment of this application;

FIG. 12(a) to FIG. 12(f) are a schematic diagram of a principle of calculating coordinates of a second electronic device in a first coordinate system according to an embodiment of this application;

FIG. 13(a) to FIG. 13(c) are a schematic diagram of several manners of marking a second electronic device according to an embodiment of this application;

FIG. 14 is a schematic diagram of a manner of marking a spatial area according to an embodiment of this application;

FIG. 15 is a schematic diagram of a pitch $\varphi_e^b$, a yaw $\psi_e^b$, and a roll $\theta_e^b$ of a second coordinate system relative to a first coordinate system according to an embodiment of this application;

FIG. 16 is a schematic diagram of a pitch $\varphi_e^t$, a yaw $\psi_e^t$, and a roll $\theta_e^t$ of a third coordinate system relative to a first coordinate system according to an embodiment of this application;

FIG. 17 is a schematic diagram of a manner of establishing a fourth coordinate system according to an embodiment of this application;

FIG. 18 is a schematic diagram of a principle of determining a distance and a radial speed of a reflection point by a millimeter-wave radar according to an embodiment of this application;

FIG. 19(a) to FIG. 19(c)-2 are a schematic diagram of a principle of determining a signal coming direction of a reflected signal from a reflection point by a millimeter-wave radar according to an embodiment of this application;

FIG. 20 is a schematic diagram of a principle of determining coordinates of a user by a first electronic device in a fourth coordinate system according to an embodiment of this application;

FIG. 21 is a schematic diagram of a method for determining coordinates of a user by a first electronic device in a fourth coordinate system according to an embodiment of this application;

FIG. 22 is a schematic diagram of a method for obtaining a breath frequency and a heartbeat frequency of a user by a millimeter-wave radar according to an embodiment of this application;

FIG. 23 is a schematic diagram of a method for determining a human body attitude of a user by a millimeter-wave radar according to an embodiment of this application;

FIG. 24 is a schematic diagram of conversion between a first coordinate system and a fourth coordinate system on a first electronic device according to an embodiment of this application;

FIG. 25 is a schematic diagram of an example of establishing a whole-house coordinate system (a fifth coordinate system), a first coordinate system, and a sixth coordinate system (a geographical coordinate system) according to an embodiment of this application;

FIG. 26 is a schematic diagram of a flowchart and a principle of a human sensing-based automatic control method in a whole-house scenario according to an embodiment of this application;

FIG. 27(a) to FIG. 27(c) are a schematic flowchart of correcting an installation error of a first electronic device according to an embodiment of this application;

FIG. 28 is a schematic diagram of a principle of an ICP algorithm according to an embodiment of this application;

FIG. 29 is a schematic diagram of area division and a user interface according to an embodiment of this application;

FIG. 30 is a schematic diagram of a scenario of a human sensing-based method for automatically adjusting a beam by a routing device in a whole-house scenario according to an embodiment of this application;

FIG. 31 is a schematic flowchart of a human sensing-based method for automatically adjusting a beam by a routing device in a whole-house scenario according to an embodiment of this application;

FIG. 32 is another schematic flowchart of a human sensing-based method for automatically adjusting a beam by a routing device in a whole-house scenario according to an embodiment of this application;

FIG. 33(a) and FIG. 33(b) are a schematic diagram of a scenario of a human sensing-based method for automatically adjusting a to-be-cleaned area by a cleaning device in a whole-house scenario according to an embodiment of this application;

FIG. 34A and FIG. 34B are a schematic flowchart of a human sensing-based method for automatically adjusting a to-be-cleaned area by a cleaning device in a whole-house scenario according to an embodiment of this application;

FIG. 35A and FIG. 35B are another schematic flowchart of a human sensing-based method for automatically adjusting a to-be-cleaned area by a cleaning device in a whole-house scenario according to an embodiment of this application;

FIG. 36 is a schematic diagram of a specified area in a human sensing-based method for automatically adjusting a to-be-cleaned area by a cleaning device in a whole-house scenario according to an embodiment of this application;

FIG. 37 is a schematic diagram of a scenario of a human sensing-based method for automatically obtaining human body information by a health management device in a whole-house scenario according to an embodiment of this application;

FIG. 38A is a schematic flowchart of a human sensing-based method for automatically obtaining human body information by a health management device in a whole-house scenario according to an embodiment of this application;

FIG. 38B is another schematic flowchart of a human sensing-based method for automatically obtaining human body information by a health management device in a whole-house scenario according to an embodiment of this application;

FIG. 39 is a schematic diagram of a scenario of a human sensing-based automatic ascent/descent method for a drying device in a whole-house scenario according to an embodiment of this application;

FIG. 40 is a schematic flowchart of a human sensing-based automatic ascent/descent method for a drying device in a whole-house scenario according to an embodiment of this application;

FIG. 41A is a schematic diagram of a scenario of a human sensing-based method for automatically adjusting light by a lighting device in a whole-house scenario according to an embodiment of this application;

FIG. 41B is a schematic diagram of an illumination area in a human sensing-based method for automatically adjusting light by a lighting device in a whole-house scenario according to an embodiment of this application;

FIG. 42 is a schematic flowchart of a human sensing-based method for automatically adjusting light by a lighting device in a whole-house scenario according to an embodiment of this application;

FIG. 43 is a schematic diagram of a structure of a first electronic device according to an embodiment of this application; and

FIG. 44 is a schematic diagram of a structure of a second electronic device according to an embodiment of this application.

## DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "a", "the", "the foregoing", "this", and "the one" of singular forms used in this specification and the appended claims of this application are also intended to include forms such as "one or more", unless otherwise specified in the context clearly. It should be further understood that, in the following embodiments of this application, "at least one" and "one or more" mean one or more than two (including two). The term "and/or" is for describing an association relationship between associated objects and indicates that three relationships may exist. For example, A and/or B may indicate the following cases: Only A exists, both A and B exist, and only B exists, where A and B each may be singular or plural. The character "/" generally indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear in different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but are not limited to", unless otherwise specifically emphasized in other ways. The term "connection" includes a direct connection and an indirect connection, unless otherwise stated. "First" and "second" are merely intended for a purpose of description, and shall not be understood as an indication or implication of relative importance or implicit indication of a quantity of indicated technical features.

In embodiments of this application, the word "example", "for example", or the like is for representing giving an example, an illustration, or a description. Any embodiment or design scheme described as an "example" or "for example" in embodiments of this application should not be explained as being more preferred or having more advantages than another embodiment or design scheme. Exactly, use of the term "example", "for example", or the like is intended to present a related concept in a specific manner.

1. Description of overall scenario

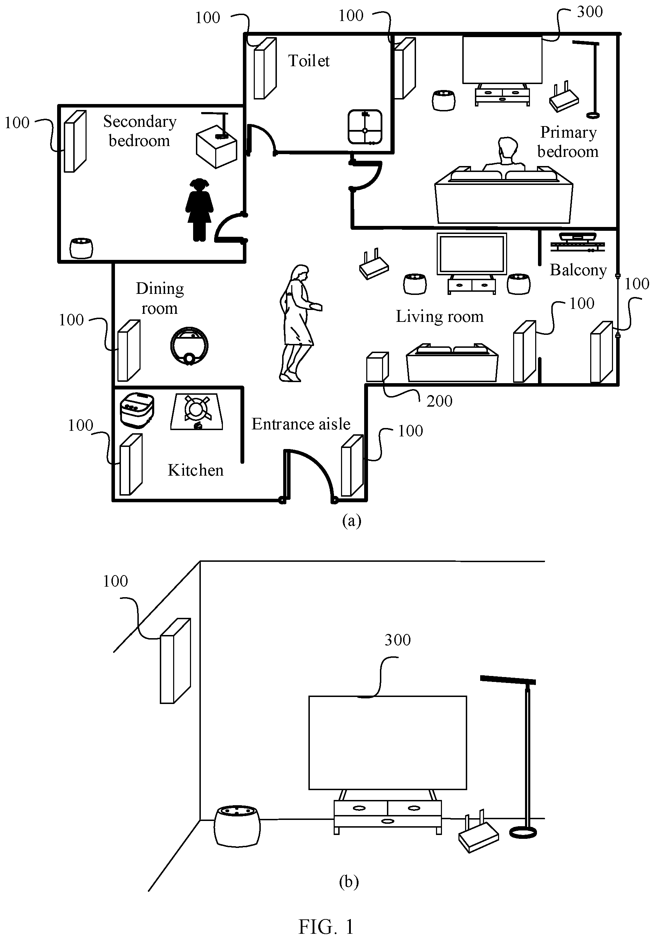

For example, FIG. 1 is a schematic diagram of a scenario of a human sensing-based automatic control method according to an embodiment of this application. As shown in (a) in FIG. 1, a whole house includes an entrance aisle, a kitchen, a dining room, a living room, a balcony, a primary bedroom, a secondary bedroom, a toilet, and the like. At least one first electronic device is disposed in the whole house. For example, each room or area includes at least one first electronic device. A second electronic device (for example, an IoT device) is further disposed in the whole house. Specifically, an electric rice cooker or an electric pressure cooker, a gas device, and the like are disposed in the kitchen. A speaker (for example, a smart speaker), a television (for example, a smart television, also referred to as a smart screen, a large screen, or the like), a routing device, and the like are disposed in the living room. A clothes hanger (for example, a smart clothes hanger) is disposed on the balcony. A floor-sweeping robot and the like are disposed in the dining room. A television (for example, a smart television), a speaker (for example, a smart speaker), a floor lamp (for example, a smart floor lamp), a routing device, and the like are disposed in the primary bedroom. A desk lamp (for example, a smart desk lamp), a speaker (for example, a smart speaker), and the like are disposed in the secondary bedroom. A body fat scale and the like are disposed in the toilet.

The human sensing-based automatic control method provided in embodiments of this application includes a human sensing-based automatic control method in a whole-house scenario, and further includes a human sensing-based automatic control method in a single room or area. The human sensing-based automatic control method provided in embodiments of this application is applied to a communication system. Correspondingly, the communication system includes a human sensing-based communication system in the whole-house scenario (which may also be referred to as a whole-house intelligent system), and a human sensing-based communication system in the single room or area (which may also be referred to as a room intelligent system or an area intelligent system). The communication system includes at least one first electronic device 100 and at least one second electronic device 300. In addition, the communication system may further include a hub device 200.

The first electronic device 100 is configured to locate the second electronic device 300 and/or a user. The first electronic device 100 may include a sensor. In an example, the first electronic device 100 includes an ultra-wide band (Ultra-Wide Band, UWB) module and a millimeter-wave radar module. The UWB module is configured to locate the second electronic device 300, and the millimeter-wave radar module is configured to locate the user.

A UWB technology is a radio communication technology that does not use a carrier modulated signal, but uses an energy pulse sequence below a nanosecond level or a microsecond level, and extends a pulse to a frequency range through orthogonal frequency division modulation or direct sequencing. UWB has features such as a wide spectrum, high precision, low power consumption, a strong anti-multipath capability, high security, and low system complexity, is widely used in short-range and high-speed wireless communication, and especially has a great advantage in the field of indoor locating. Generally, locating accuracy of a UWB system may reach a centimeter level. The UWB system includes a UWB base station and a UWB tag. The UWB base station determines a position (coordinates) of the UWB tag by detecting a distance between the UWB tag and the UWB base station and a signal coming direction of the UWB tag, that is, locates the UWB tag. Locating by using UWB is performed based on a UWB coordinate system (also referred to as a first coordinate system).

In an example, the second electronic device includes a UWB module. The UWB module of the first electronic device 100 implements a function of the UWB base station. The UWB module of the second electronic device implements a function of the UWB tag. The UWB module of the second electronic device is located by using the UWB module of the first electronic device 100, so that the first electronic device 100 can locate the second electronic device.

In another example, some second electronic devices include no UWB module. Usually, the second electronic device including the UWB module is a mobile device (for example, a smartphone or a remote control). Consequently, the second electronic device including the UWB module may be used to mark the second electronic device including no UWB module, so that the first electronic device 100 locates the second electronic device including no UWB module. A specific marking method is described in detail later.

The millimeter-wave radar operates in a millimeter-wave (millimeter-wave) band, is mainly configured to detect a moving object, and has an operating frequency band distributed in a 30 to 300 GHz frequency domain (a wavelength is 1 to 10 mm). The millimeter-wave radar continuously transmits (radiates) a specific form of radio magnetic signal when operating, receives an electromagnetic echo signal reflected by an object, and determines spatial information of the object by comparing a difference between the transmitted signal and the received signal. The millimeter-wave radar has features of a small size and high spatial resolution, is deployed indoors, and may be configured to detect information about a position, a physiological feature (for example, a breath frequency or a heartbeat frequency), an identity category (for example, an adult or a child), and a human body attitude (for example, standing, sitting, or lying) of a human body (the user) in a whole house. Consequently, by using the integrated millimeter-wave radar module, the first electronic device 100 can locate the user, and even detect the information such as the physiological feature, the identity category, and the human body attitude of the user. A specific method is described in detail later.

Locating by using the millimeter-wave radar is implemented based on a millimeter-wave radar coordinate system (also referred to as a second coordinate system). Coordinates respectively located in the second coordinate system and the first coordinate system need to be converted or unified to a same coordinate system. A specific coordinate system conversion method is described in detail later.

It should be noted that, in this embodiment of this application, an example in which the first electronic device 100 includes the UWB module and the millimeter-wave radar is used for description. In some other embodiments, the first electronic device 100 may include only the UWB module or the millimeter-wave radar. The first electronic device 100 including the UWB module is configured to locate the second electronic device 300. The first electronic device 100 including the millimeter-wave radar is configured to locate the user. The two types of first electronic devices 100 cooperate with each other to implement the human sensing-based automatic control method provided in embodiments of this application. This is not limited in embodiments of this application.

The first electronic device 100 may obtain a position of the second electronic device 300 (that is, locate the second electronic device), and may further obtain a position of a user in a room or an area (that is, locate the user). The whole house includes at least one room or area. If only one first electronic device is disposed in the whole house, signal attenuation or the like may be caused due to a reason, for example, wall blockage. In this case, the first electronic device cannot cover all areas in the whole house. Therefore, a plurality of first electronic devices are generally disposed in the whole house. For example, one first electronic device is disposed in each piece of relatively independent space (for example, the living room, a bedroom, a study, the balcony, the toilet, the kitchen, or an aisle), and is configured to locate a second electronic device and a user in the independent space. In this way, a second electronic device or a user at any position in the whole house can be detected by the first electronic device.

For example, as shown in (a) in FIG. 1, a signal receiving and sending range of the first electronic device disposed in the entrance aisle may cover the entrance aisle. A signal receiving and sending range of the first electronic device disposed in the kitchen may cover the kitchen. A signal sending and receiving range of the first electronic device disposed in the living room may cover the living room. A signal sending and receiving range of the first electronic device disposed in the dining room may cover the dining room. A signal sending and receiving range of the first electronic device disposed on the balcony may cover the balcony. A signal receiving and sending range of a first electronic device disposed in the primary bedroom may cover the primary bedroom. A signal sending and receiving range of the first electronic device disposed in the toilet may cover the toilet. A signal receiving and sending range of a first electronic device disposed in the secondary bedroom may cover the secondary bedroom. In an example, as shown in (b) in FIG. 1, the first electronic device may be disposed on a wall of the room or the area. In an example, the first electronic device may be disposed on a ceiling or the like of the room or the area. In this way, blockage of a signal by an object, for example, furniture in the whole house, can be reduced, and reduction of detection accuracy of the first electronic device due to blockage of the signal can be avoided. In an example, the first electronic device may be disposed on the ground or the like of the room or the area. Optionally, the first electronic device 100 may exist independently, or may be integrated with the second electronic device. This is not limited in this application. For example, the first electronic device 100 and a smart air conditioner are integrated into one device.

Optionally, some rooms or areas may not need to be equipped with a first electronic device. In other words, not all rooms or areas each are equipped with at least one first electronic device. For example, the dining room may be equipped with no first electronic device. One first electronic device may be shared in the entrance aisle and the dining room, or one first electronic device may be shared in the dining room and the living room.

It should be noted that, although the smart television is only shown as the second electronic device 300 in (a) in FIG. 1, a person skilled in the art should know that the second electronic device 300 includes but is not limited to the smart television, a smart speaker, a smart lamp (for example, a ceiling lamp, a smart desk lamp, or an aromatherapy lamp), a floor-sweeping robot, a body fat scale, a smart clothes hanger, a smart electric rice cooker, an air purifier, a humidifier, a desktop computer, a routing device, a smart socket, a water dispenser, a smart refrigerator, a smart air conditioner, a smart switch, a smart lock, and the like. It should be noted that, alternatively, the second electronic device 300 may not be a smart home device, but a portable device, for example, a personal computer (person computer, PC), a tablet computer, a mobile phone, or a smart remote control. A specific form of the second electronic device 300 is not limited in embodiments of this application.

The second electronic device 300 and the first electronic device 100 may be connected to the hub device 200 in a wired (for example, power line communication (power line communication, PLC)) manner and/or a wireless (for example, wireless fidelity (wireless fidelity, Wi-Fi) or Bluetooth) manner. It may be understood that the second electronic device 300 and the first electronic device 100 may be connected to the hub device 200 in a same manner or different manners. For example, both the second electronic device 300 and the first electronic device 100 are connected to the hub device 200 in the wireless manner. Alternatively, the second electronic device 300 is connected to the hub device 200 in the wireless manner, and the first electronic device 100 is connected to the hub device 200 in the wired manner. Alternatively, devices such as the smart speaker, the smart television, the body fat scale, and the floor-sweeping robot in the second electronic device 300 are connected to the hub device 200 in the wireless (for example, Wi-Fi) manner. Devices such as the smart desk lamp, the smart clothes hanger, and the smart lock in the second electronic device 300 are connected to the hub device 200 in the wired (for example, a PLC) manner. Preferably, the first electronic device 100 communicates with the second electronic device 300 in the wireless manner.

In an example, the first electronic device 100 may upload, to the hub device 200 in the wired or wireless manner, at least one of position information of the second electronic device 300 and the information such as the position, the physiological feature, the identity category, and the human body attitude of the user, that are obtained through detection.

The hub device 200, also referred to as a hub, a central control system, a host, or the like, is configured to receive the information sent by the first electronic device 100. Optionally, the hub device 200 is further configured to: construct a whole-house map, establish a whole-house coordinate system, and unify, to the whole-house coordinate system for unified measurement, position information obtained by all the first electronic devices 100. In this way, position information of the second electronic device 300 or the user obtained by all the first electronic devices 100 through detection can be unified to the whole-house coordinate system, and a specific position of the second electronic device 300 or the user in the whole house can be determined. The hub device 200 further notifies or controls the second electronic device 300 based on the received information (including but not limited to the position information). Correspondingly, conversion between coordinate systems is also mentioned, and is described in detail later.

In an implementation, the hub device 200 receives the information that is sent by the first electronic device 100 and that includes the position information of the second electronic device 300 and at least one of the position, the physiological feature, the identity category, the human body attitude, and the like of the user. The hub device 200 notifies or controls, based on the position information of the second electronic device 300 and at least one of the position, the physiological feature, the identity category, the human body attitude, and the like of the user, the second electronic device 300 to execute a preset instruction. For example, when the user wakes up a smart speaker by a voice, the hub device 200 notifies or controls, based on positions of a plurality of smart speakers in the whole house, one or more smart speakers, that are closest to the user, to wake up. For example, when the user moves from one room to another room in the whole house, the hub device 200 controls a smart speaker in the room, from which the user leaves, to stop playing an audio, and controls a smart speaker in the room, that the user enters, to start playing (for example, continuing to play) the audio. For another example, the hub device 200 controls, based on distances between two smart speakers (the two smart speakers respectively play a left-channel audio and a right-channel audio of a same audio) and the user, playing volume of the smart speakers, so that volume of the left-channel audio received by the user is consistent with that of the right-channel audio received by the user. For another example, the user watches a video (for example, the video includes violent content) in a room by using a smart television, and it is detected that a child user enters the room, and the hub device 200 controls the smart television to stop playing the video. For another example, the hub device 200 notifies or controls, based on a position (for example, a distance or an orientation) of the user relative to a smart television, the smart television to start playing or stop playing a video.

Optionally, as shown in (a) in FIG. 1, at least one hub device 200 is disposed in the whole house. A first electronic device in each room or each area may send, to the hub device 200, all detected position information of a user and position information of one or more second electronic devices in the room or the area. The hub device 200 obtains detection data (including but not limited to the position information) of each room or each area in the whole house, so that when a preset condition is met, the hub device 200 can notify or control a corresponding second electronic device in a corresponding room or a corresponding area.

Optionally, a hub device (not shown in the figure) may be alternatively disposed in each room or each area in the whole house. The first electronic device in each room or each area may send, to the hub device in the room or the area, detected position information of a user and detected position information of one or more second electronic devices in the room or the area. The hub device in the current room or the current area is then sent to the hub device 200 in the whole house. The hub device 200 in the whole house obtains the detection data of each room or each area in the whole house, so that when a preset condition is met, a hub device 200 in a corresponding room or a corresponding area may be notified or controlled. The hub device in the corresponding room or the corresponding area then notifies or controls a corresponding second electronic device.

Optionally, the hub device in each room or each area and the hub device in the whole house may exist independently, or may be integrated with the first electronic device or the second electronic device into one device, or may be integrated with the first electronic device and the second electronic device into one device. This is not limited in this application.

Optionally, some rooms or areas may not need to be equipped with a hub device. In other words, not all rooms or areas each are equipped with at least one hub device. For example, the dining room may be equipped with no hub device. A hub device is shared in the dining room and the entrance aisle, or a hub device is shared in the dining room and the living room.

Optionally, the hub device 200 in the whole house may further assume a function of a hub device in a room or an area. For example, the hub device 200 in the whole house may further assume a function of a hub device in the living room. In an example, a hub device is disposed in each room or each area other than a room or an area (for example, the living room). When communicating with the second electronic device in each room or each area other than the room or the area (for example, the living room), the hub device 200 in the whole house still performs communication through the hub device in each room or each area. However, when communicating with the second electronic device in the room or the area (for example, the living room), the hub device 200 in the whole house no longer performs communication through the hub device in the room or the area (for example, the living room).

In an example, the communication system further includes a routing device (for example, a router). The routing device is configured to: connect to a local area network or an internet, and uses a specific protocol to select and set a path for sending a signal. For example, one or more routers are deployed in the whole house to constitute a local area network, or to access the local area network or the internet. The second electronic device 300 or the first electronic device 100 accesses the router, and performs data transmission with a device in the local area network or a device in the internet through a Wi-Fi channel established by the router. In an implementation, the hub device 200 may be integrated with the routing device into one device. For example, the hub device 200 and the routing device are integrated into a routing device, that is, the routing device has a function of the hub device 200. The routing device may be one or more routing devices in a parent-child routing device, or may be an independent routing device.

In an example, the communication system further includes a gateway (Gateway). The gateway is also referred to as an inter-network connector or a protocol converter. In an implementation, the gateway is configured to forward, to the routing device or the hub device 200, the information from the first electronic device 100. In another implementation, the function of the hub device 200 may be implemented by the gateway.

In an example, the communication system further includes a server (for example, a cloud server). The hub device 200, the routing device, or the gateway may send, to the server, the received information from the first electronic device 100. Further, the hub device 200, the routing device, or the gateway may further send, to the server, control information of the hub device 200 for the second electronic device 300. Further, the hub device 200, the routing device, or the gateway may further upload, to the server, various types of information generated in a running process of the second electronic device 300, to provide the various types of information for the user for viewing.

In an example, the communication system further includes one or more input devices (for example, the input device is a control panel). For example, a human-machine interaction interface of the communication system is displayed on the control panel. The user may view, on the man-machine interaction interface, information (for example, connection information of each device in the communication system) about the communication system, running information of the second electronic device 300, the control information of the hub device 200 for the second electronic device 300, and/or the like. The user may further input a control instruction on the man-machine interaction interface in a manner, for example, tapping a screen or a voice, to control a device in the communication system.

The foregoing content is merely some descriptions of the human sensing-based automatic control method provided in embodiments of this application. It should be noted that, in the examples or optional manners described above, any content may be freely combined, and combined content also falls within the scope of this application.

2. Description of a hardware structure of an electronic device

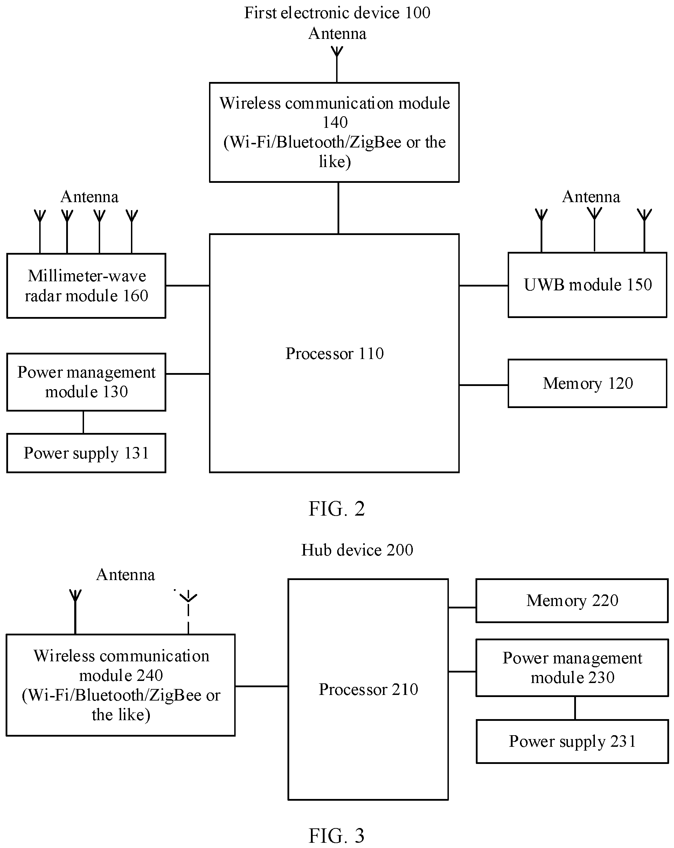

For example, FIG. 2 is a schematic diagram of a structure of a first electronic device 100.

As shown in FIG. 2, the first electronic device 100 may include a processor 110, a memory 120, a power management module 130, a power supply 131, a wireless communication module 140, a UWB module 150, a millimeter-wave radar module 160, and the like.

It may be understood that the structure shown in FIG. 2 constitutes no specific limitation on the first electronic device 100. In some other embodiments of this application, the first electronic device 100 may include more or fewer components than those shown in the figure, or combine some of the components, or split some of the components, or have different arrangements of the components. The components shown in the figure may be implemented by using hardware, software, or a combination of software and hardware.

The processor 110 may include one or more processing units. Different processing units may be independent components, or may be integrated into one or more processors. For example, the processor 110 is a central processing unit (central processing unit, CPU), or an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The memory 120 may be configured to store computer-executable program code. The executable program code includes instructions. For example, the memory 120 may further store data processed by the processor 110. In addition, the memory 120 may include a high-speed random access memory, and may further include a non-volatile memory, for example, at least one magnetic disk storage component, a flash memory component, or a universal flash storage (universal flash storage, UFS). The processor 110 runs the instructions stored in the memory 120 and/or instructions stored in a memory disposed in the processor, to perform various function applications of the first electronic device 100 and data processing.

The power management module 130 is configured to receive an input from the power supply 131. The power supply 131 may be a battery, or may be a mains supply. The power management module 130 receives power supplying from the battery and/or the mains supply, and supplies power to components of the first electronic device 100, such as the processor 110, the memory 120, the wireless communication module 140, the UWB module 150, and the millimeter-wave radar module 160.

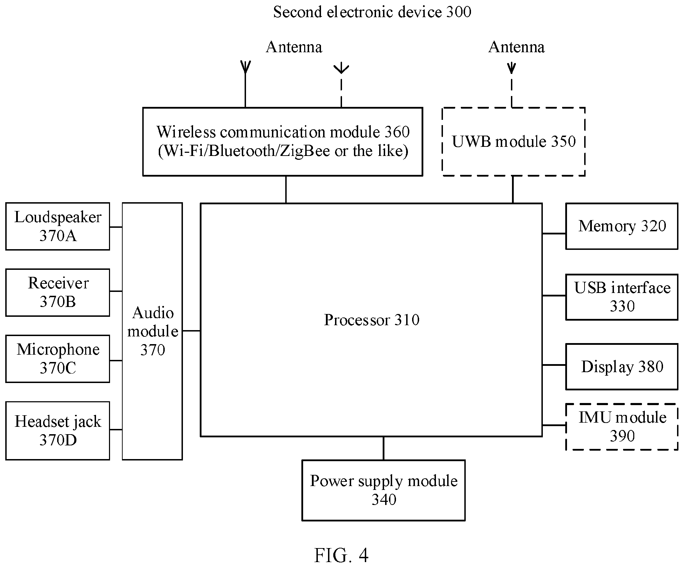

The wireless communication module 140 may provide a solution that is applied to the first electronic device 100 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 140 may be one or more components integrating at least one communication processing module. The wireless communication module 140 receives an electromagnetic wave through an antenna, performs frequency modulation and filtering processing on an electromagnetic wave signal, and sends a processed signal to the processor 110. The wireless communication module 140 may further receive a to-be-sent signal from the processor 110, perform frequency modulation and amplification on the to-be-sent signal, and convert a processed signal into an electromagnetic wave for radiation through the antenna. It should be noted that quantities of antennas of the wireless communication module 140, the UWB module 150, and the millimeter-wave radar module 160 in FIG. 4 are merely examples for description. It may be understood that the communication module 140, the UWB module 150, and the millimeter-wave radar module 160 each may include more or fewer antennas. This is not limited in embodiments of this application.

The UWB module 150 may provide a solution that is applied to the first electronic device 100 and includes wireless communication based on a UWB technology. For example, the UWB module 150 is configured to implement a function of the foregoing UWB base station. In an embodiment of this application, the UWB base station may locate a UWB tag. Specifically, duration within which a UWB signal flies in the air may be calculated with reference to some locating algorithms by detecting the UWB signal. A distance between the UWB tag and the UWB base station is obtained by multiplying the duration by a rate (for example, a light speed) at which the UWB signal is transmitted in the air. In an embodiment of this application, the UWB base station may further determine a direction of the UWB tag relative to the UWB base station (namely, a signal coming direction of the UWB tag) based on a phase difference obtained when the UWB signal sent by the UWB tag reaches different antennas of the UWB base station. The signal coming direction includes a horizontal coming direction and a vertical coming direction.

For example, FIG. 3 is a schematic diagram of a structure of a hub device 200.

As shown in FIG. 3, the hub device 200 may include a processor 210, a memory 220, a power management module 230, a power supply 231, a wireless communication module 240, and the like.

It may be understood that the structure shown in FIG. 3 constitutes no specific limitation on the hub device 200. In some other embodiments of this application, the hub device 200 may include more or fewer components than those shown in the figure, or combine some of the components, or split some of the components, or have different arrangements of the components. The components shown in the figure may be implemented by using hardware, software, or a combination of software and hardware.

The processor 210 may include one or more processing units. Different processing units may be independent components, or may be integrated into one or more processors. For example, the processor 210 is a central processing unit (central processing unit, CPU), or an application-specific integrated circuit (application-specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

The memory 220 may be configured to store computer-executable program code. The executable program code includes instructions. For example, the memory 220 may further store data processed by the processor 210. In addition, the memory 220 may include a high-speed random access memory, and may further include a non-volatile memory, for example, at least one magnetic disk storage component, a flash memory component, or a universal flash storage (universal flash storage, UFS). The processor 210 runs the instructions stored in the memory 220 and/or instructions stored in a memory disposed in the processor, to perform various function applications of the hub device 200 and data processing.

The power management module 230 is configured to receive an input from the power supply 231. The power supply 231 may be a battery, or may be a mains supply. The power management module 230 receives power supplying from the battery and/or the mains supply, and supplies power to components of the hub device 200, such as the processor 210, the memory 220, and the wireless communication module 240.

The wireless communication module 240 may provide a solution that is applied to the hub device 200 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 240 may be one or more components integrating at least one communication processing module. The wireless communication module 240 receives an electromagnetic wave through an antenna, performs frequency modulation and filtering processing on an electromagnetic wave signal, and sends a processed signal to the processor 210. The wireless communication module 240 may further receive a to-be-sent signal from the processor 210, perform frequency modulation and amplification on the to-be-sent signal, and convert a processed signal into an electromagnetic wave for radiation through the antenna.

For example, FIG. 4 is a schematic diagram of a structure of a second electronic device 300.

As shown in FIG. 4, the second electronic device 300 may include a processor 310, a memory 320, a universal serial bus (universal serial bus, USB) interface 330, a power supply module 340, a UWB module 350, a wireless communication module 360, and the like. Optionally, the second electronic device 300 may further include an audio module 370, a loudspeaker 370A, a receiver 370B, a microphone 370C, a headset jack 370D, a display 380, a sensor module 390, and the like.

It may be understood that the structure shown in FIG. 4 constitutes no specific limitation on the second electronic device 300. In some other embodiments of this application, the second electronic device 300 may include more or fewer components than those shown in the figure, or combine some of the components, or split some of the components, or have different arrangements of the components. The components shown in the figure may be implemented by using hardware, software, or a combination of software and hardware. In addition, an interface connection relationship between the modules that is shown in FIG. 4 is merely an example for description, and constitutes no limitation on the structure of the second electronic device 300. In some other embodiments of this application, the second electronic device 300 may alternatively use an interface connection manner different from that in FIG. 4, or use a combination of a plurality of interface connection manners.

The processor 310 may include one or more processing units. For example, the processor 310 may include an application processor (application processor, AP), a modem processor, a graphics processing unit (graphics processing unit, GPU), an image signal processor (image signal processor, ISP), and a video codec, and a digital signal processor (digital signal processor, DSP). Different processing units may be independent components, or may be integrated into one or more processors.

The memory 320 may be configured to store computer-executable program code. The executable program code includes instructions. For example, the memory 320 may further store data processed by the processor 310. In addition, the memory 320 may include a high-speed random access memory, and may further include a non-volatile memory, for example, at least one magnetic disk storage component, a flash memory component, or a universal flash storage (universal flash storage, UFS). The processor 310 runs the instructions stored in the memory 320 and/or instructions stored in a memory disposed in the processor, to perform various function applications of the second electronic device 300 and data processing.

The USB interface 330 is an interface that conforms to a USB standard specification, and may be specifically a mini USB interface, a micro USB interface, a USB Type-C interface, or the like. The USB interface 330 may be configured to connect to a charger to charge the second electronic device 300, or may be configured to transmit data between the second electronic device 300 and a peripheral device.

The power supply module 340 is configured to supply power to components of the second electronic device 300, for example, the processor 310 and the memory 320.

The UWB module 350 may provide a solution that is applied to the second electronic device 300 and includes wireless communication based on a UWB technology. For example, the UWB module 350 is configured to implement a function of the foregoing UWB tag.

The wireless communication module 360 may provide a solution that is applied to the second electronic device 300 and includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and ZigBee (ZigBee). The wireless communication module 360 may be one or more components integrating at least one communication processing module. The wireless communication module 360 receives an electromagnetic wave through an antenna, performs frequency modulation and filtering processing on an electromagnetic wave signal, and sends a processed signal to the processor 310. The wireless communication module 360 may further receive a to-be-sent signal from the processor 310, perform frequency modulation and amplification on the to-be-sent signal, and convert a processed signal into an electromagnetic wave for radiation through the antenna. The wireless communication module 360 and the UWB module 350 may be integrated together or disposed separately. This is not limited in this application.

The second electronic device 300 may implement an audio function by using the audio module 370, the loudspeaker 370A, the receiver 370B, the microphone 370C, the headset jack 370D, the application processor, and the like, for example, audio playing or recording.

The audio module 370 is configured to convert digital audio information into an analog audio signal output, and is further configured to convert an analog audio input into a digital audio signal. The audio module 370 may be further configured to: encode and decode an audio signal. In some embodiments, the audio module 370 may be disposed in the processor 310, or some functional modules of the audio module 370 are disposed in the processor 310.

The loudspeaker 370A, also referred to as a "speaker", is configured to convert an audio electrical signal into a sound signal. The second electronic device 300 may be for listening to an audio through the loudspeaker 370A.

The receiver 370B, also referred to as an "earpiece", is configured to convert an audio electrical signal into a sound signal.

The microphone 370C, also referred to as a "mike" or a "mic", is configured to convert a sound signal into an electrical signal. A user may make a sound near the microphone 370C through the mouth of the user, to input a sound signal to the microphone 370C.

The headset jack 370D is configured to connect to a wired headset. The headset jack 370D may be a USB interface 330, or may be a 3.5 mm open mobile terminal platform (open mobile terminal platform, OMTP) standard interface or cellular telecommunications industry association of the USA (cellular telecommunications industry association of the USA, CTIA) standard interface.

The display 380 is configured to display an image, a video, and the like. The display 380 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

Optionally, the sensor module 390 includes an inertial measurement unit (inertial measurement unit, IMU) module and the like. The IMU module may include a gyroscope, an accelerometer, and the like. The gyroscope and the accelerometer may be configured to determine a motion attitude of the second electronic device 300. In some embodiments, angular velocities of the second electronic device 300 around three axes may be determined by using the gyroscope. The accelerometer may be configured to detect magnitude of accelerations of the second electronic device 300 in various directions (generally on three axes). When the second electronic device 300 is still, magnitude and a direction of gravity may be detected. In an embodiment of this application, a device attitude of the second electronic device 300 may be obtained based on the angular speed and the acceleration that are measured by the IMU module. Optionally, some second electronic devices each may include an IMU module, and some second electronic devices each include no IMU module.

Optionally, the second electronic device 300 further includes a filter (for example, a Kalman filter). For example, an output of the IMU module and the output of the UWB module 350 may be superimposed, and a signal obtained after the output of the MU module and the output of the UWB module 350 are superimposed may be input to the Kalman filter for filtering, to reduce an error.

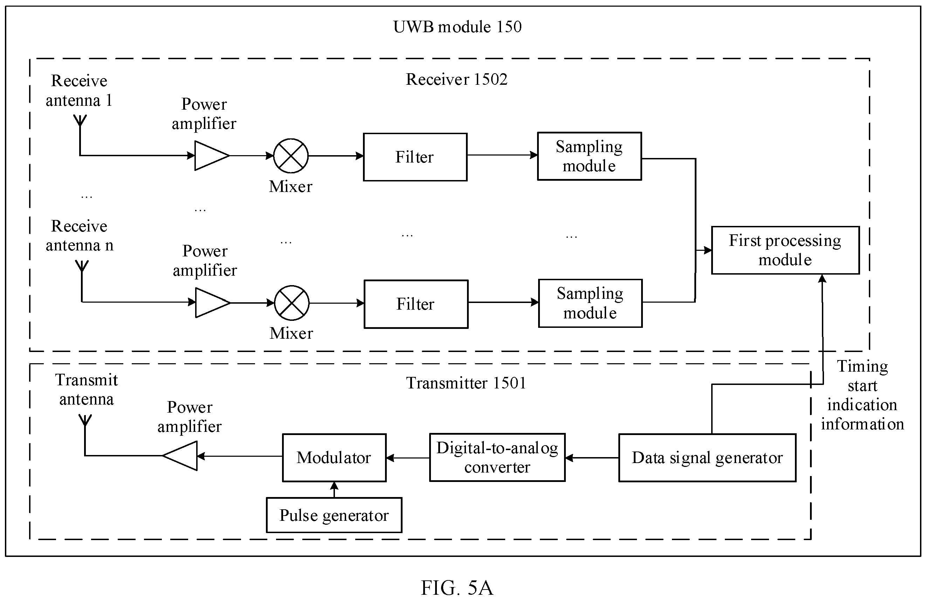

For example, FIG. 5A shows a structure of the UWB module in the first electronic device according to an embodiment of this application. As shown in FIG. 5A, the UWB module 150 includes a transmitter 1501 and a receiver 1502. The transmitter 1501 and the receiver 1502 may run independently. The transmitter 1501 includes a data signal generator, a pulse generator, a modulator, a digital-to-analog converter, a power amplifier, a transmit antenna, and the like. The data signal generator is configured to generate a data signal, and is further configured to send timing start indication information to the receiver 1502 when starting to generate the data signal. The pulse generator is configured to generate cyclical pulse signals. The digital-to-analog converter is configured to convert a digital signal into an analog signal. A data signal that needs to be sent is modulated by the modulator to the pulse signal generated by the pulse generator, and undergoes power amplification performed by the power amplifier. Then, a UWB signal is transmitted through the transmit antenna. The receiver 1502 includes a receive antenna, a mixer, a filter, a sampling module, a first processing module, and the like. Any receive antenna receives the UWB signal (for example, in a form of a pulse sequence). The received UWB signal is mixed by the mixer, filtered and amplified by the filter, and undergoes analog-to-digital conversion performed by the sampling module, to obtain a baseband digital signal. The first processing module is configured to process the baseband digital signal, to detect the UWB signal. For example, the first processing module calculates time of flight (time of flight, ToF) of the UWB signal based on the timing start indication information and a moment at which the pulse sequence is received, and calculates, based on the ToF and a rate (for example, a light speed) at which the UWB signal is transmitted in the air, a distance between the first electronic device 100 and the second electronic device 300 including the UWB module 350. For another example, the first processing module calculates, based on a phase difference between pulse sequences received by a plurality of receive antennas, a signal coming direction of the second electronic device 300 including the UWB module 350. It should be noted that, in FIG. 5A, a pulse sequence received by each receive antenna passes through a power amplifier, a mixer, a filter, and a sampling module that are in a group, which indicates a procedure of processing the pulse sequence. Optionally, the receiver 1502 may include only a power amplifier, a mixer, a filter, and a sampling module that are in one group. In an implementation, one antenna may implement a function of one transmit antenna in the transmitter 1501 and a function of one receive antenna in the receiver 1502, that is, the transmit antenna and the receive antenna are integrated into a same antenna.

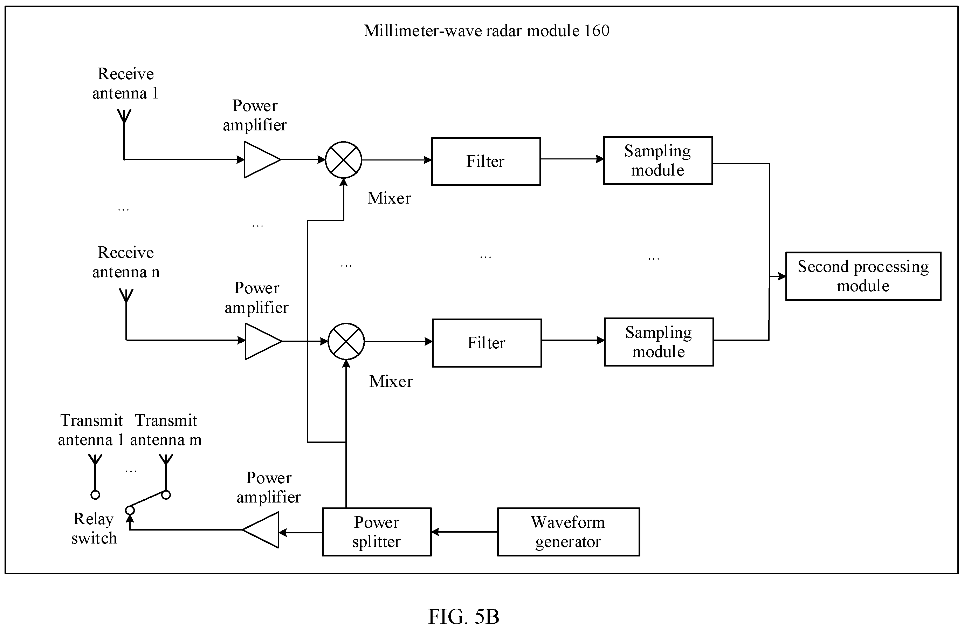

For example, FIG. 5B shows a structure of the millimeter-wave radar module in the first electronic device according to an embodiment of this application. As shown in FIG. 5B, the millimeter-wave radar module 160 includes a transmit antenna, a relay switch, a receive antenna, a waveform generator, a mixer, a filter, a second processing module, and the like. The waveform generator is configured to generate a to-be-transmitted signal. For example, the to-be-transmitted signal is a linear frequency-modulated continuous signal (linear frequency-modulated continuous wave, LFMCW). After the to-be-transmitted signal passes through a power splitter, one part of the to-be-transmitted signal undergoes power amplification performed by the power amplifier. Then, the relay switch selects a transmit antenna to transmit a millimeter-wave signal. The other part of the transmitted signal is used as a local oscillator signal, and is mixed, by the mixer, with a millimeter-wave signal received by the receive antenna. A signal output by the mixer is a difference frequency signal. The difference frequency signal is filtered and amplified by the filter, and undergoes analog-to-digital conversion (sampling) performed by the sampling module, to become a digital difference frequency signal. The second processing module detects a target by processing the digital difference frequency signal, and obtains information such as a distance and a signal coming direction of the target. In FIG. 5B, n and m are positive integers greater than or equal to 1.

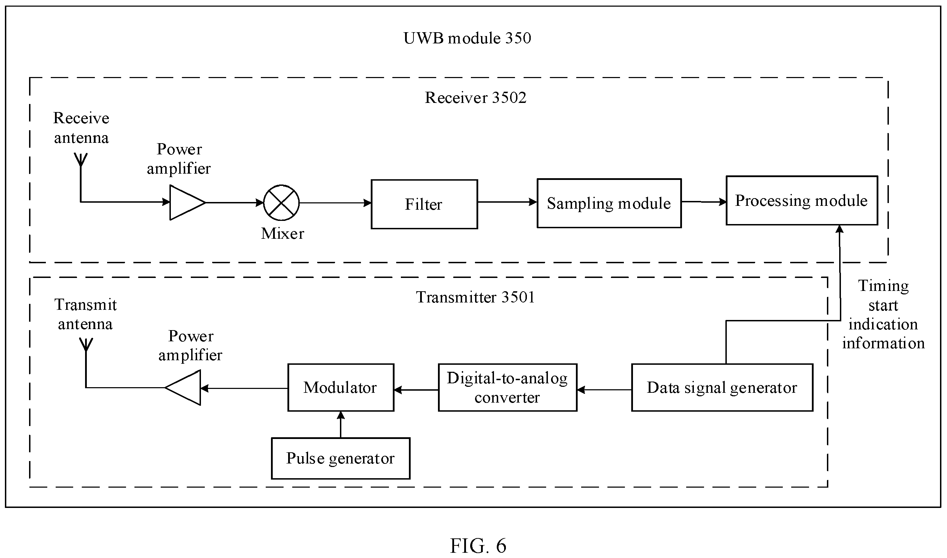

For example, FIG. 6 shows a structure of the UWB module in the second electronic device. As shown in FIG. 6, the UWB module 350 includes a transmitter 3501 and a receiver 3502. The transmitter 3501 and the receiver 3502 may run independently. The transmitter 3501 includes a data signal generator, a pulse generator, a modulator, a digital-to-analog converter, a power amplifier, a transmit antenna, and the like. The data signal generator is configured to generate a data signal. The pulse generator is configured to generate cyclical pulse signals. The digital-to-analog converter is configured to convert a digital signal into an analog signal. A data signal that needs to be sent is modulated by the modulator to the pulse signal generated by the pulse generator, and undergoes power amplification performed by the power amplifier. Then, a UWB signal is transmitted through the transmit antenna. The receiver 3502 includes a receive antenna, a mixer, a filter, a sampling module, a processing module, and the like. The receive antenna receives the UWB signal (for example, in a form of a pulse sequence). The received UWB signal is mixed by the mixer, filtered and amplified by the filter, and undergoes analog-to-digital conversion performed by the sampling module, to obtain a baseband digital signal. The processing module is configured to process the baseband digital signal, to detect the UWB signal. In an implementation, the transmit antennas in the transmitter 3501 and the receive antennas in the receiver 3502 may be integrated into a same antenna.

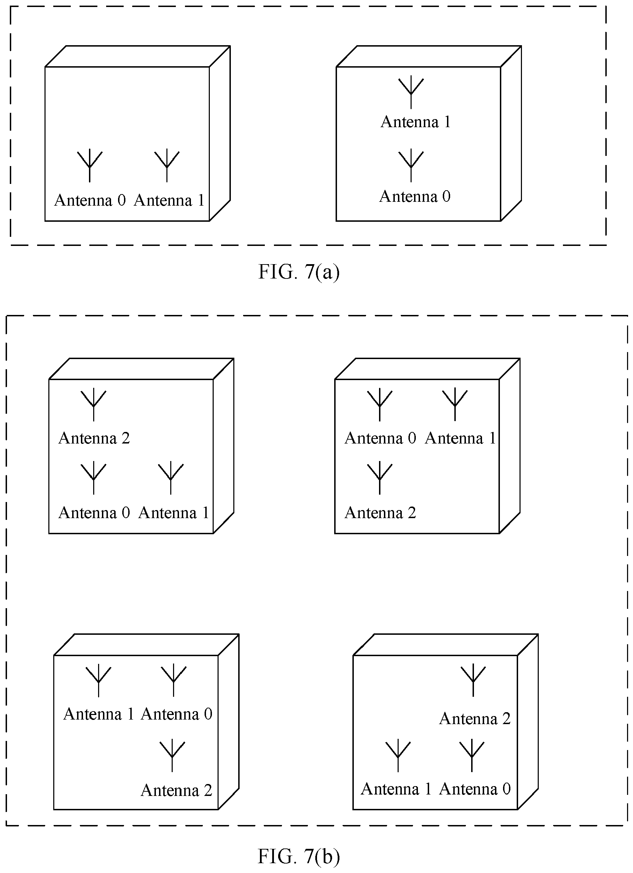

For example, FIG. 7(a) to FIG. 7(e) show several antenna distributions of the UWB module in the first electronic device according to an embodiment of this application. FIG. 7(a) shows examples of two two-antenna structures. One two-antenna structure is a transverse (for example, horizontal) antenna structure, and the other two-antenna structure is a longitudinal (for example, vertical) antenna structure. Preferably, a distance between an antenna 0 and an antenna 1 is λ/2, and λ is a wavelength of the UWB signal. The transverse antenna structure may be configured to measure a transverse coming direction (for example, a horizontal coming direction) of the UWB signal. The longitudinal antenna structure may be configured to measure a longitudinal coming direction (for example, a vertical coming direction) of the UWB signal. In an implementation, a first electronic device on the left shown in FIG. 7(a) may cooperate with a first electronic device on the right (for example, the two first electronic devices are arranged at a specific angle), to detect a signal coming direction of the second electronic device including the UWB module.

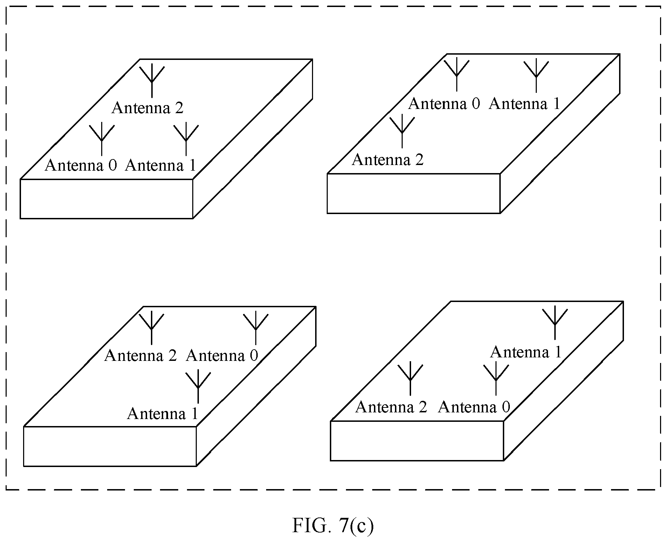

FIG. 7(b) and FIG. 7(c) show examples of a three-antenna structure. As shown in FIG. 7(b) and FIG. 7(c), three antennas have a structural relationship in an L shape (or referred to as a right triangle). As shown in FIG. 7(b), an antenna 0 and an antenna 1 are aligned in a transverse direction (for example, a horizontal direction). The antenna 0 and an antenna 2 are aligned in a longitudinal direction (for example, a vertical direction). To be specific, a plane on which the antenna 0, the antenna 1, and the antenna 2 are located is a longitudinal plane (for example, a longitudinal plane), and has a distribution relationship in the L shape on the longitudinal plane. As shown in FIG. 7(c), a plane on which an antenna 0, an antenna 1, and an antenna 2 are located is a transverse plane (for example, a horizontal plane), and a connection line between the antenna 0 and the antenna 1 (it is assumed that there is a connection line between the antenna 0 and the antenna 1) is perpendicular to a connection line between the antenna 0 and the antenna 2 (it is assumed that there is a connection line between the antenna 0 and the antenna 2). To be specific, the antenna 0, the antenna 1, and the antenna 2 have a distribution relationship in the L shape on the transverse plane. For example, when the antenna 0, the antenna 1, and the antenna 2 are distributed in the L shape, a distance between the antenna 0 and the antenna 1 and a distance between the antenna 0 and the antenna 2 may be less than or equal to $\lambda/2$, where $\lambda$ is a wavelength of the UWB signal. The distance between the antenna 0 and the antenna 1 and the distance between the antenna 0 and the antenna 2 may be the same or different.

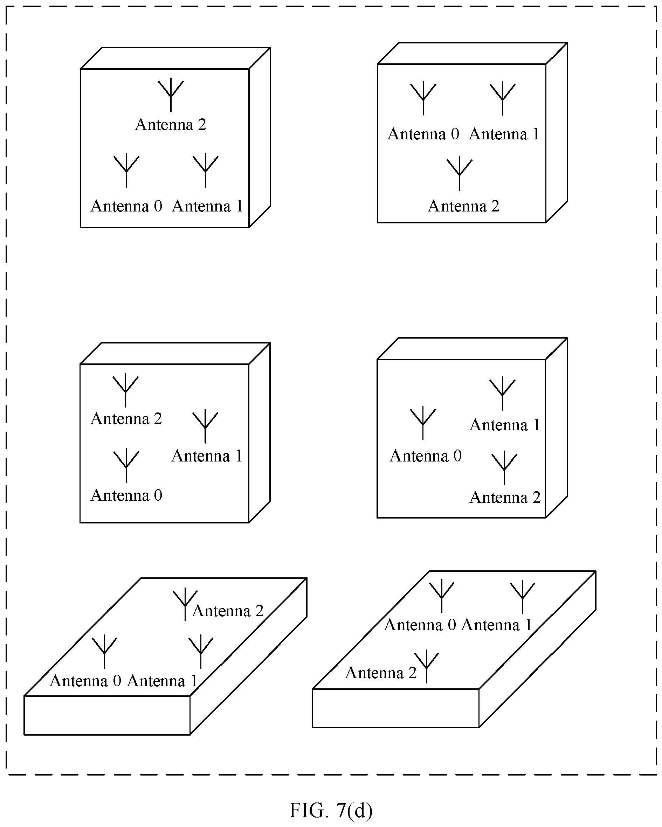

FIG. 7(d) shows examples of some other three-antenna structures. As shown in FIG. 7(d), three antennas have a structural relationship in shape of a triangle (for example, an equilateral triangle or an isosceles triangle). For example, a plane on which an antenna 0, an antenna 1, and an antenna 2 are located is a longitudinal plane (for example, a vertical plane), and are distributed in the shape of the triangle on the longitudinal plane. For another example, an antenna 0, an antenna 1, and an antenna 2 are distributed in the shape of the triangle on a transverse plane (for example, a horizontal plane). For example, when the antenna 0, the antenna 1, and the antenna 2 are distributed in the shape of the triangle, a distance between any two of the antenna 0, the antenna 1, and the antenna 2 may be less than or equal to $\lambda/2$, where $\lambda$ is a wavelength of the UWB signal. In addition, distances between any two of the antenna 0, the antenna 1, and the antenna 2 may be the same or different. For example, a distance between the antenna 0 and the antenna 1 is $\lambda/2$, and a distance between the antenna 0 and the antenna 2 is $\sqrt{3}\lambda/2$ .

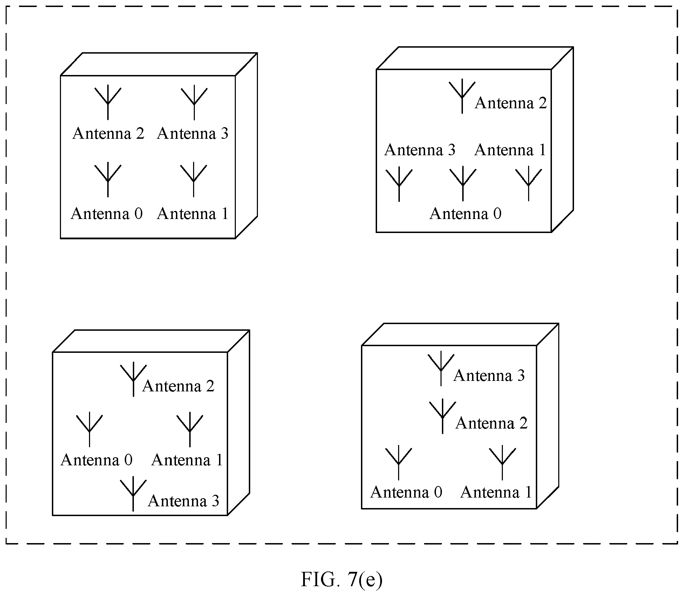

It may be understood that a case in which there are more than three antennas also falls within the scope of this application. For example, as shown in FIG. 7(e), four antennas, namely, an antenna 0, an antenna 1, an antenna 2, and an antenna 3, are distributed in a shape of a rectangle. Any three of the four antennas are distributed in the foregoing L shape or distributed in the forging shape of the triangle.

For example, the first electronic device 100 obtains a transverse coming direction of the UWB signal based on a phase difference obtained when the UWB signal from the second electronic device 300 reaches two transversely distributed antennas of the UWB module 150, and obtains a longitudinal coming direction of the UWB signal based on a phase difference obtained when the UWB signal from the second electronic device 300 reach two longitudinally distributed antennas of the UWB module 150. Further, the first electronic device 100 obtains a coming direction of the UWB signal based on the transverse coming direction and the longitudinal coming direction.

In some other examples, the UWB module 150 of the first electronic device 100 may include only one antenna. In this case, at least three first electronic devices 100 need to be used. The at least three first electronic devices 100 need to be distributed in an L shape or in a shape of a triangle, and cooperate with each other to obtain a coming direction of the UWB signal. A specific principle is similar to the foregoing descriptions. Details are not described herein again.

A quantity and a distribution of antennas in the UWB module of the first electronic device 100 are not limited in embodiments of this application provided that the coming direction of the UWB signal can be obtained.

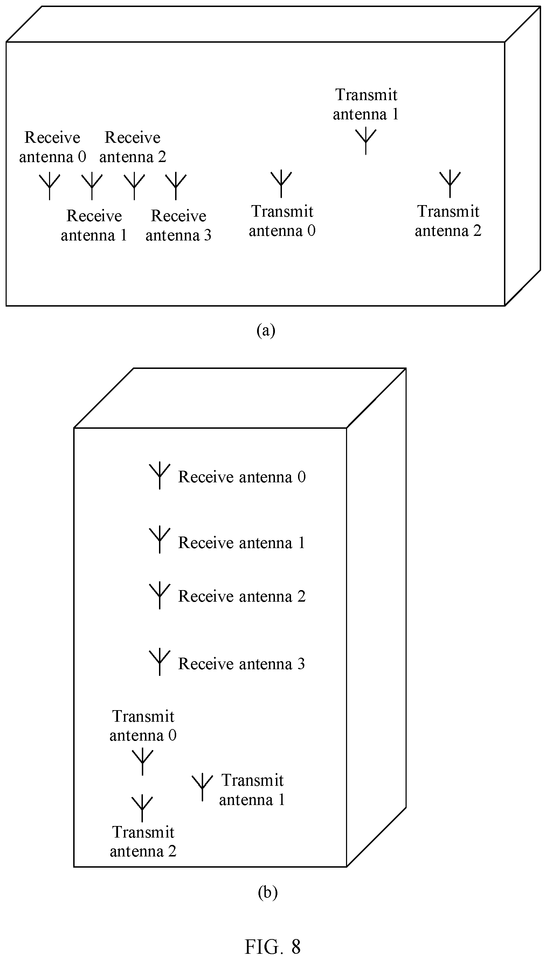

For example, FIG. 8 shows several antenna distributions of the millimeter-wave radar module in the first electronic device according to an embodiment of this application. For example, the transmit antenna includes a transmit antenna 0, a transmit antenna 1, and a transmit antenna 2. The receive antenna includes a receive antenna 0, a receive antenna 1, a receive antenna 2, and a receive antenna 3. A distribution of the transmit antenna 0, the transmit antenna 1, and the transmit antenna 2, and a distribution of the receive antenna 0, the receive antenna 1, the receive antenna 2, and the receive antenna 3 may be shown in (a) or (b) in FIG. 8. The transmit antenna is configured to transmit an electromagnetic signal (for example, an LFMCW) operating in a millimeter-wave band. The receive antenna is configured to receive a signal that is reflected by a reflector (an object or a human body) and that is of the electromagnetic signal operating in the millimeter-wave band. The millimeter-wave radar module 160 obtains a difference frequency signal based on the transmitted signal and the received signal, and determines a position of the object or the human body based on the difference frequency signal.

As shown in FIG. 8, three transmit antennas and four receive antennas are located on a same longitudinal plane (for example, a vertical plane). The three transmit antennas are distributed in a shape of a triangle on the longitudinal plane. In an example, as shown in (a) in FIG. 8, the transmit antenna 0 and the transmit antenna 2 are located on a same transverse plane (for example, a horizontal plane). The four receive antennas are located on a same transverse line (for example, a horizontal line). For example, distances between any two receive antennas are equal (for example, are $\lambda L/2$). A distance between the transmit antenna 0 and the transmit antenna 2 is equal (for example, is $2\lambda L$). A distance between the transmit antenna 1 and the transmit antenna 0 and a distance between the transmit antenna 1 and the transmit antenna 2 in a longitudinal direction are both equal (for example, are both λL/2). Herein, λL is a wavelength of a highest frequency of the linear frequency-modulated continuous signal. In another example, as shown in (b) in FIG. 8, the transmit antenna 0 and the transmit antenna 2 are located on a same longitudinal line (for example, a vertical line). The four receive antennas are located on a same longitudinal line (for example, a vertical line). Distances between any two receive antennas are equal (for example, are λL/2). A distance between the transmit antenna 0 and the transmit antenna 2 is equal (for example, is 2λL). A distance between the transmit antenna 1 and the transmit antenna 0 and a distance between the transmit antenna 1 and the transmit antenna 2 in a transverse direction are both equal (for example, are both λL/2). It may be understood that a quantity and a distribution of transmit antennas and/or a quantity and a distribution of receive antennas may be in other forms. This is not limited in embodiments of this application.

A plurality of transmit antennas and a plurality of receive antennas are configured to: accurately measure a direction of a reflected signal, namely, a coming direction of the reflected signal, including a transverse coming direction (for example, a horizontal coming direction) and a longitudinal coming direction (for example, a vertical coming direction), and increase a receiving aperture of the millimeter-wave radar as much as possible. The millimeter-wave radar module 160 may calculate a transverse coming direction of the target based on a phase difference of the reflected signal on the plurality of receive antennas in the transverse direction (for example, the horizontal direction), and calculate a longitudinal coming direction of the target based on a phase difference of the reflected signal on the plurality of receive antennas in the longitudinal direction (for example, the vertical direction).

Optionally, there may be more than or fewer than three transmit antennas. Optionally, there may be more than or fewer than four receive antennas. This is not limited in this application. In an implementation, there is at least one transmit antenna, and there are at least three receive antennas.

In an implementation, there is one transmit antenna, and there are three receive antennas. The three receive antennas, namely, the receive antenna 0, the receive antenna 1, and the receive antenna 2, are distributed in the shape of the triangle. For ease of description, it is assumed that a connection line (actually, there is no connection line) between the receive antenna 0 and the receive antenna 1 is located in the transverse direction, and a connection line (actually, there is no connection line) between the receive antenna 0 and the receive antenna 2 is located in the longitudinal direction. In this way, after a transmitted signal of the transmit antenna is reflected by the reflector (the object or the human body), the three receive antennas separately receive reflected signals. The millimeter-wave radar module 160 may obtain a transverse coming direction (for example, a horizontal coming direction) of the reflected signal based on a phase difference between the reflected signals respectively received by the receive antenna 0 and the receive antenna 1, and obtain a longitudinal coming direction (for example, a vertical coming direction) of the reflected signal based on a phase difference between the reflected signals respectively received by the receive antenna 0 and the receive antenna 2. Further, a coming direction of the reflected signal may be determined based on the transverse coming direction and the longitudinal coming direction.

In another implementation, there are at least two transmit antennas, and there are at least two receive antennas. For example, there are two transmit antennas: the transmit antenna 0 and transmit antenna 1, and there are two receive antennas: the receive antenna 0 and the receive antenna 1. It is assumed that a connection line (actually, there is no connection line) between the transmit antenna 0 and the transmit antenna 1 is located in the transverse direction, and a connection line (actually, there is no connection line) between the receive antenna 0 and the receive antenna 1 is located in the longitudinal direction. After respective transmitted signals of the transmit antenna 0 and the transmit antenna 1 are separately reflected by the reflector (the object or the human body), at least one receive antenna receives reflected signals. The millimeter-wave radar module 160 may calculate a transverse coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna. After the transmitted signals of the transmit antennas are reflected by the reflector (the object or the human body), the two receive antennas respectively receive the reflected signals. A longitudinal coming direction (for example, a vertical coming direction) of the reflected signal is obtained based on a phase difference between the reflected signals respectively received by the receive antenna 0 and the receive antenna 1. Further, a coming direction of the reflected signal may be determined based on the transverse coming direction and the longitudinal coming direction.

In another implementation, there are at least two transmit antennas, and there are at least two receive antennas. For example, there are two transmit antennas: the transmit antenna 0 and transmit antenna 1, and there are two receive antennas: the receive antenna 0 and the receive antenna 1. It is assumed that a connection line (actually, there is no connection line) between the transmit antenna 0 and the transmit antenna 1 is located in the longitudinal direction, and a connection line (actually, there is no connection line) between the receive antenna 0 and the receive antenna 1 is located in the transverse direction. After transmitted signals of the two transmit antennas are separately reflected by the reflector (the object or the human body), at least one receive antenna receives reflected signals. The millimeter-wave radar module 160 may calculate a longitudinal coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna, and obtain a transverse coming direction (for example, a horizontal coming direction) of the reflected signal based on a phase difference between the reflected signals respectively received by the receive antenna 0 and the receive antenna 1. Further, a coming direction of the reflected signal may be determined based on the transverse coming direction and the longitudinal coming direction.

In another implementation, there are at least three transmit antennas, and there are at least one receive antenna. For example, there are three transmit antennas: the transmit antenna 0, the transmit antenna 1, and the transmit antenna 2, and there are one receive antenna: the receive antenna 0. The transmit antenna 0, the transmit antenna 1, and the transmit antenna 2 are distributed in the shape of the triangle. It is assumed that a connection line (actually, there is no connection line) between the transmit antenna 0 and the transmit antenna 1 is located in the transverse direction (for example, the horizontal direction), and a connection line (actually, there is no connection line) between the transmit antenna 0 and the transmit antenna 2 is located in the longitudinal direction. After transmitted signals of the transmit antenna 0, the transmit antenna 1, and the transmit antenna 2 are separately reflected by the reflector (the object or the human body), the receive antenna 0 receives reflected signals. The millimeter-wave radar module 160 may calculate a transverse coming direction (for example, a horizontal coming direction) of a signal (which may also be referred to as the reflected signal in this case), that is obtained after the transmitted signal is reflected, based on a phase difference obtained when the signals respectively transmitted by the transmit antenna 0 and the transmit antenna 1 reach a same receive antenna, and calculate a longitudinal coming direction (for example, a vertical coming direction) of a signal (which may also be referred to as the reflected signal in this case), that is obtained after the transmitted signal is reflected, based on a phase difference obtained when the signals respectively transmitted by the transmit antenna 0 and the transmit antenna 2 reach a same receive antenna.

3. Description of a locating principle

For ease of description, the following describes a specific locating principle in detail by using an example in which the first electronic device 100 includes the UWB module 150 and the millimeter-wave radar module 160.

It should be noted that locating means obtaining a position. In an embodiment of this application, coordinates in a coordinate system indicate a position. For example, coordinates of the first electronic device indicate a position of the first electronic device, coordinates of the second electronic device indicate the position of the second electronic device, and coordinates of the user indicates the position of the user. It may be understood that, in some other embodiments, a position may alternatively be indicated in another manner. This is not limited in embodiments of this application.

(1) Establishment of the first coordinate system (first electronic device coordinate system)

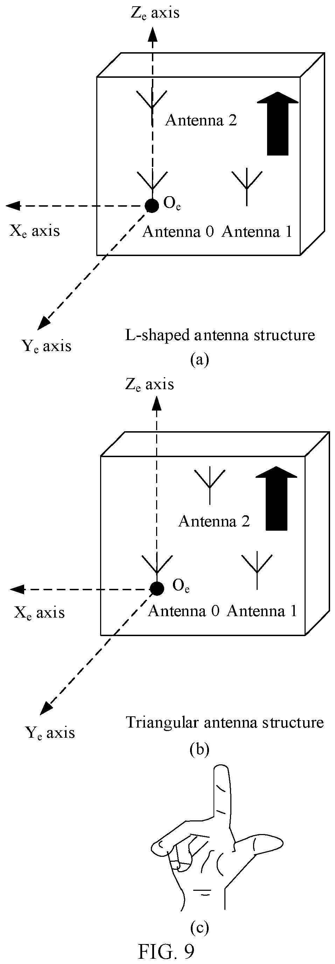

To accurately perform locating, the UWB module 150 needs to establish the first coordinate system, and specifically perform locating by using coordinates in the first coordinate system. With reference to FIG. 9, the following describes in detail a process of establishing the first coordinate system. For example, in (a) and (b) in FIG. 9, one UWB module includes three antennas. A distance between an antenna 0 and an antenna 1 and a distance between the antenna 0 and an antenna 2 are both preset distances. It is assumed that a point (for example, a center point or an end point at one end) on the antenna 0 is a coordinate origin Oe. A connection line between the antenna 0 and the antenna 1 is used as an Xe axis, and a direction in which the antenna 1 points to the antenna 0 is a positive direction of the Xe axis. In a plane on which the antenna 0, the antenna 1, and the antenna 2 are located, a straight line perpendicular to the Xe axis is used as a Ze axis, and a projection of the antenna 2 on the Ze axis is located in a positive direction of the Ze axis. In this way, the positive direction of the Ze axis can be determined. In (a) in FIG. 9, the antenna 2 is located in the positive direction of the Ze axis. In (b) in FIG. 9, the projection of the antenna 2 on the Ze axis is in the positive direction of the Ze axis. Finally, a direction of a Ye axis is determined according to a rule of a right-hand rectangular coordinate system based on directions of the Xe axis and the Ze axis. The right-hand rectangular coordinate system may be referred to as a right-hand system for short, and is one of methods for specifying a rectangular coordinate system in space. As shown in (c) in FIG. 9, positive directions of an Xe axis, a Ye axis, and a Ze axis in the right-hand rectangular coordinate system are defined as follows: The right hand is placed at a position of an origin, the thumb, the index finger, and the middle finger are at right angles to each other, when the thumb and index finger are on a same plane, the thumb points to the positive direction of the Xe axis, and the middle finger points to the positive direction of the Ze axis, a direction to which the index finger points is the positive direction of the Ye axis.

In some examples, to facilitate calculation and reduce a calculation error, the Ze axis may be set on a vertical plane, and the positive direction of the Ze axis is opposite to a gravity direction. Optionally, prompt information may be marked on an outer surface of the first electronic device 100, and indicates a correct installation manner or placement manner. In this way, the Ze axis of the first coordinate system is located on the vertical plane, and the positive direction of the Ze axis is opposite to the gravity direction. For example, as shown in (a) in FIG. 9 or (b) in FIG. 9, an arrow is marked on an outer surface of the UWB base station, and is for prompting to install or place the first electronic device 100 in a direction indicated by the arrow (a direction of the arrow faces upward). In this way, the Ze axis of the first coordinate system is located on the vertical plane, and the positive direction of the Ze axis is opposite to the gravity direction. For example, when installing the first electronic device, the user may make an arrow on an outer surface of the first electronic device parallel to a wall surface, and a direction of the arrow face upward. In this way, the Ze axis of the first coordinate system is located on the vertical plane, and the positive direction of the Ze axis is opposite to the gravity direction. For example, when installing the first electronic device, the user may use an instrument, for example, a plumb bob, to make an arrow on an outer surface of the first electronic device parallel to a vertical line determined by the plumb bob, and a direction of the arrow face upward. In this way, the Ze axis of the first coordinate system is located on the vertical plane, and the positive direction of the Ze axis is opposite to the gravity direction.

Alternatively, the first electronic device 100 may include only one UWB module, and the UWB module 150 may include only one antenna. As a result, three first electronic devices 100 need to cooperate with each other to establish the first coordinate system. In this case, for a detailed process of establishing the first coordinate system, refer to the Chinese Patent Application No. 202110872916.6. Details are not described herein again. It should be noted that the Chinese Patent Application No. 202110872916.6 is incorporated into this application by reference in its entirety, and falls within the scope of this application.

For example, a positive direction of a Ye axis is alternatively determined according to a rule of a left-hand rectangular coordinate system based on directions of the Xe axis and the Ze axis. The left-hand rectangular coordinate system may be referred to as a left-hand system for short, and is one of methods for specifying a rectangular coordinate system in space. Positive directions of an Xe axis, a Ye axis, and a Ze axis in the left-hand rectangular coordinate system are defined as follows: The left hand is placed at a position of an origin, the thumb, the index finger, and the middle finger are at right angles to each other, when the thumb and index finger are on a same plane, the thumb points to the positive direction of the Xe axis, and the middle finger points to the positive direction of the Ze axis, a direction to which the index finger points is the positive direction of the Ye axis.

For ease of description, in embodiments of this application, the Ye axis, a Yb axis, and a Yt axis, and positive directions of the Ye axis, the Yb axis, and the Yt axis are determined according to the rule of the right-hand rectangular coordinate system. A person skilled in the art should understand that determining the Ye axis, the Yb axis, the Yt axis, and the positive direction of the Ye axis, the Yb axis, and the Yt axis according to the rule of the left-hand rectangular coordinate system or in another manner also falls within the scope of this application. In addition, names of any two or more axes in any one of the first coordinate system, the second coordinate system, and a third coordinate system may be switched provided that the foregoing rule or manner is satisfied. Certainly, the positive directions of the three axes in the first coordinate system may alternatively be determined according to another rule. Details are not described herein again.

Optionally, the first coordinate system may be automatically established after a specific input is received, or may be pre-established.

For example, after the first electronic device 100 is installed according to a requirement of the prompt information, when the first electronic device 100 receives the specific input, the first electronic device 100 automatically establishes the first coordinate system. The specific input may be a user input, or may be a non-user input (for example, an instruction message from another device, for example, a remote control, is received).

For example, after the first electronic device 100 is installed according to a requirement of the prompt information, when the first electronic device 100 receives the specific input, the first electronic device 100 automatically invokes related information locally or from a server, to invoke the pre-established first coordinate system. Unless otherwise specified, the server in this application may be a hub device in a home, or may be a cloud server.

It should be noted that the point on the antenna 0 is used as the origin of the first coordinate system. This is merely an example. A point on another antenna (for example, the antenna 1) may alternatively be the origin of the first coordinate system.

(2) Establishment of the second coordinate system

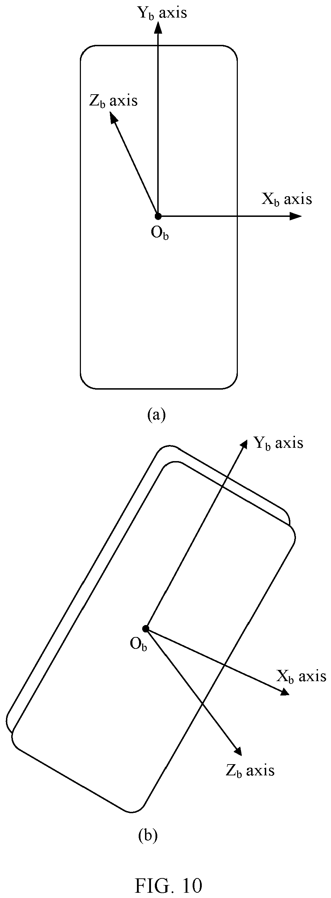

For example, FIG. 10 shows a process of establishing the second coordinate system according to an embodiment of this application. As shown in (a) in FIG. 10, an edge contour of the second electronic device includes four sides: two vertical sides and two horizontal sides. Ob is the gravity center or the center of the second electronic device. An axis that includes the point Ob and parallel to the transverse edge of the second electronic device is an Xb axis. A positive direction of the Xb axis points to the right side of the second electronic device. An axis that includes the point Ob and is parallel to the vertical edge of the second electronic device is a Yb axis. A positive direction of the Yb axis points to the upper side of the second electronic device. A pointing direction of the second electronic device is the positive direction of the Yb axis. A Zb axis is perpendicular to a plane on which the Xb axis and the Yb axis are located. A positive direction of the Zb axis is determined according to a rule of a right-hand rectangular coordinate system. Optionally, Ob may be the center of the second electronic device, or Ob may be the center of an IMU module of the second electronic device (on a premise that the second electronic device includes the IMU module). (b) in FIG. 10 is a three-dimensional diagram of the second electronic device in (a) in FIG. 10.

It should be noted that FIG. 10 shows only an example of the second coordinate system. The second coordinate system may alternatively be defined according to another rule. For example, a coordinate origin Ob may alternatively be any point on the second electronic device, or any point outside the second electronic device. In addition, directions of the three axes of the second coordinate system are not limited to the positive directions of the Xb axis, the Yb axis, and the Zb axis shown in (a) or (b) in FIG. 10.

Optionally, the second coordinate system may be pre-established. For example, during delivery of the second electronic device, the second coordinate system has been established, and related information of the second coordinate system is stored locally or on a server. When the second electronic device is started or when the first electronic device receives a specific input, the second electronic device invokes the related information of the second coordinate system locally or from the server.

(3) Establishment of the third coordinate system

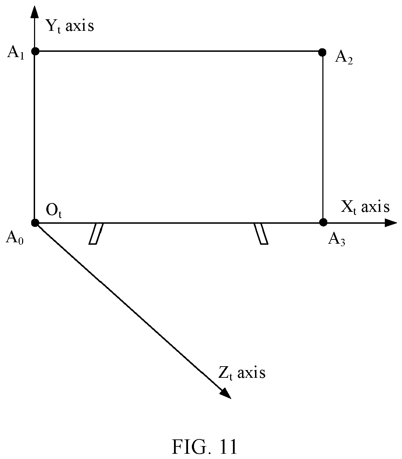

For example, FIG. 11 shows a process of establishing the third coordinate system according to an embodiment of this application. As shown in FIG. 11, an edge contour of the second electronic device includes four sides: a first side A0A1, a second side A1A2, a third side A2A3, and a fourth side A3A0. The first side A0A1 and the third side A2A3 are vertical sides, and the second side A1A2 and the fourth side A3A0 are horizontal sides. Optionally, an intersection (namely, the lower left corner of a display area of the second electronic device) at which the leftmost side of the display area of the second electronic device intersects with the bottommost side of the display area of the second electronic device is a coordinate origin Ot. An axis that includes the point Ot and is parallel to A3A0 is an Xt axis, and a positive direction of the Xt axis is a pointing direction from a point A0 to a point A3. An axis that includes the point Ot and is parallel to A0A1 is a Yt axis, and a positive direction of the Yt axis is a pointing direction from the point A0 to a point A1. A Zt axis is perpendicular to a plane on which the Xt axis and the Yt axis are located. A positive direction of the Zt axis is determined according to a rule of a right-hand rectangular coordinate system.

It should be noted that FIG. 11 shows only an example of the third coordinate system. The third coordinate system may alternatively be defined according to another rule. Optionally, Ot may be the center of the display area of the second electronic device, or any point of the display area of the second electronic device. In addition, the forward directions of the three axes of the third coordinate system are not limited to the forward direction indicated by the Xt axis, the Yt axis, and the Zt axis shown in FIG. 11.

It should be noted that, when the edge contour of the display area of the second electronic device is an edge contour of the second electronic device, the point A0 of the second electronic device coincides with the point Ot. When the edge contour of the display area of the second electronic device is not an edge contour of the second electronic device, for example, when there is a frame outside the display area of the second electronic device, the point A0 of the second electronic device does not coincide with the point Ot.

Optionally, the third coordinate system may be pre-established. For example, during delivery of the second electronic device, the third coordinate system has been established, and related information of the third coordinate system is stored locally or on a server. When the second electronic device is started, or when the second electronic device receives a trigger, the second electronic device invokes the third coordinate system locally or from the server.

(4) Calculation of coordinates in the first coordinate system

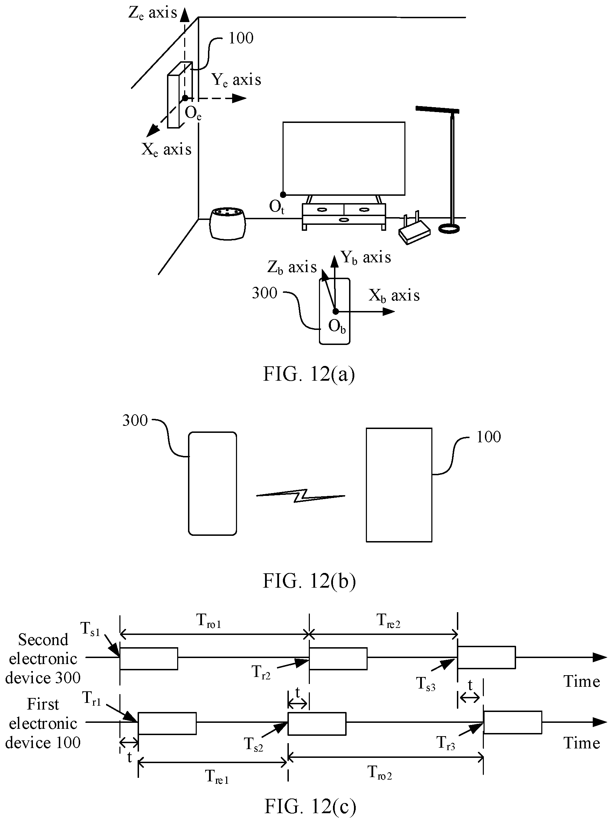

With reference to FIG. 12(a) to FIG. 12(f), the following specifically describes a calculation principle of locating coordinates of the second electronic device 300 by the first electronic device 100 in the first coordinate system. In FIG. 12(a) to FIG. 12(f), the second electronic device 300 includes a UWB module. For example, the second electronic device 300 is a mobile device (for example, a smartphone or a remote control). As shown in FIG. 12(a), the first electronic device 100 and the second electronic device 300 are located in a same room or area. The first electronic device 100 has established the first coordinate system, and the second electronic device 300 has established the second coordinate system. As shown in FIG. 12(b), the first electronic device 100 and the second electronic device 300 may perform UWB communication. Accordingly, a distance between the second electronic device 300 and the first electronic device 100 and a direction of the second electronic device 300 relative to the first electronic device 100 may be determined. As a result, the coordinates of the second electronic device 300 in the first coordinate system may be determined.

1: Measure a distance L between the first electronic device and the second electronic device.

For example, as shown in FIG. 12(c), the distance L between the first electronic device and the second electronic device may be obtained in the following manner.

The first electronic device 100 may measure the distance L between the first electronic device 100 and the second electronic device 300 by using a two-way ranging method. The two-way ranging method includes a single-sided two-way ranging (Single-sided Two-way Ranging, SS-TWR) method and a double-sided two-way ranging (Double-sided Two-way Ranging, DS-TWR) method. The DS-TWR method is used as an example herein to briefly describe the ranging method.

In the DS-TWR method, a timestamp of a round trip between the first electronic device 100 and the second electronic device 300 is recorded, and finally time of flight is obtained. In the DS-TWR method, although response duration increases, a ranging error is reduced. The double-sided two-way ranging method includes two methods, namely, a four-message manner and a three-message manner, based on different quantities of sent messages.

The three-message manner is used as an example. The second electronic device 300 sends a ranging request packet (namely, a 1st packet), and records a sending time point Ts1. After receiving the request packet, the first electronic device 100 records a receiving time point Tr1. A time difference t between Tr1 and Ts1 is transmission duration of the packet between the two devices. It takes Tre1 for the first electronic device 100 to process the request packet. Then, the first electronic device 100 sends a response packet (that is, a 2nd packet), and records a sending time point Ts2. After receiving the response packet, the second electronic device 300 records a receiving time point Tr2. A time difference between Tr2 and Ts2 is t. A time difference between the time point at which the second electronic device 300 sends the 1st packet and the time point at which the second electronic device 300 receives the 2nd packet is a time difference Tro1. It takes Tre2 for the second electronic device 300 to process the response packet. The second electronic device 300 sends a last packet (namely, a 3rd packet), and records a sending time point Ts3. The first electronic device 100 receives the 3rd packet, and records a receiving time point Tr3. A time difference between Tr3 and Ts3 is t. In addition, a time difference from the time point at which the first electronic device 100 starts to send the 2nd packet to the time point at which the first electronic device 100 receives the 3rd packet is Tro2. Consequently, transmission duration t of the packet between the two devices may be calculated according to the following formula (1), and the distance L between the first electronic device 100 and the second electronic device 300 may be calculated according to formula (2).

$$t = \frac{T_{ro1} \times T_{ro2} - T_{re1} \times T_{re2}}{T_{ro1} \times T_{ro2} + T_{re1} \times T_{re2}} \qquad \text{formula (1)}$$

$$L = c \times t \qquad \text{formula (2)}$$

Herein, c is a transmission rate of a UWB signal in a medium, and c is generally a light speed through selection.

Optionally, a ranging request packet may alternatively be sent by the first electronic device 100. Correspondingly, a response packet may alternatively be sent by the second electronic device 300. Correspondingly, a last packet may alternatively be sent by the first electronic device 100. The first electronic device 100 or the second electronic device 300 may calculate L according to formula (1) and formula (2).

It should be noted that the distance L between the first electronic device 100 and the second electronic device 300 may alternatively be obtained through calculation in another manner, without being limited to the manner enumerated above.

2: Determine the signal coming direction of the second electronic device.

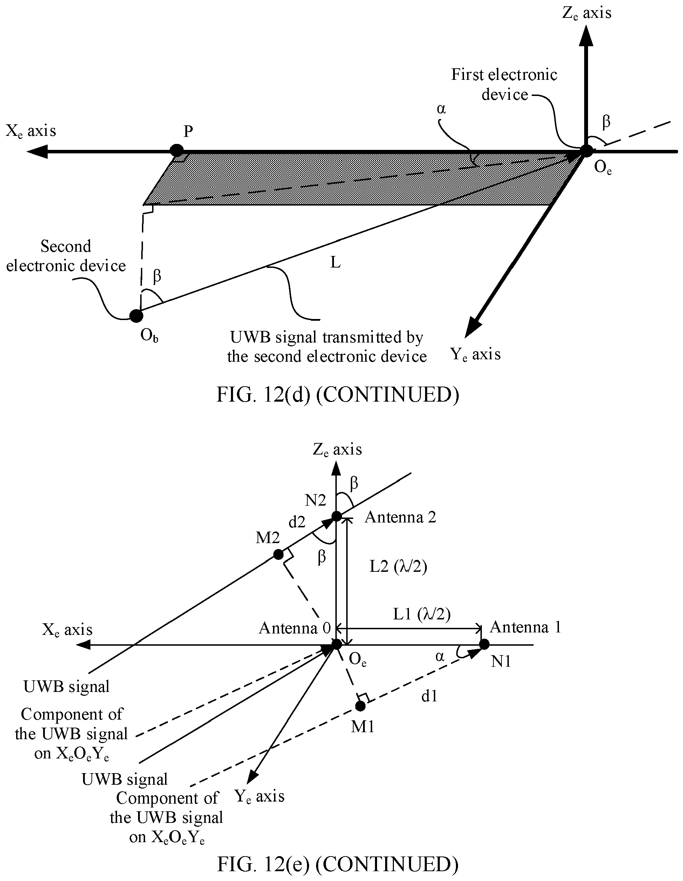

A direction of the second electronic device 200 may be indicated by using a coming direction of a signal that is transmitted by the second electronic device 200 and that is measured by the first electronic device 100. In this application, two angles $\alpha$ and $\beta$ may indicate the coming direction of the signal transmitted by the second electronic device 200. For example, as shown in FIG. 12(d), $\alpha$ is an included angle between a component that is of the UWB signal transmitted by the second electronic device and that is on a plane XeOeYe of the first coordinate system and a negative axis of the Xe axis. Usually, $\alpha \in [0, \pi]$. Herein, $\alpha$ may alternatively be understood, when it is assumed that a vector is constituted from the UWB module of the second electronic device to the UWB module of the first electronic device, as an included angle between a component of the vector on a plane XeOeYe and a negative axis of the Xe axis. Herein, $\beta$ is an included angle between the UWB signal transmitted by the second electronic device and a positive axis of the Ze axis of the first coordinate system. Usually, $\beta \in [0, \pi]$. $\beta$ may alternatively be understood, when it is assumed that the vector is constituted from the UWB module of the second electronic device to the UWB module of the first electronic device, as an included angle between the vector and a positive axis of the Ze axis.

With reference to two antenna distribution types, namely, the L shape and the triangle, in the UWB module of the first electronic device, the following uses three antennas as an example to describe in detail a process of solving $\alpha$

and β.

In an example, in FIG. 12(e), the UWB module of the first electronic device uses a three-antenna structure in the L shape. The first electronic device may determine the included angle α based on a UWB signal received by an antenna 1, and may determine the included angle β based on a UWB signal received by an antenna 2. Usually, L1 and L2 are far less than the distance L between the second electronic device and the first electronic device. As a result, when reaching the UWB module of the first electronic device, the UWB signals may be considered as being parallel. Similarly, when the UWB signals reach the UWB module of the first electronic device, components of the UWB signals on the plane XeOeYe may also be considered as being parallel. As shown in FIG. 12(e), the UWB signals are represented by using two parallel solid lines, and the components of the UWB signals on the plane XeOeYe are represented by using two parallel dotted lines. A distance between an antenna 0 and the antenna 1 is L1, and a distance between the antenna 0 and the antenna 2 is L2. A straight line on which M1N1 is located and that is perpendicular to OeM1 is drawn passing through the point Oe. A straight line on which M2N2 is located and that is perpendicular to OeM2 is drawn passing through the point Oe. N1 is an intersection of a straight line on which the component of the UWB signal on the plane XeOeYe is located and the Xe axis. N2 is an intersection of a straight line on which the UWB signal is located and the Ze axis. An included angle between the UWB signal and the positive axis of the Ze axis is β. An included angle between the component of the UWB signal on the plane XeOeYe and the positive axis of the Xe axis is α. Preferably, both L1 and L2 are $\lambda/2$. Herein, $\lambda$ is a wavelength of the UWB signal. Phases that are of a same UWB signal and that are measured by the antenna 0, the antenna 1, and the antenna 2 are respectively $\varphi_0$, $\varphi_1$, and $\varphi_2$. A phase difference between the antenna 1 and the antenna 0 is that $\Delta\varphi_1 = \varphi_1 - \varphi_0$. A phase difference between the antenna 2 and the antenna 0 is that $\Delta\varphi_2 = \varphi_2 - \varphi_0$. Because $\varphi_0$, $\varphi_1$, and $\varphi_2$ are obtained through measurement, $\Delta\varphi_1$ and $\Delta\varphi_2$ can be obtained through calculation. Because $\lambda/2$ corresponds to a phase difference $\pi$, α and β may be obtained through calculation according to formula (3) and formula (4) with reference to a cosine formula, d1, d2, L1, and L2.

$$\alpha = \arccos\left(\frac{d1}{L1}\right) = \arccos\left(\frac{\Delta\varphi_1 \times (\lambda/2\pi)}{L1}\right) \qquad \text{formula (3)}$$

$$\beta = \arccos\left(\frac{d2}{L2}\right) = \arccos\left(\frac{\Delta\varphi_2 \times (\lambda/2\pi)}{L2}\right) \qquad \text{formula (4)}$$

When L1 is $\lambda/2$,

$$\alpha = \arccos\left(\frac{\Delta\varphi_1 \times (\lambda/2\pi)}{\lambda/2}\right) = \arccos(\Delta\varphi_1/\pi).$$

When L2 is $\lambda/2$,

$$\beta = \arccos\left(\frac{\Delta\varphi_2 \times (\lambda/2\pi)}{\lambda/2}\right) = \arccos(\Delta\varphi_2/\pi).$$

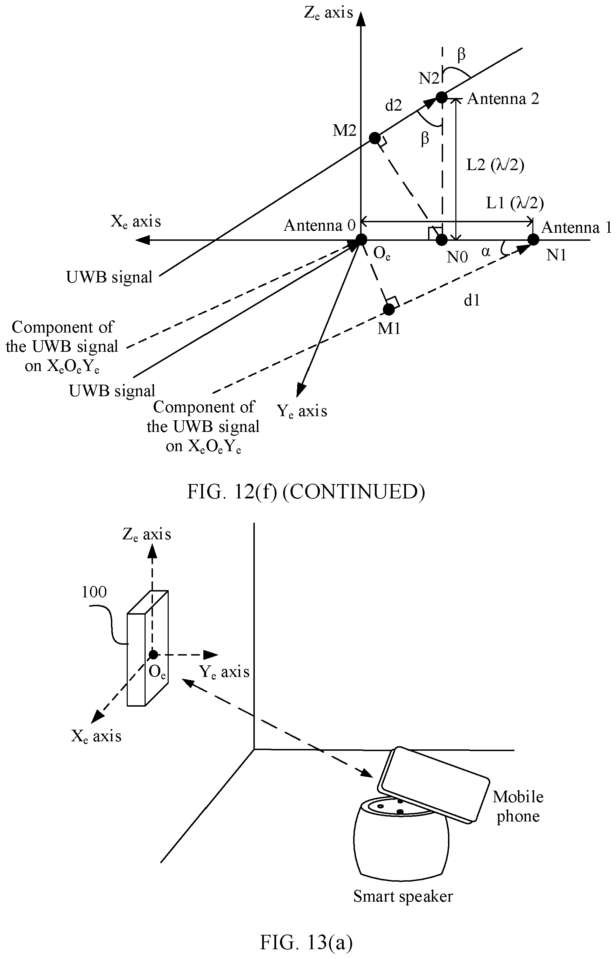

In an example, as shown in FIG. 12(f), the UWB module of the first electronic device uses a three-antenna structure in a shape of the triangle. The same as that in the descriptions in FIG. 12(e), when reaching the UWB module of the first electronic device, UWB signals may be considered as being parallel. Similarly, when the UWB signals reach the UWB module of the first electronic device, components of the UWB signals on the plane XeOeYe may also be considered as being parallel. As shown in FIG. 12(f), the UWB signals are represented by using two parallel solid lines, and the components of the UWB signals on the plane XeOeYe are represented by using two parallel dotted lines. A distance between an antenna 0 and an antenna 1 is L1. A distance between the projections of the antenna 0 and an antenna 2 on the Ze axis is L2. A point N0 is the center point of the antenna 1 and the antenna 0 on the Xe axis. A straight line on which M1N1 is located and that is perpendicular to OeM1 is drawn passing through the point Oe. A straight line on which M2N2 is located and that is perpendicular to N0M2 is drawn passing through the point N0. N1 is an intersection of a straight line on which a component of the UWB signal on the plane XeOeYe is located and the Xe axis. N2 is an intersection of a straight line on which the UWB signal is located and the Ze axis.

An included angle between the UWB signal and the positive axis of the Ze axis is β. An included angle between the component of the UWB signal on the plane XeOeYe and the negative axis of the Xe axis is α. Preferably, both L1 and L2 are $\lambda/2$. Herein, $\lambda$ is a wavelength of the UWB signal.

A calculation formula for α is the same as formula (3). Details are not described herein again. When β is calculated, a difference between a phase $\varphi_0 + \Delta\varphi_1/2$ obtained when the UWB signal transmitted by the second electronic device reaches N0 and a phase $\varphi_2$ obtained when the UWB signal transmitted by the second electronic device reaches the antenna 2 is first calculated, that is,

$$\varphi_2 - (\varphi_0 + \Delta\varphi_1/2) = \varphi_2 - \varphi_0 - \Delta\varphi_1/2 = \Delta\varphi_2 - \Delta\varphi_1/2$$

Then, a wave path difference d2 obtained when the UWB signal transmitted by the second electronic device reaches N0 and the UWB signal transmitted by the second electronic device reaches the antenna 2 is calculated according to formula (5). Next, β is obtained through calculation according to formula (6).

$$d2 = (\Delta\varphi_2 - \Delta\varphi_1/2) \times (\lambda/2\pi) \qquad \text{formula (5)}$$

$$\beta = \arccos(d2/L2) = \arccos(\frac{(\Delta\varphi_2 - \Delta\varphi_1/2) \times (\lambda/2\pi)}{L2}) \qquad \text{formula (6)}$$

3: Calculate the coordinates of the second electronic device in the first coordinate system based on the distance L between the second electronic device and the first electronic device and the signal coming direction of the second electronic device.

As shown in FIG. 12(d), the first electronic device may calculate, according to formula (7) based on the distance L between the second electronic device and the first electronic device and the signal coming direction (the angle α and the angle β) of the second electronic device, coordinates ($x^e$, $y^e$, $z^e$) of the second electronic device in the first coordinate system established by the first electronic device.

$$\begin{cases} x^e = L\sin\beta\cos\alpha \\ y^e = L\sin\beta\sin\alpha \\ z^e = -R\cos\beta \end{cases} \qquad \text{formula (7)}$$

The first electronic device 100 and the second electronic device 300 may obtain the distance L between the first electronic device 100 and the second electronic device 300 through, for example, communication interaction shown in FIG. 12(c). The first electronic device 100 may determine the coming direction of the received UWB signal based on the UWB signal. In this way, the first electronic device 100 can obtain the direction and the distance of the second electronic device 300 relative to the first electronic device 100, to obtain the coordinates of the second electronic device 300 in the first coordinate system.

When some second electronic devices each include a UWB module, the coordinates of the second electronic device in the first coordinate system may be obtained in real time or cyclically through UWB signal communication between the second electronic device and the first electronic device.

When some second electronic devices each include no UWB module, for example, a smartphone includes a UWB module, a smart speaker includes no UWB module, or a smart air conditioner includes no UWB module, there may be two marking manners.

Marking manner 1: As shown in FIG. 13(a), the smartphone is moved to the smart speaker, coordinates of the smartphone in the first coordinate system are obtained through UWB signal communication between the smartphone and the first electronic device. The coordinates are marked as coordinates of the smart speaker in the first coordinate system.

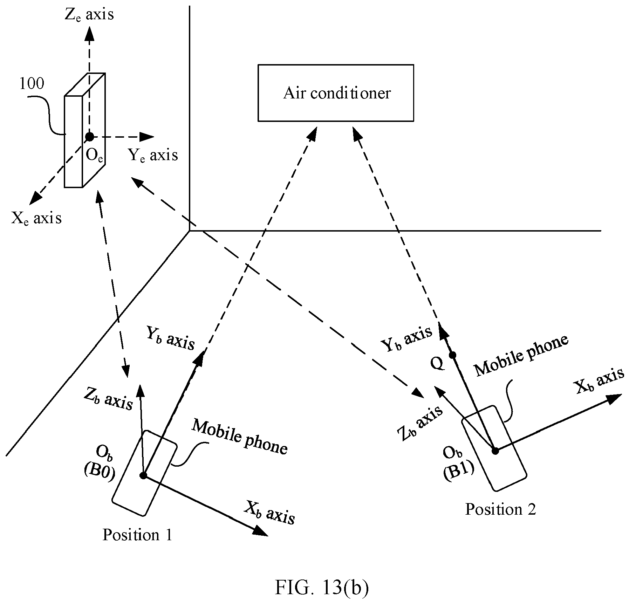

Marking manner 2: As shown in FIG. 13(b), the smartphone is first used to point to the smart air conditioner at a position 1, so that the Yb axis of the second coordinate system faces a first point (for example, a switch button) on the smart air conditioner. Coordinates 1 of the position 1 in the first coordinate system are obtained through UWB signal communication between the smartphone and the first electronic device. The smartphone further includes an IMU module. An attitude angle 1 of the smartphone at the position 1 is determined by using the IMU module. A straight line 1 established when the smartphone points to the first point on the smart air conditioner at the position 1 may be determined based on the coordinates 1 and the attitude angle 1. Then, the smartphone is used to point to the smart air conditioner at a position 2, so that the Yb axis of the second coordinate system faces the first point on the smart air conditioner. Coordinates 2 of the position 2 in the first coordinate system are obtained through UWB signal communication between the smartphone and the first electronic device. An attitude angle 2 of the smartphone at the position 2 is determined by using the IMU module. A straight line 2 established when the smartphone points to a second point on the smart air conditioner at the position 2 may be determined based on the coordinates 2 and the attitude angle 2. Coordinates, namely, coordinates of the smart air conditioner in the first coordinate system, of an intersection of the straight line 1 and the straight line 2 are calculated.

It should be noted that the smart speaker or the smart air conditioner are merely examples. The smart speaker is for representing a second electronic device easily touched by a mobile device, for example, the smartphone, held by the user. The smart air conditioner is for representing a second electronic device uneasily touched by a mobile device, for example, the smartphone, held by the user.

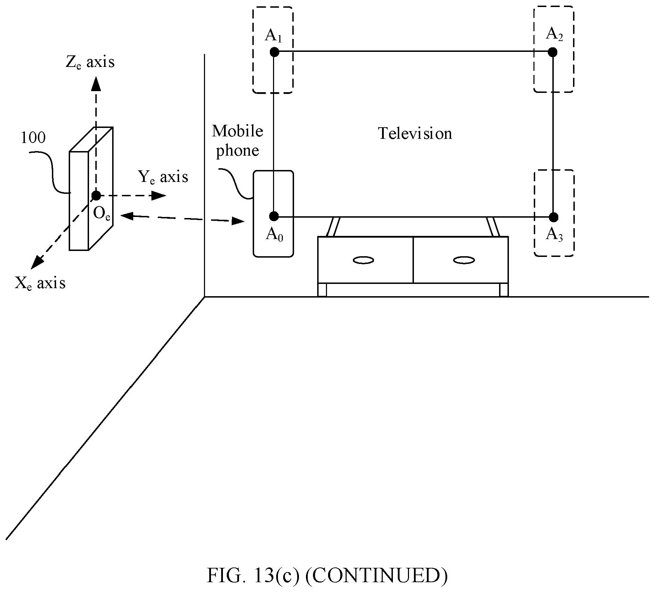

When some second electronic devices each include no UWB module, for example, a smartphone includes a UWB module, and a smart television includes no UWB module, the smart television may be marked a plurality of times by using the smartphone including the UWB module. As shown in FIG. 13(c), the smartphone is moved to a point A0 of the smart television to mark a position. The first electronic device obtains coordinates of a lower left corner contour point of the smart television. Correspondingly, in the foregoing manner, the first electronic device may obtain coordinates of a plurality of contour points (for example, the lower left corner contour point, an upper left corner contour point, and a lower right corner contour point) of the smart television. If A0, A1, A2, and A3 are marked, the first electronic device may obtain coordinates of four corner contour points. If A0, A1, and A2 are marked, the first electronic device may obtain coordinates of three corner contour points. If A0 and A2 are marked, the first electronic device may obtain coordinates of two corner contour points. In this application, which corner contour points are selected from the four corner contour points is not limited provided that a contour range of the smart television can be finally obtained. Optionally, the contour range may be a contour range of a display area of the smart television. Optionally, the display area may include a frame of a display of the smart television, or may include no frame of a display of the smart television.

Preferably, the smartphone may be moved to more than three different positions of the display area of the smart television. When being moved to one position of the display area of the smart television, coordinates of the smartphone are marked as coordinates of the position of the display area of the smart television based on input of the user. In this way, the operation is repeated, and coordinates of the more than three different positions of the display area of the smart television may be marked. Optionally, coordinates of three positions of the display area of the smart television are marked. Similarly, coordinates of a position in a front area of the smart television may be marked. In a process of marking the more than three different positions of the display area of the smart television, pointing directions, orientations, and the like of the smartphone at the more than three different positions are not required to be consistent. In other words, an orientation, a pointing direction, and the like of the smart television during marking are not limited.

Optionally, the more than three positions of the display area of the smart television may be more than three positions (for example, a 1/2 place and a 1/3 place) on an edge contour of the display area (for example, a horizontal side contour or a vertical contour of the display area) of the smart television, or may be at least three positions in a central part of the display area of the smart television.

Optionally, the second electronic device including the UWB module may not only mark the second electronic device including no UWB module, but also mark a spatial area, for example, mark a range of a three-dimensional spatial area. The following uses, as an example, the smartphone including the UWB module.

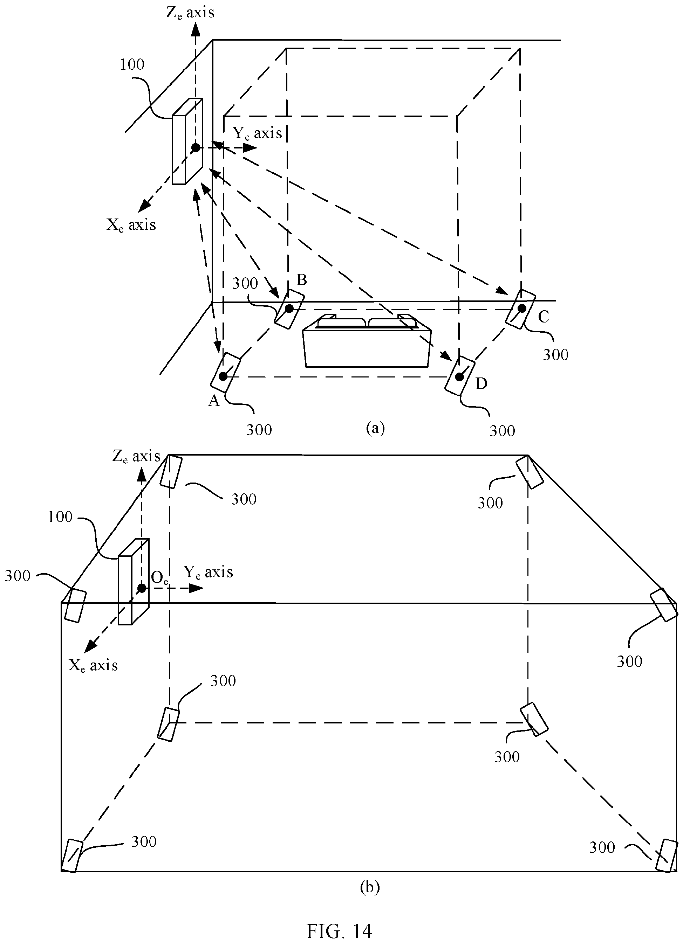

For example, as shown in (a) in FIG. 14, the smartphone is separately placed at four positions A, B, C, and D. The first electronic device 100 separately obtains coordinates ($x_A^e$, $y_A^e$, $z_A^e$), ($x_B^e$, $y_B^e$, $z_B^e$), ($x_C^e$, $y_C^e$, $z_C^e$), and ($x_D^e$, $y_D^e$, $z_D^e$) of the four positions A, B, C, and D in the first coordinate system based on the foregoing principle. A vertical line ($x_A^e$, $y_A^e$, ze) passing through the position A, a vertical line ($x_B^e$, $y_B^e$, ze) passing through the position B, a vertical line ($x_C^e$, $y_C^e$, ze) passing through the position C, and a vertical line ($x_D^e$, $y_D^e$, ze) passing through the position D constitute a three-dimensional area through enclosure. Herein, ze may be a preset value, or may be a height of the room or the area.

In another example, as shown in (b) in FIG. 14, the smartphone is separately placed at eight vertex positions of a three-dimensional spatial area. The first electronic device 100 separately obtains coordinates of the eight vertex positions in the first coordinate system based on the foregoing principle. In this way, a coordinate range of the three-dimensional spatial area can be obtained. For example, the three-dimensional spatial area is a room. In other words, a coordinate range of the room in the first coordinate system is obtained. The foregoing uses only the vertex position as an example. An actual area may be determined based on a position in which the smartphone is placed. For example, the smartphone may not be placed at the vertex position. In this way, a determined area is an area less than an entire area of the room.

(5) UWB-based conversion between different coordinate systems

In this application, coordinate conversion in the different coordinate systems may be performed in a vector manner. Specifically, distances between two points are the same in the different coordinate systems, but direction representations of vectors constituted by the two points may be different in the different coordinate systems. For example, coordinates of the point Oe in the first coordinate system may be converted into coordinates of the point Oe in the second coordinate system in the vector manner. For example, conversion is performed in a manner of $\overrightarrow{O_eO_b}$. Distances (which are both L) of the vector $\overrightarrow{O_eO_b}$ in the first coordinate system and the second coordinate system are the same, but a direction that is of the vector $\overrightarrow{O_eO_b}$ and that is represented by using the first coordinate system is different from a direction that is of the vector $\overrightarrow{O_eO_b}$ and that is represented by using the second coordinate system. By obtaining a relative direction change between the first coordinate system and the second coordinate system, the direction that is of the vector $\overrightarrow{O_eO_b}$ and that is represented by using the second coordinate system may be learned when the direction that is of the vector $\overrightarrow{O_eO_b}$ and that is represented by using the first coordinate system is known. The coordinates of the point Oe in the second coordinate system may be obtained with reference to coordinates of the point Oe and the point Ob in the first coordinate system and coordinates of the point Ob in the second coordinate system.

The foregoing coordinate conversion manner of a same point in the different coordinate systems is merely an example. A coordinate conversion manner is not limited in this application.

A relative direction change of the different coordinate systems may be expressed by using a pitch (pitch) φ, a yaw (yaw) ψ, and a roll (roll) θ that are between the coordinate systems, for example, a pitch, a yaw, and a roll of the second coordinate system relative to the first coordinate system, and a pitch, a yaw, and a roll of the third coordinate system relative to the first coordinate system. The yaw may also be referred to as a drift angle or a heading angle. In order to obtain a pitch, a yaw, and a roll between the three coordinate systems, it is necessary to first assume that the coordinate origins of the three coordinate systems are converged to one point. For example, the coordinate origin Oe of the UWB base station is moved in parallel to the coordinate origin Ob of the second coordinate system. Correspondingly, the first coordinate system is also moved accordingly. Definitions of the pitch, the yaw, and the roll are well known to a person skilled in the art. Details are not described herein again.

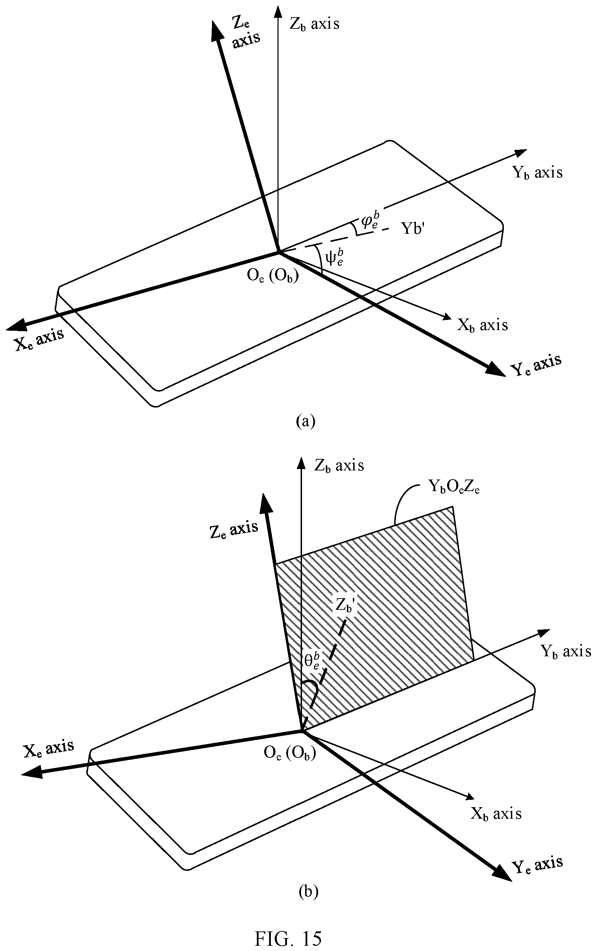

For example, FIG. 15 shows a pitch $\varphi_e^b$, a yaw $\psi_e^b$, and a roll $\theta_e^b$ of the second coordinate system relative to the first coordinate system.

The coordinate origin Ob of the second coordinate system coincides with the coordinate origin Oe of the first coordinate system after parallel movement. The three axes of the second coordinate system are the Xb axis, the Yb axis, and the Zb axis. The three axes of the first coordinate system are the Xe axis, the Ye axis, and the Ze axis. As shown in (a) in FIG. 15, OeYb' (namely, ObYb') is a projection of the Yb axis on the plane XeOeYe of the first coordinate system. As shown in (b) in FIG. 15, OeZb' (namely, ObZb') is a projection of the Zb axis on a plane YbObZe.

The pitch $\varphi_e^b$ of the second coordinate system relative to the first coordinate system is an included angle between the Yb axis of the second coordinate system and the plane XeOeYe of the first coordinate system. In other words, $\varphi_e^b$ is an included angle between ObYb' and the Yb axis. When a component of ObYb on the Ze axis is located on the positive axis of the Ze axis, $\varphi_e^b$ is positive. When a component of ObYb on the Ze axis is located on a negative axis of the Ze axis, $\varphi_e^b$ is negative.

The yaw $\psi_e^b$ of the second coordinate system relative to the first coordinate system is an included angle between the projection of the Yb axis of the second coordinate system on the plane XeOeYe of the first coordinate system and the Ye axis of the first coordinate system. In other words, $\psi_e^b$ is an included angle between ObYb' and the Ye axis. When a component of ObYb' on the Xe axis is located on the positive axis of the Xe axis, $\psi_e^b$ is positive. When a component of ObYb' on the Xe axis is located on the negative axis of the Xe axis, $\psi_e^b$ is negative.

The roll $\theta_e^b$ of the second coordinate system relative to the first coordinate system is an included angle between the Zb axis of the second coordinate system and a plane YbOeZe. In other words, $\theta_e^b$ is an included angle between ObZb' and the Zb axis. When a component that is of a projection of a positive axis of the Zb axis on the plane YbOeZe and that is on the Xb axis is located on a positive axis of the Xb axis, $\theta_e^b$ is positive. When a component that is of a projection of a positive axis of the Zb axis on the plane YbOeZe and that is on the Xb axis is located on a negative axis of the Xb axis, $\theta_e^b$ is negative.

Alternatively, when a component that is of a projection of ObZb' on a plane XbObYb and that is on the Xb axis is located on a positive axis of the Xb axis, $\theta_e^b$ is positive. When a component that is of a projection of ObZb' on a plane XbObYb and that is on the Xb axis is located on a negative axis of the Xb axis, $\theta_e^b$ is negative.

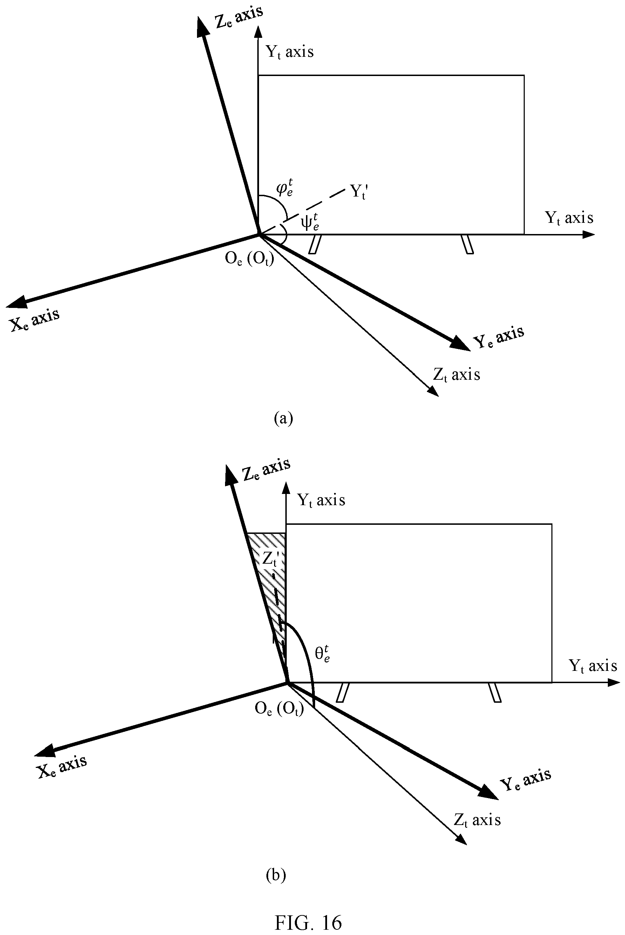

For example, FIG. 16 shows a pitch $\varphi_e^t$, a yaw $\psi_e^t$, and a roll $\theta_e^t$ of the third coordinate system relative to the first coordinate system.

As shown in FIG. 16, the coordinate origin Ot of the third coordinate system coincides with the coordinate origin Oe of the first coordinate system after parallel movement. The three axes of the third coordinate system are the Xt axis, the Yt axis, and the Zt axis. The three axes of the first coordinate system are the Xe axis, the Ye axis, and the Ze axis. As shown in (a) in FIG. 16, OeYt' (namely, OtYt') is a projection of the Yt axis on the plane XeOeYe of the first coordinate system. As shown in (b) in FIG. 16, OeZt' (namely, OtZt') is a projection of the Zt axis on a plane YtOeZe.

The pitch $\varphi_e^t$ of the third coordinate system relative to the first coordinate system is an included angle between the Yt axis of the third coordinate system and the plane XeOeYe of the first coordinate system. In other words, $\varphi_e^t$ is an included angle between OeYt' (namely, OtYt') and the Yt axis. When a component of OeYt on the Ze axis is located on the positive axis of the Ze axis, $\varphi_e^t$ is positive. When a component of OeYt on the Ze axis is located on the negative axis of the Ze axis, $\varphi_e^t$ is negative.

The yaw $\psi_e^t$ of the third coordinate system relative to the first coordinate system is an included angle between the projection of the Yt axis of the third coordinate system on the plane XeOeYe of the first coordinate system and the Ye axis of the first coordinate system. In other words, $\psi_e^t$ is an included angle between OeYt' (namely, OtYt') and the Ye axis. When a component of OeYt' on the Xe axis is located on the positive axis of the Xe axis, $\psi_e^t$ is positive. When a component of OeYt' on the Xe axis is located on the negative axis of the Xe axis, $\psi_e^t$ is negative.

The roll $\theta_e^t$ of the third coordinate system relative to the first coordinate system is an included angle between the Zt axis of the third coordinate system and the plane YtOeZe. In other words, $\theta_e^t$ is an included angle between OtZt' and the Zt axis. When a component that is of a projection of a positive axis of the Zt axis on the plane YtOeZe and that is on the Xt axis is located on a positive axis of the Xt axis, $\theta_e^t$ is positive. When a component that is of a projection of a positive axis of the Zt axis on the plane YtOeZe and that is on the Xt axis is located on a negative axis of the Xt axis, $\theta_e^t$ is negative.

Alternatively, when a component that is of a projection of OtZt' on a plane XtOtYt and that is on the Xt axis is located on a positive axis of the Xt axis, $\theta_e^t$ is positive. When a component that is of a projection of OtZt' on a plane XtOtYt and that is on the Xt axis is located on a negative axis of the Xt axis, $\theta_e^t$ is negative.

A direction change of the third coordinate system relative to the first coordinate system may be expressed by using an attitude matrix $C_e^t$.

$$C_e^t = \begin{bmatrix} cos\theta_e^t cos\psi_e^t + sin\varphi_e^t sin\theta_e^t sin\psi_e^t & -cos\theta_e^t sin\psi_e^t + sin\varphi_e^t sin\theta_e^t cos\psi_e^t & -cos\varphi_e^t sin\theta_e^t \\ cos\varphi_e^t sin\psi_e^t & cos\varphi_e^t cos\psi_e^t & sin\varphi_e^t \\ sin\theta_e^t cos\psi_e^t - sin\varphi_e^t cos\theta_e^t sin\psi_e^t & -sin\theta_e^t sin\psi_e^t - sin\varphi_e^t cos\theta_e^t cos\psi_e^t & cos\varphi_e^t cos\theta_e^t \end{bmatrix}$$

formula (8)

The foregoing formula (8) for the attitude matrix $C_e^t$ is the conventional technology, and may be obtained by a person skilled in the art from the conventional technology, for example, the attitude matrix in Chapter 1.2.1 in the book Inertial Navigation (Beijing: Science Press, ISBN 7-03-016428-8, Qin Yongyuan, first edition in May 2006, first printing in May 2006).

The foregoing only shows examples of conversion of the second coordinate system and the third coordinate system relative to the first coordinate system. A person skilled in the art should understand that conversion of another coordinate system is also performed according to the same formula based on the foregoing principle, and only a corresponding parameter is modified.

Optionally, the second electronic device may include the IMU module. Optionally, the IMU module of the second electronic device is first calibrated. To be specific, a coordinate system on which a pitch, a yaw, and a roll that are output by the IMU module of the second electronic device are based is calibrated to the first coordinate system, or $C_b^e$ output by the IMU module of the second electronic device is calibrated to $\begin{bmatrix} 1 & 0 & 0 \\ 0 & 1 & 0 \\ 0 & 0 & 1 \end{bmatrix}$ . In this way, as the second electronic device is subsequently moved, the pitch, the yaw, and the roll that are output by the IMU module of the second electronic device are the pitch, the yaw, and the roll of the second coordinate system relative to the first coordinate system.

Alternatively, $C_b^e$ output by the IMU module of the second electronic device is transposed, to reflect a direction change of the second coordinate system relative to the first coordinate system.

For example, the second coordinate system of the second electronic device may be enabled to be parallel to the first coordinate system (for example, the Xb axis is parallel to the Xe axis, the Yb axis is parallel to the Ye axis, and the Zb axis is parallel to the Ze axis), and positive directions of corresponding coordinate axes of the two coordinate systems are enabled to be the same (for example, the positive direction of the Xb axis is the same as the positive direction of the Xe axis, the positive direction of the Yb axis is the same as the positive direction of the Ye axis, and the positive direction of the Zb axis is the same as the positive direction of the Ze axis). In this case, a pitch, a yaw, and a roll that are output by the IMU module of the second electronic device are set to 0.

For example, the second coordinate system of the second electronic device may be enabled to be parallel to the first coordinate system, and positive directions of all axes of the two coordinate systems are enabled to be the same.

In this case, the IMU module of the second electronic device outputs $C_b^e = \begin{bmatrix} 1 & 0 & 0 \\ 0 & 1 & 0 \\ 0 & 0 & 1 \end{bmatrix}$ through adjustment.

(6) Establishment of a fourth coordinate system (millimeter-wave radar coordinate system)

The millimeter-wave radar module 160 of the first electronic device 100 is configured to implement a function of the millimeter-wave radar. A plurality of antennas in the millimeter-wave radar have a distance difference in a transverse direction (for example, a horizontal direction) and/or a longitudinal direction (for example, a vertical direction). A coordinate system (the fourth coordinate system) of the millimeter-wave radar may be established by using the distance difference between the antennas.

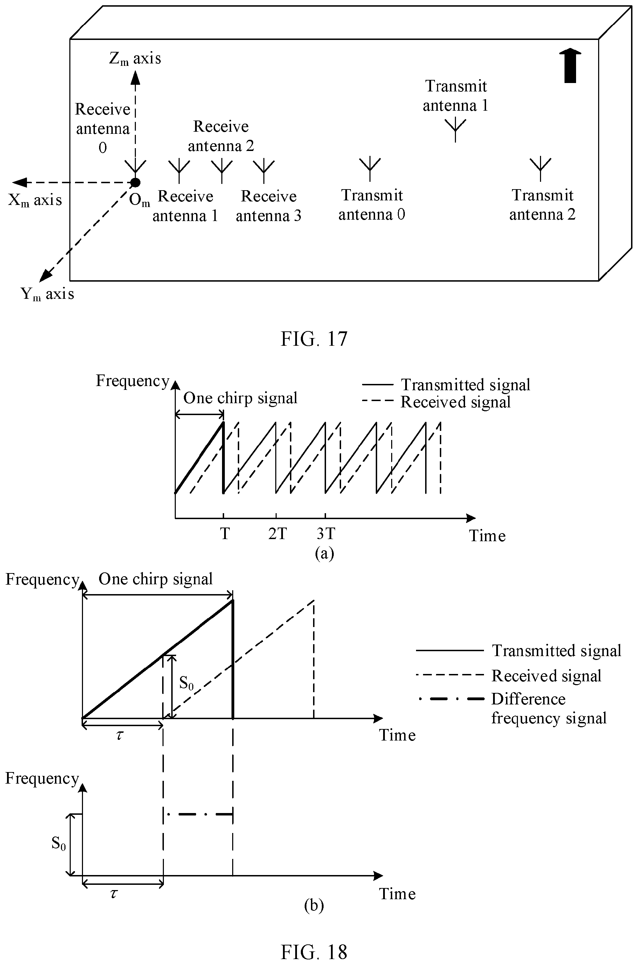

In an example, the millimeter-wave radar module 160 includes three transmit antennas and four receive antennas. For example, as shown in FIG. 17, the three transmit antennas and the four receive antennas are located on a same longitudinal plane (for example, a vertical plane). The three transmit antennas are distributed in a shape of a triangle on the longitudinal plane. A transmit antenna 0 and a transmit antenna 2 are located on a same transverse plane. The four receive antennas are located on a same transverse line (for example, a horizontal line). In an implementation, a point (for example, an end point on one side) on the receive antenna 0 is used as an origin Om of the fourth coordinate system. A connection line between the receive antenna 0 and a receive antenna 1 is used as an Xm axis of the fourth coordinate system. In addition, a direction in which the receive antenna 1 points to the receive antenna 0 is a positive direction of the Xm axis. A straight line that passes through the origin Om and is perpendicular to the Xm axis is a Zm axis of the fourth coordinate system. In addition, a direction pointing to a zenith direction is a positive direction of the Zm axis. Then, a Ym axis of the fourth coordinate system and a positive direction of the Ym axis are determined with reference to a rule of a right-hand rectangular coordinate system. Optionally, prompt information may be marked on the outer surface of the first electronic device 100, and is for prompting a correct installation manner or a correct placement manner. In this way, the three transmit antennas and the four receive antennas of the millimeter-wave radar module 160 in the first electronic device 100 are located on the same longitudinal plane. Names of the three axes in the fourth coordinate system and positive directions of the three axes may alternatively be defined in another manner. Details are not described herein again. The Xm axis, the Ym axis, and the Zm axis in the fourth coordinate system shown in FIG. 17 are used as an example for description in embodiments of this application.

It should be noted that the point on the receive antenna 0 is used as the origin of the fourth coordinate system, which is merely an example. A point on another antenna (for example, the receive antenna 1) may alternatively be the origin of the fourth coordinate system.

Optionally, the fourth coordinate system may be pre-established. An installation worker only needs to install the first electronic device 100 as required. For example, before delivery of the first electronic device 100, the fourth coordinate system has been established, and related information of the fourth coordinate system is stored locally or on a server. When the first electronic device 100 is started, or when the first electronic device 100 receives a specific trigger, the first electronic device 100 invokes the related information of the fourth coordinate system locally or from the server. Unless otherwise specified, the server in this application may be a hub device 200 in a home, or may be a cloud server.

Preferably, the outer surface of the first electronic device 100 may have only one piece of marked prompt information. The marked prompt information indicates installation of the first electronic device. In this way, the transmit antenna and the receive antenna of the millimeter-wave radar module, and the antenna of the UWB module all meet a preset requirement.

(7) Calculation of coordinates in the fourth coordinate system

1: Determine a distance between a reflection point and the millimeter-wave radar module, and a radial speed of the reflection point.

(1) Determine the distance between the reflection point and the millimeter-wave radar module.

The transmit antenna of the millimeter-wave radar module 160 transmits a signal. The signal is reflected by the reflection point, and then is received by the receive antenna of the millimeter-wave radar module 160. A frequency at which an LFMCW millimeter-wave radar transmits a signal increases linearly as time varies. This type of signal is referred to as a chirp (Chirp) signal. With reference to FIG. 5B, the millimeter-wave radar module 160 receives the chirp signal through the receive antenna. The received signal and a local oscillator signal are mixed by the mixer, and a difference frequency signal is output. The difference frequency signal is filtered and amplified by the filter and the sampling module, and then undergoes analog-to-digital conversion to become a digital difference frequency signal.

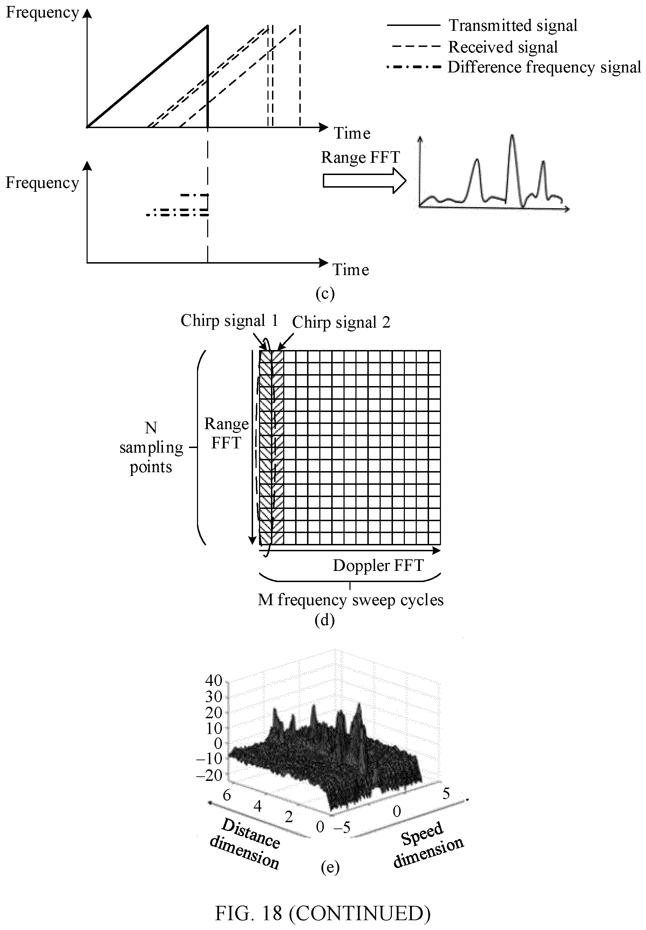

For example, FIG. 18 is a schematic diagram of a principle of determining the distance and the radial speed of the reflection point by the millimeter-wave radar according to an embodiment of this application. As shown in (a) in FIG. 18, a solid line is the transmitted signal of the millimeter-wave radar module 160, and a dotted line is the received signal of the millimeter-wave radar module 160. For a chirp signal, one frequency sweep cycle Tc is usually at a microsecond ($\mu$s) level, and a frequency modulation rate S0 (namely, a frequency change rate) reaches an order of magnitude of 1012 (unit: Hz/s). In this embodiment of this application, a chirp signal in one frequency sweep cycle Tc is referred to as one chirp signal. Usually, it is considered that a spatial position of the target within one frequency sweep cycle Tc remains unchanged.

As shown in (b) in FIG. 18, in one frequency sweep cycle Tc, the transmit antenna transmits the chirp signal. After duration $\tau$, the receive antenna receives a signal reflected back from the reflection point. A frequency difference between the received signal and the transmitted signal is $\tau * S0$. The frequency difference between the received signal and the transmitted signal is a frequency f0 of the difference frequency signal. In other words, f0=$\tau$ *S0. Herein, $\tau$=2d/c, d is the distance between the reflection point and the millimeter-wave radar module (which may also be considered as the first electronic device), and c is a rate at which the chirp signal is transmitted in the air, and is generally a light speed through selection. Therefore, a relationship between the distance d of the reflection point and the frequency f0 of the difference frequency signal is shown in formula (9).

$$d = f0 \times c / (2 \times S0) \quad \text{formula (9)}$$

A time-domain signal may be converted into a frequency-domain signal through a Fourier transform. A sine wave in time domain correspondingly generates a peak value in frequency domain. The peak value corresponds to the frequency f0 of the difference frequency signal. For example, as shown in (c) in FIG. 18, the transmitted signal of the millimeter-wave radar module is reflected back by three reflection points, to obtain three signals. The millimeter-wave radar module receives the three received signals, and separately obtains three corresponding difference frequency signals. A fast Fourier transform (fast Fourier transform, FFT) is performed on the three difference frequency signals to obtain a range (range) curve (referred to as a range FFT (range FFT)), and a spectrum having three different separated peaks may be generated. Each peak value indicates that there is one reflection point in a corresponding place. A frequency of the difference frequency signal may be obtained by calculating a frequency corresponding to the peak value. A distance of the reflection point may be obtained by detecting the frequency of the difference frequency signal.

Similarly, a Doppler FFT (Doppler FFT) is performed on a plurality of difference frequency signals from a same reflection point within different frequency sweep cycles Tc, to obtain a phase difference between the plurality of difference frequency signals. A radial speed of the reflection point may be obtained by detecting the phase difference between the plurality of difference frequency signals. For a detailed principle, refer to the conventional technology. Details are not described herein again.

The millimeter-wave radar module receives the chirp signal, performs mixing, power amplification, and filtering on the transmitted signal and the received signal to obtain the difference frequency signal. The analog-to-digital conversion is performed on the difference frequency signal, to obtain the digital difference frequency signal. The distance and the radial speed of the reflection point may be obtained by detecting the digital difference frequency signal.

For example, as shown in (d) in FIG. 18, a frame of data of the millimeter-wave radar module is data within one radar scanning cycle. One radar scanning cycle includes M frequency sweep cycles Tc. There are N sampling points of a difference frequency signal in each frequency sweep cycle Tc.

A one-dimensional range FFT may be performed on a digital difference frequency signal within one frequency sweep cycle Tc, to obtain a frequency of the difference frequency signal. In this way, the distance of the reflection point can be calculated based on the frequency of the difference signal. A quantity of points in the range FFT is a quantity N of sampling points of the difference frequency signal corresponding to the chirp signal.

A one-dimensional Doppler FFT may be performed on digital difference frequency signals from a same reflection point within a plurality of adjacent frequency sweep cycles Tc, to obtain a phase difference between the plurality of difference frequency signals. In this way, the radial speed of the reflection point can be calculated based on the phase difference between the plurality of difference frequency signals. A quantity of points in the Doppler FFT is a quantity of frequency sweep cycles included in the frame of data.

A combined operation of the range FFT and the Doppler FFT may be considered as a two-dimensional FFT performed on the frame of data. In embodiments of this application, a frame of data obtained after two-dimensional FFT processing is referred to as a frame of two-dimensional FFT data. For example, (e) in FIG. 18 is a schematic diagram of the frame of two-dimensional FFT data obtained by the millimeter-wave radar module. As shown in (e) in FIG. 18, there are a plurality of peak values in the frame of two-dimensional FFT data. Each peak value indicates that there is one reflection point in a corresponding place. A value of the reflection point in a distance dimension or a speed dimension is a distance of the reflection point or a radial speed of the reflection point.

(2) Determine a signal coming direction of the reflected signal from the reflection point.

The signal coming direction of the reflected signal includes a transverse coming direction (for example, a horizontal coming direction) and a longitudinal coming direction (for example, a vertical coming direction). A yaw may be used to represent a transverse coming direction of a signal, and a pitch may be used to represent a longitudinal coming direction of the signal. In an implementation, the yaw and the pitch may be calculated by using a phase difference between received signals of the plurality of receive antennas of the millimeter-wave radar module.

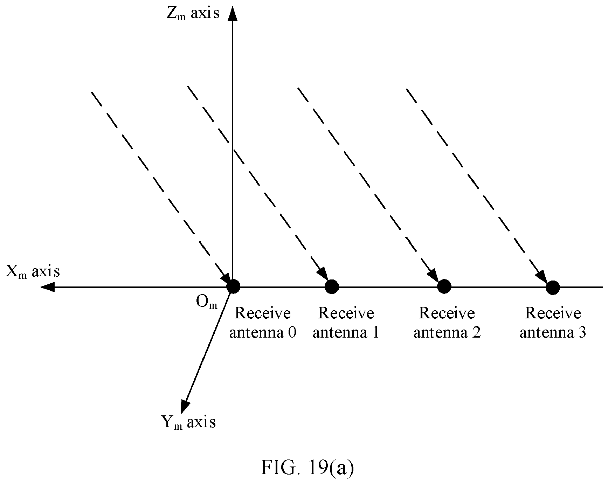

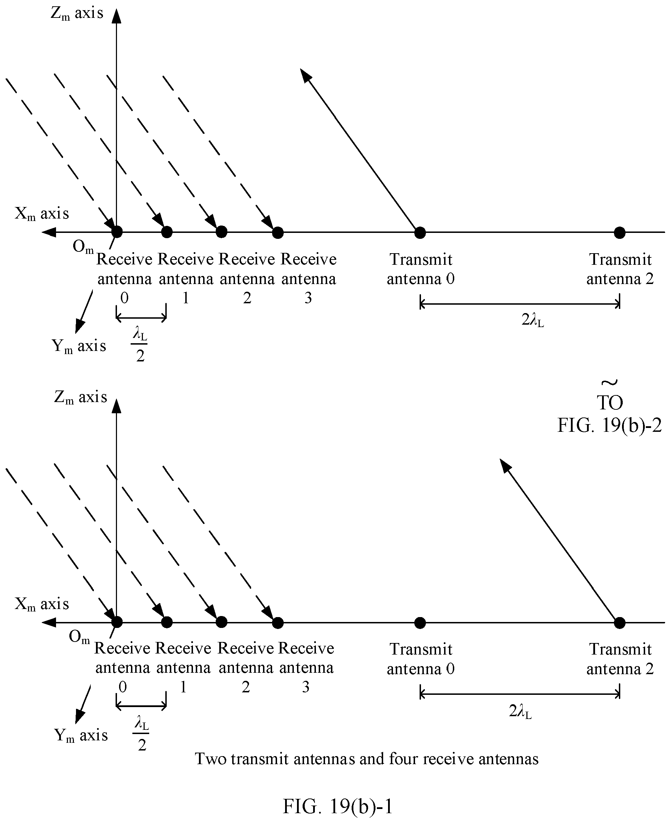

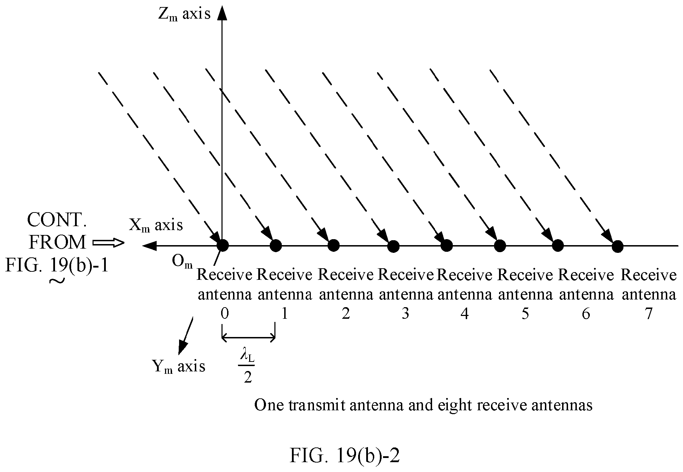

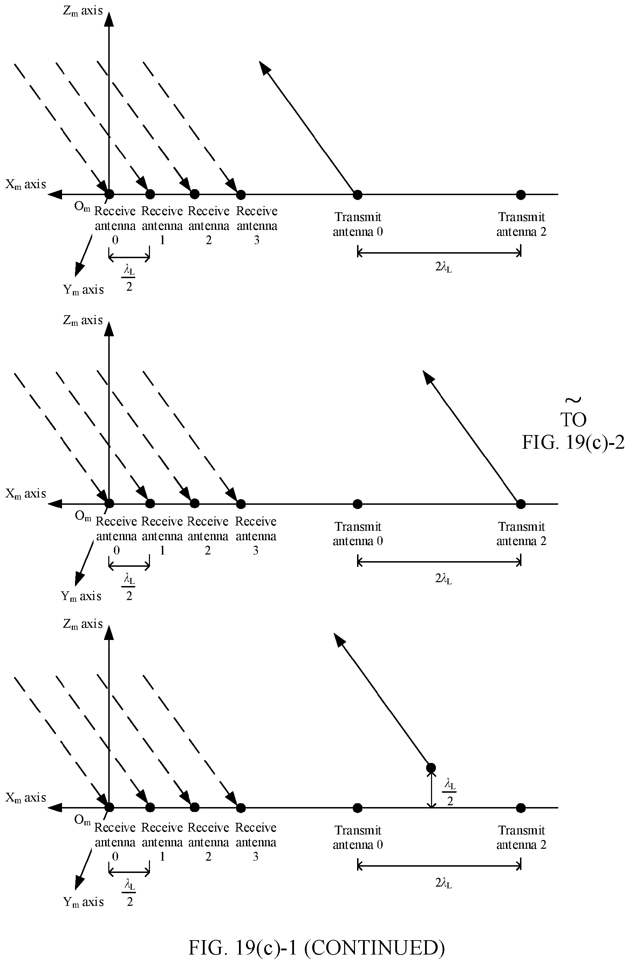

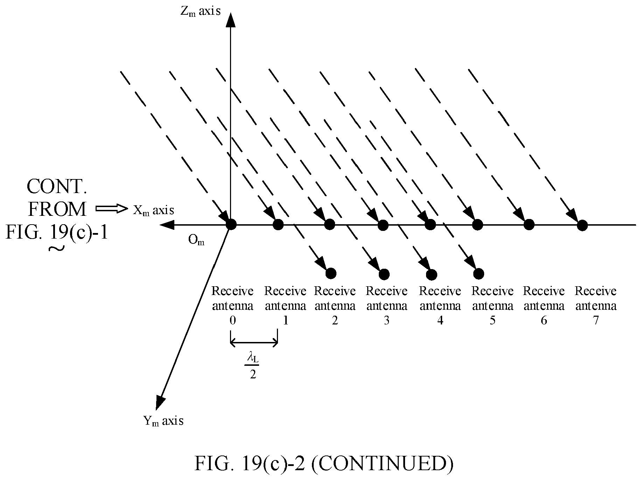

For example, FIG. 19(a) to FIG. 19(c)-2 are a schematic diagram of a principle of determining the signal coming direction of the reflected signal from the reflection point by the millimeter-wave radar according to an embodiment of this application. As shown in FIG. 19(a), the millimeter-wave radar module includes four receive antennas. A phase difference between reflected signals that reach any two different receive antennas after signals transmitted by a same transmit antenna are reflected by the reflection point may be used by the millimeter-wave radar module to measure a yaw of the reflected signal. For a specific manner in which the millimeter-wave radar module determines a transverse coming direction of the reflected signal based on a phase difference obtained when signals reach two adjacent receive antennas, refer to the method for calculating the angle $\alpha$ in FIG. 12(e). Details are not described herein again.

In an implementation, precision of measuring the signal coming direction may be improved by increasing a quantity of antennas. In an example, the antennas of the millimeter-wave radar module are of the distribution structure shown in (a) in FIG. 8. When the millimeter-wave radar module transmits signals, the transmit antenna may be switched by changing the relay switch, to separate signals of different transmit antennas by the receive antennas. For example, as shown in FIG. 19(b)-1 and FIG. 19(b)-2, when a transmit antenna 0 and a transmit antenna 2 alternately transmit signals, an effect that two transmit antennas and four receive antennas are equivalent to one transmit antenna and eight receive antennas may be implemented based on a principle that a phase difference is generated by a position difference between the antennas. For example, in FIG. 19(b)-1 and FIG. 19(b)-2, a distance between the receive antennas is $\lambda L/2$, and a distance between the transmit antenna 0 and the transmit antenna 2 is $2\lambda L$, where $\lambda L$ is a wavelength of a millimeter wave. A signal that is of the transmitted signal of the transmit antenna 2 and that reaches a receive antenna 0 may be equivalent to a received signal of a receive antenna 4. A signal that is of the transmitted signal of the transmit antenna 2 and that reaches a receive antenna 1 may be equivalent to a received signal of a receive antenna 5. A signal that is of the transmitted signal of the transmit antenna 2 and that reaches a receive antenna 2 may be equivalent to a received signal of a receive antenna 6. A signal that is of the transmitted signal of the transmit antenna 2 and that reaches a receive antenna 3 may be equivalent to a received signal of a receive antenna 7. For example, the receive antenna 4, the receive antenna 5, the receive antenna 6, and the receive antenna 7 in the schematic diagram of the transmit antenna and the eight receive antennas in FIG. 19(b)-1 and FIG. 19(b)-2 are equivalently obtained virtual receive antennas.

A phase difference obtained when signals transmitted by transmit antennas between which there is a distance in a longitudinal dimension reach the receive antenna after being reflected by the reflection point may be used by the millimeter-wave radar module to measure a longitudinal coming direction (for example, represented by a pitch) of the reflected signal. In an example, the antennas of the millimeter-wave radar module are of the structure shown in (a) in FIG. 8. There is a distance between a transmit antenna 1 and the transmit antenna 0 in the longitudinal dimension. There is a distance between the transmit antenna 1 and the transmit antenna 2 in the longitudinal dimension. A pitch of a reflected signal may be determined by comparing signals separately received by a same receive antenna from the transmit antenna 1, the transmit antenna 0, and the transmit antenna 2. For example, as shown in FIG. 19(c)-1 and FIG. 19(c)-2, signals between which there is a phase difference in the longitudinal dimension may be compared with reference to a signal that is transmitted by the transmit antenna 0 and received by the receive antenna 2 and the receive antenna 3, a signal that is transmitted by the transmit antenna 2 and received by the receive antenna 0 and the receive antenna 1, and a signal that is transmitted by the transmit antenna 1 and received by the receive antenna 0, the receive antenna 1, the receive antenna 2, and the receive antenna 3, and a longitudinal coming direction (for example, represented by a pitch) of a reflected signal may be obtained through calculation. For example, a signal that is transmitted by the transmit antenna 0 and received by the receive antenna 2 may be compared with a signal that is transmitted by the transmit antenna 1 and received by the receive antenna 0, to obtain a phase difference between the two signals, and a pitch is calculated based on the phase difference. For a specific step of calculating the pitch based on the phase difference between the received signals, refer to the method for calculating the angle $\beta$ in FIG. 12(f). Details are not described herein again.

(3) Determine coordinates of the reflection point in the fourth coordinate system.

The first electronic device may calculate, according to formula (7) based on the distance between the reflection point and the millimeter-wave radar and the signal coming direction (the yaw and the pitch) of the reflected signal, the coordinates of the reflection point in the fourth coordinate system established by the first electronic device.

(4) Determine coordinates of the user in the fourth coordinate system.

In some cases, because different parts of a human body in a large size may be provided with different clothes through wearing and have different bone structures, there may be different detection results. As a result, for detection of the human body, there may be a plurality of reflection points that may not be even distributed quite uniformly. For an object in a large size, different parts may be made from different materials, in different shapes, and the like. As a result, for detection of such an object, there may also be a plurality of reflection points that may not be even distributed quite uniformly. For a human body, because parts such as the head, a hand and a foot of the human body all reflect the transmitted signal of the millimeter-wave radar, the millimeter-wave radar detects the human body as a plurality of reflection points within the detectable range. In this case, clustering processing may be performed on point cloud data of the reflection points. To be specific, the plurality of detected reflection points are aggregated into one category, and the cluster is determined as an object or a human body.

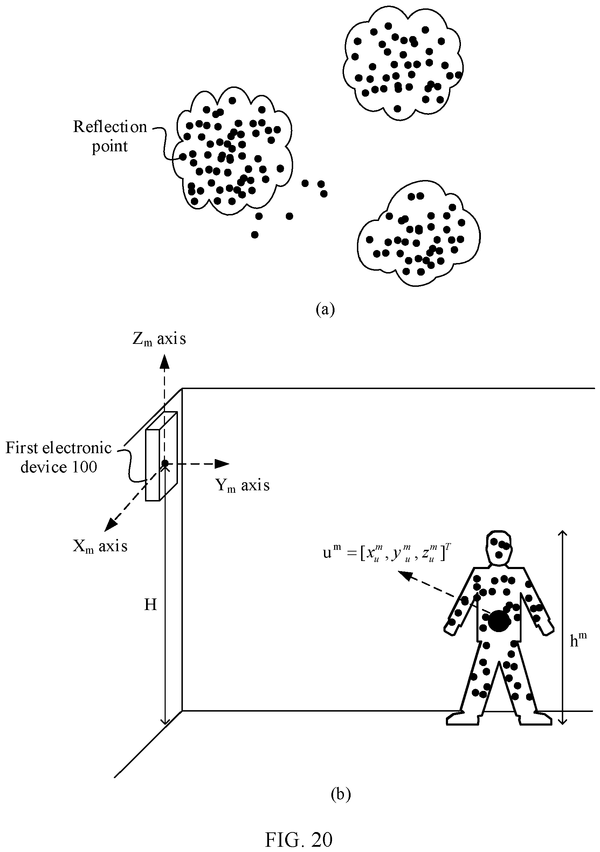

For example, (a) in FIG. 20 is a schematic diagram of an effect of performing clustering processing on the point cloud data. In (a) in FIG. 20, each point represents one reflection point detected by the millimeter-wave radar module, three closed curves respectively represent categories obtained through aggregation, and a point outside the three closed curves represents a reflection point that is not aggregated into any category. In an example, the millimeter-wave radar module clusters the plurality of reflection points into one object or human body (user) according to a clustering algorithm, and may obtain, through calculation, coordinates of the object or the human body (the user) in the fourth coordinate system based on coordinates of a plurality of reflection points obtained after clustering. For example, the coordinates of the object or the human body (the user) in the fourth coordinate system may be coordinates of a gravity center of the object or the human body in the fourth coordinate system. For example, as shown in (b) in FIG. 20, a smaller point in (b) in FIG. 20 represents the reflection point detected by the millimeter-wave radar, and a largest point is a coordinate point of the human body (the user) in the fourth coordinate system. The coordinates of the human body (the user) in the fourth coordinate system are denoted as $u^m = [x_u^m, y_u^m, z_u^m]\mathrm{T}$.

Further, a height of the object or a height of the human body (the user) may be further obtained through calculation based on a height H of the first electronic device from the ground and the coordinates of the object or the human body (the user) in the fourth coordinate system. For example, a height hm of the human body (the user) may be calculated according to formula (10).

$$\mathrm{hm}=(\mathrm{H}+z_u^m)\times 2 \quad \text{formula (10)}$$

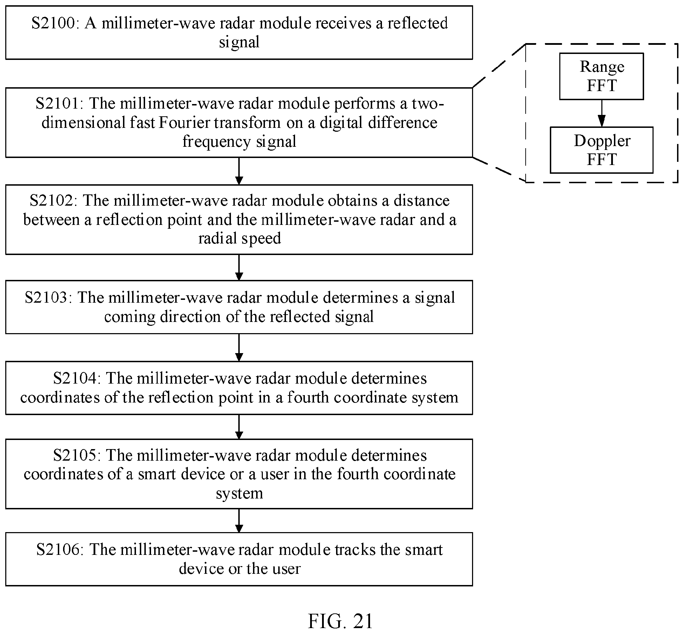

For example, FIG. 21 is a flowchart of a method for determining the coordinates of the user by the first electronic device in the fourth coordinate system according to an embodiment of this application. As shown in FIG. 21, the method may include the following steps.

S2100: The millimeter-wave radar module receives a reflected signal.

S2101: The millimeter-wave radar module performs a two-dimensional fast Fourier transform on a digital difference frequency signal.

The receive antenna of the millimeter-wave radar module receives the reflected signal. The digital difference frequency signal is obtained based on the reflected signal. The two-dimensional fast Fourier transform is performed on the digital difference frequency signal, to obtain two-dimensional FFT data.

S2102: The millimeter-wave radar module obtains a distance between a reflection point and the millimeter-wave radar and a radial speed according to a target detection algorithm.

The millimeter-wave radar may perform target detection on a frame of two-dimensional FFT data according to a target detection algorithm, to obtain a distance and a radial speed of a target.

It should be noted that, in an indoor environment, a multipath effect and clutter interference are generated, and a signal received by the millimeter-wave radar includes a target reflected signal, background noise, clutter interference, and the like. For example, in a test environment for the frame of two-dimensional FFT data shown in (e) in FIG. 18, there are moving human bodies respectively located in places that are 1 m, 2 m and 4 m away from the millimeter-wave radar. However, it can be learned from (e) in FIG. 18 that, in addition to three peak values in the places that are 1 m, 2 m and 4 m away from the millimeter-wave radar, there is a larger peak value caused by other reflected signals (the background noise, the clutter interference, and the like). If a reflected signal caused by the background noise, the clutter interference, and the like is detected as a reflection point, a false alarm is generated. In an implementation method, the distance and the radial speed of the reflection point may be obtained according to a constant false alarm rate (constant false alarm rate, CFAR) target detection algorithm, to maintain a constant false alarm rate, and improve target detection precision.

It should be noted that the millimeter-wave radar module may obtain, based on two-dimensional FFT data, the distance and the radial speed of the reflection point according to a target detection algorithm in the conventional technology as required. A used target detection algorithm is not limited in embodiments of this application. A specific implementation method of the target detection algorithm may be obtained from the conventional technology. Details are not described herein again.

S2103: The millimeter-wave radar module determines a signal coming direction of the reflected signal.

For example, a yaw and a pitch may be estimated according to an algorithm, for example, a phase difference method, a sum difference beam method, or a music method. The algorithm, for example, the phase difference method, the sum difference beam method, or the music method, may be obtained from the conventional technology. Details are not described herein again.

S2104: The millimeter-wave radar module determines coordinates of the reflection point in the fourth coordinate system.

The millimeter-wave radar determines the coordinates of the reflection point in the fourth coordinate system based on the distance between the reflection point and the millimeter-wave radar and a signal coming direction of the reflection point.

S2105: The millimeter-wave radar module determines coordinates of a smart device or the user in the fourth coordinate system.

In an implementation, detected reflection points are clustered according to the clustering algorithm, and a plurality of reflection points are clustered into the smart device or the user. The clustering algorithm includes a partition-based clustering method, a density-based partitioning method, a model-based partitioning method, a network-based partitioning method, and the like. For example, common clustering algorithms include density-based spatial clustering of applications with noise (density-based spatial clustering of applications with noise, DBSCAN), a K-means algorithm, a BIRCH algorithm, and the like. Clustering processing may be performed according to any clustering algorithm. This is not limited in embodiments of this application.

The coordinates of the smart device or the user in the fourth coordinate system may be obtained through calculation based on a coordinate average value of a plurality of reflection points of the smart device or the user obtained after clustering.

S2106: The millimeter-wave radar module tracks the smart device or the user.

The millimeter-wave radar module performs target detection on each received frame of data. Further, after an object (a smart device) or a human body in each frame of data is detected according to the target detection algorithm and the clustering algorithm, a detection result in a current frame may be further matched with a detection result in a previous frame one by one according to an association algorithm, to track the object or the human body (that is, obtain a change in a coordinate value of the object or the human body as time varies). For example, a tracking algorithm (a previous frame and subsequent frame association algorithm) is as follows: Calculate a Euclidean distance (a straight line distance between two spatial points) between two targets in two frames, determine two targets with a shortest Euclidean distance as a same target, and then link and track the target according to a Hungarian algorithm.

Further, in an implementation, the millimeter-wave radar module may determine, based on a target tracking result, that the target is stationary or moving. The millimeter-wave radar module may be further configured to detect a physiological feature (for example, a breath frequency or a heartbeat frequency) of a target in a stationary state. If it is determined that the physiological feature of the target satisfies a set condition (for example, the breath frequency falls within a preset range, or the heartbeat frequency falls within a preset range), it is determined that the target or a target obtained after clustering is the human body (the user). The user is tracked.

(8) Detection of the physiological feature, an identity category, a human body attitude, and the like of the user by the millimeter-wave radar module

With reference to accompanying drawings, the following describes in detail a specific method for detecting information such as the physiological feature, the identity category, and the human body attitude by the millimeter-wave radar module.

(1) The millimeter-wave radar module detects the physiological feature of the user.

The physiological feature of the user includes the breath frequency, the heartbeat frequency, and the like of the user. When the user is still (the position of the user does not change), slight displacement of the body of the user caused by a breath and a heartbeat may cause a phase change of the reflected signal of the millimeter-wave radar module. The breath frequency and the heartbeat frequency of the user may be obtained by detecting the phase change of the reflected signal of the millimeter-wave radar module when the user is still.

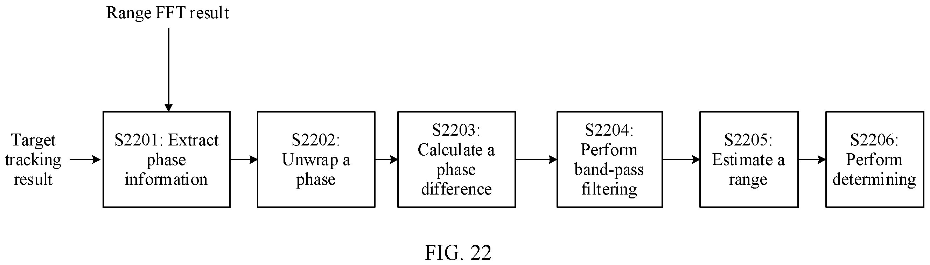

In an implementation, as shown in FIG. 22, a method for obtaining the breath frequency and the heartbeat frequency of the user by the millimeter-wave radar module may include the following steps.

S2201: Extract phase information.

In S2201, a range FFT is performed on each frame of data of the millimeter-wave radar, and a frequency of the difference frequency signal may be obtained based on a range FFT result. To be specific, a phase of the difference frequency signal may be obtained. In S2206, the millimeter-wave radar performs target tracking on the user, and may obtain a change of the position of the user as time changes, that is, may obtain a position of the user at a moment.

If the millimeter-wave radar determines that the user is still (for example a coordinate change amount of the user is less than a specified value within a period of time) based on the target tracking result, the millimeter-wave radar performs phase extraction on a range FFT result obtained at the current position of the user, that is, extracts the phase information of the difference frequency signal. For example, the radar scanning cycle is 100 ms, that is, a cycle of a frame of data is 100 ms. The phase information of the difference frequency signal is extracted once from each frame of data. Phase information of a plurality of frames of data is continuously extracted, to obtain a relationship that the phase changes with a quantity of the frames, that is, a relationship that the phase changes with time. The phase is denoted as a vibration signal v(j), where j is the quantity of the frames.

S2202: Unwrap the phase.

The phase is unwrapped, to obtain an actual displacement curve. It is specified that a phase value falls within $[-\pi, \pi]$. If the phase value obtained through calculation in S2201 is greater than $\pi$, phase unwrapping is performed by

subtracting $2\pi$ from the phase value. If the phase value obtained through calculation in S2201 is less than $-\pi$, phase unwrapping is performed by adding $2\pi$ to the phase value.

S2203: Calculate a phase difference.

A subtraction is performed on consecutive phase values, and a phase difference operation is performed on the unwrapped phase, to obtain a phase difference $\Delta v$. This can enhance a heartbeat signal and eliminates any phase drift. Herein, $\Delta v(k)=v(k)-v(k-1)$.

S2204: Perform band-pass filtering.

The phase value is filtered by a band-pass filter for distinguishing separately based on the heartbeat frequency and the breath frequency. For example, a passband range of the band-pass filter is set to 0.8 Hz to 4 Hz, and the phase value is filtered, to detect heartbeat. The passband range of the band-pass filter is set to 0.1 Hz to 0.6 Hz, and the phase value is filtered, to detect a breath.

S2205: Estimate a range.

An FFT is performed on a phase difference signal, and a breath frequency and a heartbeat frequency within N frames of time are obtained based on a magnitude of a peak value and a harmonic feature.

S2206: Perform determining.

A breath frequency and a heartbeat frequency within a period of time are recorded. Obtained breath frequency and heartbeat frequency values are screened based on a preset confidence indicator (for example, an accuracy rate of 95% or a false alarm rate of 5%), and a relationship that the breath frequency and the heartbeat frequency changes with time is output.

(2) The millimeter-wave radar module detects the identity category of the user.

The millimeter-wave radar module may determine the identity category of the user based on the height hm (of the user) obtained through calculation. The identity category of the user includes adult, child, and the like.

In an implementation, when the user is within a detection range of the millimeter-wave radar module, if it is detected that the user is a moving state, the millimeter-wave radar module calculates a height of a user detected in each frame of data. The height is denoted as hm(t), indicating a height value at a moment t. An average value Hm of the height of the user may be further calculated based on hm(t), and the identity category of the user may be determined based on Hm. For example, a correspondence between the height of the user and the identity category of the user is shown in Table 1.

**Table 1**

| Identity category | Height |
|---|---|
| Adult | $H^m$>120 centimeters |
| Child | 120 centimeters$\geq H^m$>50 centimeters |
| Pet | $H^m\leq$50 centimeters |

(3) The millimeter-wave radar module detects the human body attitude of the user.

The millimeter-wave radar module may determine the human body attitude of the user based on a change of the height hm (of the user) obtained through calculation. The human body attitude includes standing, sitting, lying, and the like.

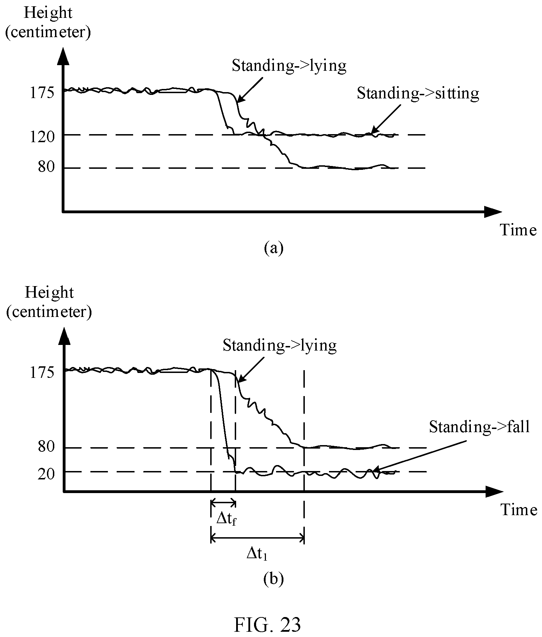

In an implementation, the millimeter-wave radar module performs target tracking on the user, and if it is determined that the height of the user changes, a value of a height change is greater than a preset height difference threshold, and maintenance duration obtained after the height changes is greater than preset duration, determines that the human body attitude of the user changes. For example, as shown in (a) in FIG. 23, if the millimeter-wave radar module detects that the height of the user changes from 175 centimeters to 80 centimeters and remains at 80 centimeters for a period of time, the millimeter-wave radar module determines that the user changes from standing to lying. If the millimeter-wave radar module detects that the height of the user changes from 175 centimeters to 120 centimeters and remains at 120 centimeters for a period of time, the millimeter-wave radar module determines that the user changes from standing to sitting.

In an example, the millimeter-wave radar module determines the human body attitude of the user based on a height difference $\Delta h$ between a current height of the user and a height obtained when the user stands. For example, $\triangle h(t)$ may be obtained through calculation according to formula (11), and $\triangle h(t)$ indicates a height difference between a height of the user at the moment t and the height obtained when the user stands.

$$\Delta h(t)=Hm-hm(t) \qquad \text{formula (11)}$$

For example, if the millimeter-wave radar module determines that Δh at a plurality of consecutive moments (that are greater than the preset duration) satisfies the preset height difference threshold, the millimeter-wave radar module determines that the human body attitude of the user changes. For example, a correspondence between the height difference Δh and the human body attitude is shown in Table 2.

**Table 2**

| Identity category | Human body attitude | Height difference Δh |
|---|---|---|
| Adult | Sitting | 30 centimeters≤Δh<60 centimeters |
| | Lying | 60 centimeters≤Δh<120 centimeters |
| Child | Sitting | 20 centimeters≤Δh<40 centimeters |
| | Lying | 40 entimeters≤Δh<80 centimeters |

Further, the millimeter-wave radar may further identify a fall behavior of the user by monitoring the height change of the user. For example, (b) in FIG. 23 shows a height change between a fall and normal lying of the user. As shown in (b) in FIG. 23, compared with that obtained during normal lying, the height of the user changes faster during the fall (that is, a height difference generated within same duration is large), and the height obtained after the fall is lower.

In an implementation, if the millimeter-wave radar module determines that the height difference Δh between the current height of the user and the height obtained when the user stands satisfies a preset fall height threshold, and duration △t taken by the user to change from the height obtained when the user stands to the current height satisfies a preset fall duration threshold, the millimeter-wave radar module determines a user fall. For example, a correspondence between Δh, △t, and the user fall is shown in Table 3.

**Table 3**

| Identity category | Status | Height difference Δh | Δt |
|---|---|---|---|
| Adult | Fall | 120 centimeters≤Δh | Δt≤0.3 second |
| Child | Fall | 80 centimeters≤Δh | Δt≤0.3 second |

**(9) Conversion between the first coordinate system and the fourth coordinate system**

After the first electronic device 100 establishes the first coordinate system and the fourth coordinate system, a coordinate value in the first coordinate system and a coordinate value in the fourth coordinate system need to be converted, to facilitate collaboration. For example, the coordinates of the second electronic device 300 in the first coordinate system are converted into coordinates of the second electronic device 300 in the fourth coordinate system, or coordinates of the user in the fourth coordinate system are converted into coordinates of the user in the first coordinate system. Consequently, conversion between the first coordinate system and the fourth coordinate system is mentioned.

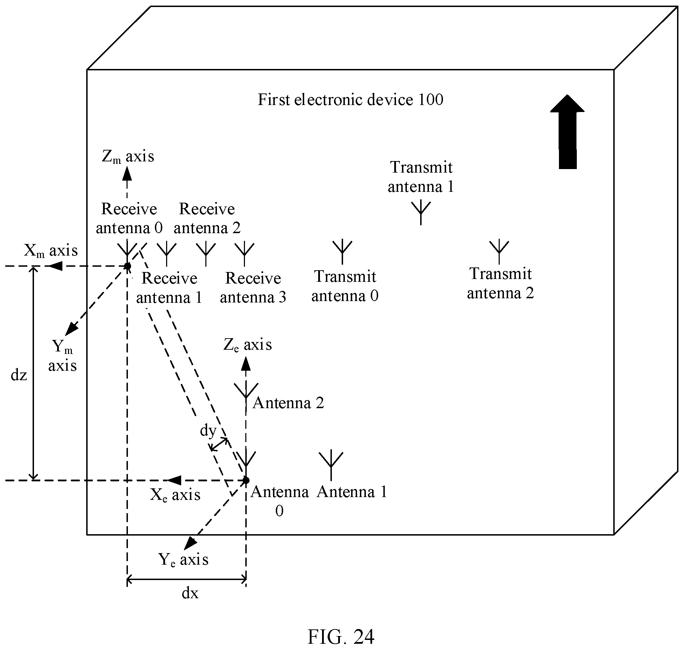

For example, the antenna distributions of both the UWB module 150 and the millimeter-wave radar module 160 of the first electronic device 100 may be set as shown in FIG. 24. The antenna 0, the antenna 1, and the antenna 2 are distributed in an L shape on a longitudinal plane (for example, a vertical plane). The transmit antenna 0, the transmit antenna 1, and the transmit antenna 2 are distributed in a shape of a triangle on a longitudinal plane (for example, a vertical plane). The receive antenna 0, the receive antenna 1, the receive antenna 2, and the receive antenna 3 are on a same horizontal line on a longitudinal plane (for example, a vertical plane). In addition, the three transmit antennas and the four receive antennas are disposed on a same longitudinal plane.

For example, as shown in FIG. 24, an end point (which may alternatively be replaced with the center point or the like) of a tail end the antenna 0 is used as the origin Oe of the first coordinate system, the connection line between the antenna 0 and the antenna 1 is used as the Xe axis of the first coordinate system. The direction in which the antenna 1 points to the antenna 0 is the positive direction of the Xe axis. In the plane in which the antenna 0, the antenna 1, and the antenna 2 are located, the straight line perpendicular to the Xe axis is used as the Ze axis of the first coordinate system, and the antenna 2 is located in the positive direction of the Ze axis. Then, with reference to the rule of the right-hand rectangular coordinate system, the Ye axis of the first coordinate system and the positive direction of the Ye axis are determined. An end point (which may alternatively be replaced with the center point or the like) of a tail end of the receive antenna 0 is used as the origin Om of the fourth coordinate system. The connection line between the receive antenna 0 and the receive antenna 1 is used as the Xm axis of the fourth coordinate system. The direction in which the receive antenna 1 points to the receive antenna 0 is the positive direction of the Xm axis. A longitudinal line (for example, a vertical line) passing through the origin Om is used as the Zm axis of the fourth coordinate system. The direction pointing to the zenith is the positive direction of the Zm axis. Then, with reference to the rule of the right-hand rectangular coordinate system, the Ym axis of the fourth coordinate system and the positive direction of the Ym axis are determined. It can be learned that the Xe axis is parallel to the Xm axis, the Ye axis is parallel to the Ym axis, the Ze axis is parallel to the Zm axis, and the fourth coordinate system and the first coordinate system can be converted to each other only through translation.

For example, as shown in FIG. 24, when the first coordinate system is moved a distance dx in a direction parallel to the Xe axis, then moved a distance dy in a direction parallel to the Ye axis, and next, moved a distance dz in a direction parallel to the Ze axis, the first coordinate system coincides with the fourth coordinate system. For example, if a case in which coordinates of a point in the first coordinate system are (xe, ye, ze) and coordinates of the point in the fourth coordinate system are (xm, ym, zm) is defined, [xm, ym, zm]T=[xe, ye, ze]T-[dx, dy, dz]T.

It may be understood that a relative position between the first coordinate system and the fourth coordinate system of the first electronic device 100 may be set in another manner. A similar method may be used to perform conversion between the fourth coordinate system and the first coordinate system. Details are not described herein again.

**(10) Establishment of a fifth coordinate system (whole-house coordinate system) and conversion between the fifth coordinate system and the first coordinate system**

In an example, one first electronic device is disposed in each room or each area. The first electronic device obtains position information of each device and each specified area in the room or the area by using a second electronic device including a UWB module to mark a second electronic device including no UWB module and communicating and interacting with the second electronic device including the UWB module. By using a millimeter-wave radar module, the first electronic device obtains position information of a user in the room or the area, and may further obtain information such as a physiological feature, an identity category, and a human body attitude of the user. The first electronic device controls or notifies, based on the received information, a second electronic device to perform a preset operation. In this example, a separate room or area is used as an example.

In another example, for example, in a whole-house scenario, a hub device may be disposed. Devices such as the hub device, a first electronic device, and a second electronic device constitutes a whole-house system in a wired or wireless manner. The first electronic device obtains position information of each device and each specified area in the room or the area by using a second electronic device including a UWB module to mark a second electronic device including no UWB module and communicating and interacting with the second electronic device including the UWB module. By using a millimeter-wave radar module, the first electronic device obtains position information of a user in the room or the area, and obtain information such as a physiological feature, an identity category, and a human body attitude of the user. The first electronic device sends, to the hub device in a wired or wireless manner, the position information of each device and each specified area, and at least one of information such as a position, the physiological feature, the identity category, and the human body attitude of the user. The hub device controls or notifies, based on the received information, a second electronic device to perform a preset operation.

Optionally, the hub device and a specific first electronic device (for example, the first electronic device in the living room) may be integrated into one device.

In the whole-house scenario, the foregoing information of each room and/or each area needs to be collected in a unified manner. Conversion between different coordinate systems in all rooms is mentioned. For example, position information of the primary bedroom in the first coordinate system and position information of the secondary bedroom in the first coordinate system should be both unified to one coordinate system. In this way, unified control or notification can be performed from a whole-house level. Therefore, the fifth coordinate system (also referred to as the whole-house coordinate system) needs to be established.

For example, the user may input, to the hub device, a whole-house floor plan, an installation position of the hub device, a position of the installation position of the hub device in the whole-house floor plan, height information of a whole house, and the like. The whole-house floor plan is a plane spatial layout of the house, is a drawing for describing a usage function, a relative position, a size, and the like of each piece of independent space of the whole house. The hub device establishes the fifth coordinate system based on the whole-house floor plan.

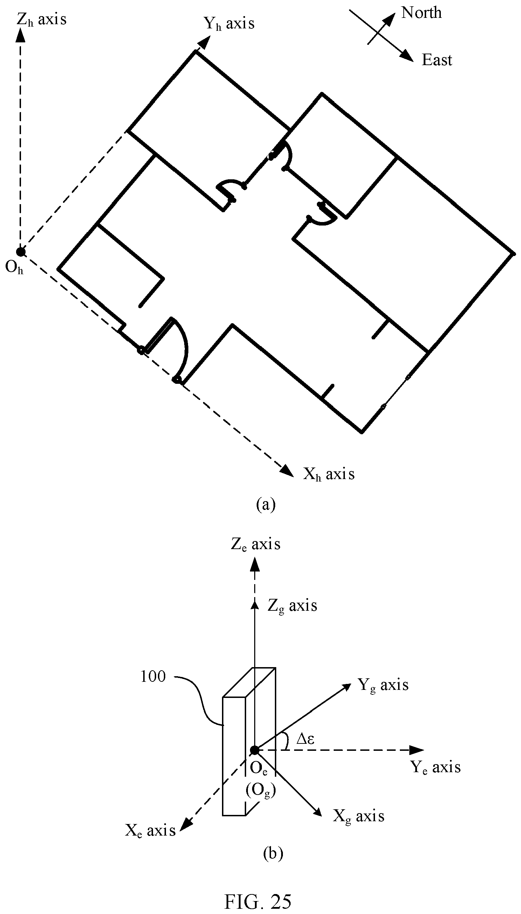

In an example, as shown in (a) in FIG. 25, a projected point that is of the southernmost point of the whole-house floor plan and that is projected onto a horizontal plane is a first projection point. A first straight line parallel to the east-west direction is drawn passing through the first projected point. A projected point that is of the westernmost point of the whole-house floor plan and that is projected onto the horizontal plane is a second projected point. A second straight line parallel to the north-south direction is drawn passing through the second projected point. An intersection of the first straight line and the second straight line is used as an origin Oh of the fifth coordinate system. The first straight line is used as an Xh axis, and the due east direction is a positive direction of the Xh axis. The second straight line is used as a Yh axis, and the due north direction is a positive direction of the Yh axis. AZh axis is perpendicular to the horizontal plane, and a direction pointing to the sky is a positive direction of the Zh axis. Optionally, names of the three axes in the fifth coordinate system and the positive directions of the three axes may alternatively be determined in another manner. Details are not described herein again.

Optionally, the first electronic device includes an IMU module. For example, one hub device is installed in the living room. Both the hub device and the first electronic device in the living room are installed in parallel in a position, for example, a wall or a ceiling. There may be an included angle between the first coordinate system established by the first electronic device and a geographical coordinate system (a sixth coordinate system) on all or some of three axes. The included angle may be output by using the IMU module of the first electronic device, or may be obtained by parsing a result output by the IMU module of the first electronic device, or may be obtained through calculation by using a measurement result of an instrument, for example, a level instrument and/or a plumb bob. For example, (b) in FIG. 25 shows an included angle $\Delta\varepsilon$ between a positive direction of a Yg axis and a positive direction of the Ye axis. Conversion between the sixth coordinate system and the fifth coordinate system is well known to a person skilled in the art. Details are not described herein again. In an implementation, three axes of the sixth coordinate system are respectively parallel to the three axes of the fifth coordinate system. In this way, conversion between the first coordinate system and the fifth coordinate system can be implemented.

In another example, when establishing the fifth coordinate system, the hub device makes three axes of the fifth coordinate system respectively parallel to three axes of the sixth coordinate system, and may further determine an origin Oh of the fifth coordinate system according to the method shown in (a) in FIG. 25. In addition, when the first electronic device is installed, an instrument, for example, a level instrument and/or a plumb bob or a device including an IMU module is used for assistance, so that the three axes of the first coordinate system established by the first electronic device are respectively parallel to the three axes of the sixth coordinate system. In this way, the three axes of the first coordinate system are respectively parallel to the three axes of the fifth coordinate system. Conversion does not need to be performed between the first coordinate system and the fifth coordinate system.

A distance difference between the coordinate origins of the first coordinate system and the fifth coordinate system may be obtained by using two coordinate values of a same hub device in the first coordinate system and the fifth coordinate system. Specifically, the hub device may obtain coordinate information of the hub device in the fifth coordinate system. The coordinate information of the hub device in the first coordinate system may be obtained in two manners. (i) If the hub device includes a UWB module, the coordinate information of the hub device in the first coordinate system may be obtained through UWB communication between the hub device and the first electronic device. (ii) If the hub device includes no UWB module, the second electronic device including the UWB module may mark the hub device, to obtain the coordinate information of the hub device in the first coordinate system. The distance difference between the coordinate origins of the first coordinate system and the fifth coordinate system can be obtained by using the two coordinate values of the same hub device in the first coordinate system and the fifth coordinate system.

4. Human sensing-based automatic control method

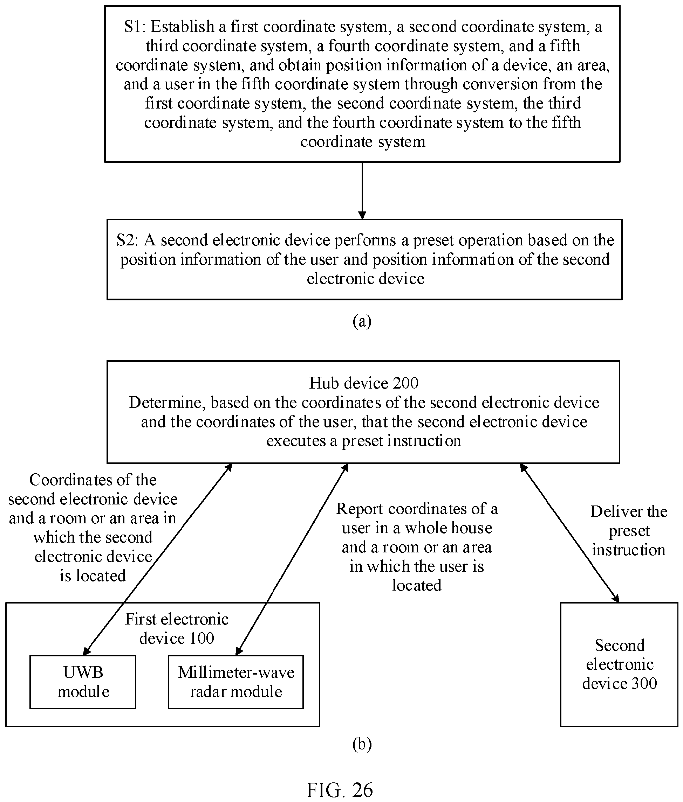

As described above, in a whole-house scenario, one first electronic device is disposed in each room in all or some rooms, one first electronic device is disposed in all or some areas, and one or more second electronic devices are disposed in a single room. For example, (a) in FIG. 26 shows general steps of the human sensing-based automatic control method. As shown in (a) in FIG. 26, the method may include the following steps.

**S1: The first electronic device establishes a first coordinate system and a fourth coordinate system. The second electronic device establishes a second coordinate system. A hub device establishes a fifth coordinate system. Position information of each device, area, and user, and the like in the fifth coordinate system is obtained through conversion from the first coordinate system, the second coordinate system, a third coordinate system, and the fourth coordinate system to the fifth coordinate system.**

S1 is specifically described in the following steps.

**(1) The first electronic device establishes the first coordinate system and the fourth coordinate system. The second electronic device establishes the second coordinate system. The hub device establishes the fifth coordinate system.**

Optionally, a second electronic device including a UWB module establishes the second coordinate system. A second electronic device including no UWB module establishes the third coordinate system.

For establishment of the first coordinate system and the fourth coordinate system by the first electronic device, establishment of the second coordinate system by the second electronic device, and establishment of the fifth coordinate system by the hub device, refer to the foregoing principles. Details are not described herein again.

**(2) Correct an installation error of the first electronic device, and obtain the position information of each device, area, and user, and the like in the fifth coordinate system through conversion from the first coordinate system, the second coordinate system, the third coordinate system, and the fourth coordinate system to the fifth coordinate system.**

There may be an error during installation of the first electronic device. As a result, locating for the second electronic device or the user by the first electronic device deviates. In an implementation, the first electronic device may be corrected during first use, to reduce or even avoid the error caused by installation.

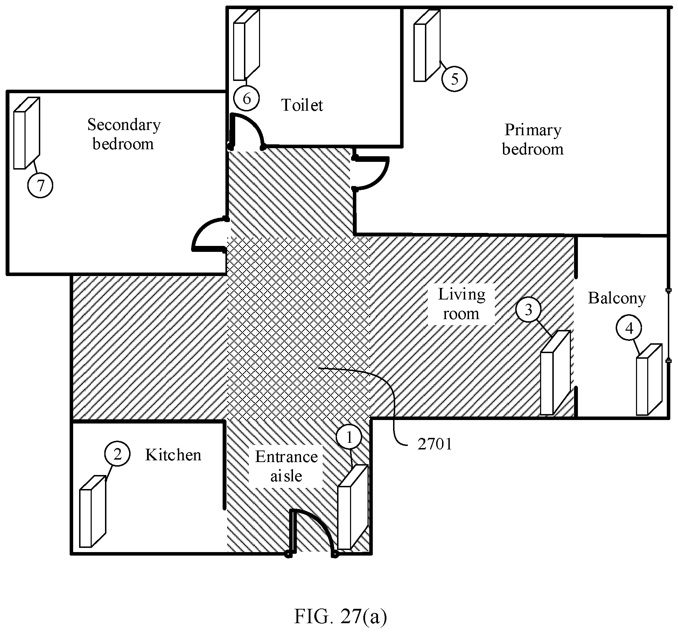

The installation error of the first electronic device may reduce measurement precision of a UWB system. For example, as shown in FIG. 27(a), at least one of a first electronic device ① located in the entrance aisle and a first electronic device ③ located in the living room may have an installation error. For a same second electronic device, the first electronic device ① determines that the second electronic device is located in a position 1, and the first electronic device ③ determines that the second electronic device is located in a position 2. The first electronic device ① and the first electronic device ③ determine, based on an identifier of the second electronic device, that electronic devices respectively located in the position 1 and the position 2 are actually the same second electronic device. Consequently, it is indicated that there is an installation error, which reduces measurement precision.

The first electronic device includes a UWB module and a millimeter-wave radar module. Installation error correction may be separately performed on the UWB module and the millimeter-wave radar module. In an implementation, antennas in the UWB module 150 and the millimeter-wave radar module 160 of the first electronic device 100 are distributed as shown in FIG. 24. Hardware is disposed to ensure that a relative position of the UWB module and the millimeter-wave radar in the first electronic device is fixed. Therefore, installation error correction may be performed on only the UWB module or the millimeter-wave radar module. In another implementation, installation error correction may be performed on both the UWB module and the millimeter-wave radar module of the first electronic device. Correction precision is improved through a plurality of times of corrections.

In an embodiment of this application, an example in which the UWB module of the first electronic device is corrected is used for description. It may be understood that a procedure of correcting the millimeter-wave radar module of the first electronic device is similar to that of correcting the UWB module of the first electronic device. Details are not described herein again. The following method is merely an example, and is not intended to limit a correction method. Another correction method also falls within the scope of this application.

Step 11: Correct an installation error of a reference first electronic device by using the hub device, to obtain a first correction parameter.

The reference first electronic device is one of a plurality of first electronic devices. For example, the hub device is installed in the living room, and the first electronic device in the living room may be used as the reference first electronic device. A first coordinate system of the reference first electronic device is denoted as a system e1.

Optionally, the hub device may display a whole-house map. The hub device may indicate the user to hold a second electronic device including a UWB module, and move from a known and easily identified position 1 to another known and easily identified position 2 based on a first track. The reference first electronic device detects a movement track of the second electronic device (by using the UWB module) or a movement track of the user (by using the millimeter-wave radar module). The movement track of the second electronic device is used as an example. There is a deviation between the detected movement track of the second electronic device and the first track.

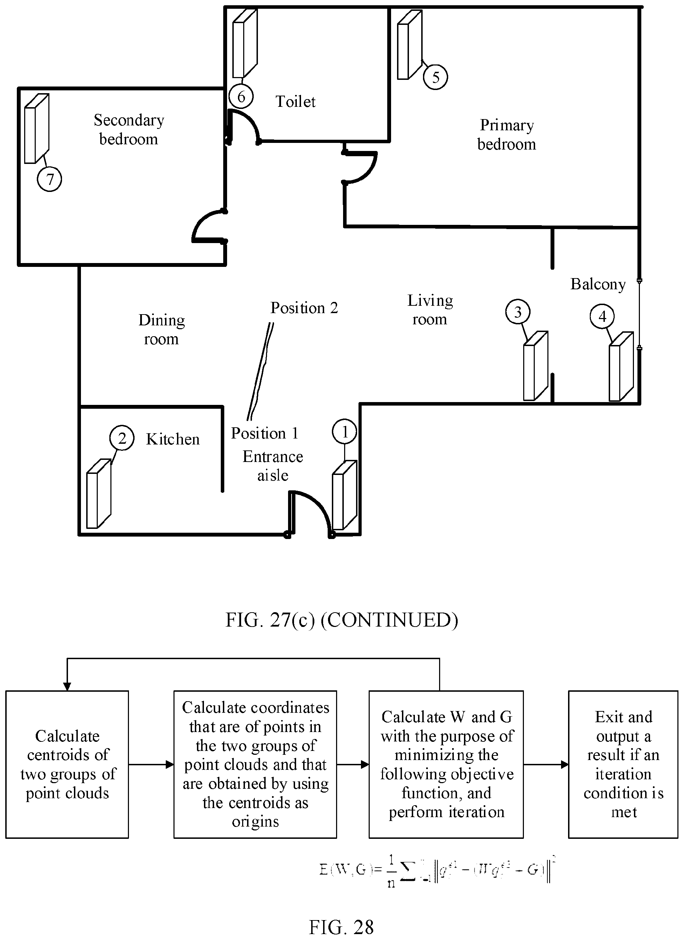

For example, as shown in FIG. 27(c), the hub device may indicate the user to hold the second electronic device including the UWB module, and move from a position 1 with known coordinates to a position 2 with known coordinates along a straight line. The first electronic device ① may obtain an actual movement track of the second electronic device based on detection performed by the UWB module. As shown in FIG. 27(c), there is a specific deviation between a movement track of the user detected by the first electronic device ① and an actual movement track of the user.

Then, an attitude error rotation matrix W and a position error vector G may be obtained through calculation according to an algorithm. For example, the algorithm may be an ICP algorithm shown in FIG. 28. An optimal matching attitude error rotation matrix W and position error vector G may be obtained through calculation according to the ICP algorithm. In this way, an error function is minimized. For specific content of the ICP algorithm, refer to the conventional technology. Details are not described herein again. The first correction parameter includes the current optimal matching attitude error rotation matrix W and position error vector G.

After the reference first electronic device is corrected, the installation error of the first electronic device is corrected based on the reference first electronic device.

Step 12: Correct the installation error of the first electronic device by using the reference first electronic device, to obtain a second correction parameter.

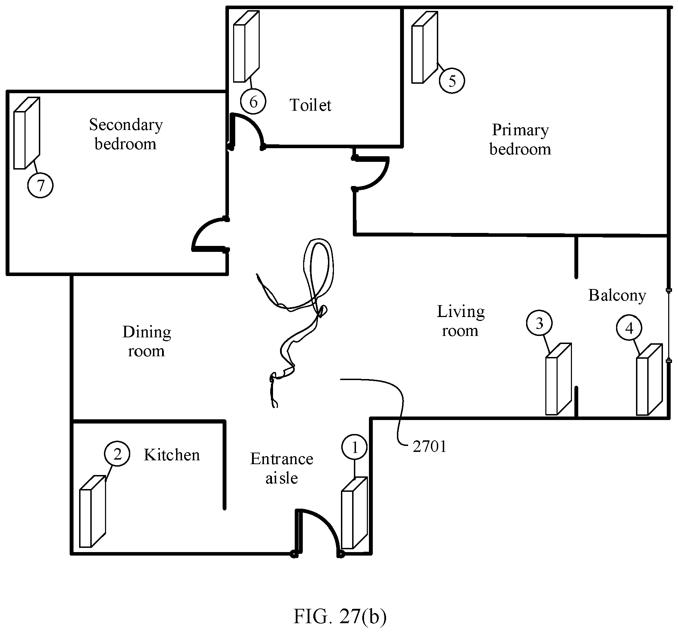

In an example, the user holds the second electronic device including the UWB module, and moves in each room of a whole house. Each first electronic device in the whole house locates the second electronic device. For example, as shown in FIG. 27(a), there is an overlapping area 2701 between a signal coverage area of the first electronic device ① and a signal coverage area of the first electronic device ③. When the user moves in the overlapping area 2701, as shown in FIG. 27(b), there is a specific deviation between movement tracks of the second electronic device that are obtained by the first electronic device ① and the first electronic device ③. The first electronic device ① is the reference first electronic device.

In an implementation, installation errors of two first electronic devices are corrected based on movement tracks of the second electronic device that are respectively detected by the two first electronic devices. For example, the correction parameter includes an attitude error rotation matrix W and a position error vector G. For example, the first electronic device ① obtains a movement track $qe1=[q_{t1}^{e1}, q_{t2}^{e1}, q_{t3}^{e1}, \ldots, q_{tn}^{e1}]$ of the second electronic device in the first coordinate system (the system e1) established by the first electronic device ①. The first electronic device ③ obtains a movement track $qe3=[q_{t1}^{e3}, q_{t2}^{e3}, q_{t3}^{e3}, \ldots, q_{tn}^{e3}]$ of the second electronic device in a first coordinate system (a system e3) established by the first electronic device ③. Herein, $q_{tn}^{e1}$ represents coordinates of the second electronic device in the system e1 that are detected by the first electronic device ① at a moment tn, and $q_{tn}^{e3}$ represents coordinates of the second electronic device in the system e3 that are detected by the first electronic device ③ at the moment tn. The movement tracks qe1 and qe3 of the user may be converted to the fifth coordinate system according to a subsequent formula (13), and are respectively denoted as qe1->h and qe3->h.

Herein, qe1->h and qe3->h are point clouds that record a movement track of the user. An attitude error rotation matrix We3->e1 and a position error vector Ge3->e1 between the two point clouds qe1->h and qe3->h may be calculated according to an iterative closest point (iterative closest point, ICP) algorithm, to minimize a three-dimensional spatial error between a corrected point cloud qe1->h and the point cloud qe3->h. A basic principle of the ICP algorithm is shown in FIG. 28. A closest point ( $q_i^{e1}$, $q_i^{e3}$ ) is found in a to-be-matched target point cloud qe3->h and a reference point cloud qe1->h based on a constraint condition $E(W, G) = \frac{1}{n} \sum_{i=1}^{n} \lVert q_i^{e1} - (W q_i^{e3} + G) \rVert^2$. Then an optimal matching attitude error rotation matrix W and position error vector G are obtained through calculation, to minimize an error function. For a specific step of the ICP algorithm, refer to the conventional technology. Details are not described again in embodiments of this application. The second correction parameter includes the current optimal matching attitude error rotation matrix W and position error vector G.

Optionally, an order between step 11 and step 12 may be changed. In addition, the foregoing step 11 and step 12 are merely examples. In another example, correction of all first electronic devices is implemented by using the hub device, instead of using the reference first electronic device.

When the user moves without holding the second electronic device including the UWB module, each first electronic device may detect a movement track of the user. A related manner is similar to a manner of processing the movement track of the second electronic device. Details are not described herein again.

Step 13: Convert, to coordinates in the fifth coordinate system, coordinates of the second electronic device in the first coordinate system or coordinates of the user in the fourth coordinate system that are obtained by the first electronic device through calculation.

In an example, an attitude error rotation matrix and a position error vector that are of the reference first electronic device relative to the hub device are obtained by performing the foregoing step 11. For example, the first electronic device ① is used as the reference first electronic device. An attitude error rotation matrix and a position error vector of the first electronic device ① relative to the hub device are denoted as [We1->h, Ge1->h].

An attitude error rotation matrix and a position error vector of another first electronic device relative to the reference first electronic device are corrected by performing the foregoing step 12. For example, the first electronic device ① is used as the reference first electronic device. An attitude error rotation matrix and a position error vector of the another first electronic device relative to the first electronic device ① are denoted as [Wek->e1, Gek->e1], where k $\in$ 2, ..., n.

In an example, the first electronic device ① is used as the reference first electronic device. Coordinates that are of an origin of a first coordinate system of a kth other first electronic device other than the reference first electronic device and that are in the fifth coordinate system are expressed as $[x_o^{kh}, y_o^{kh}, z_o^{kh}]$. Any point in space is selected as a point q. Coordinates of the point q in the first coordinate system established by the kth first electronic device are

expressed as $\text{qek}=[x_q^{ek}, y_q^{ek}, z_q^{ek}]$. Coordinates of the point q in the fifth coordinate system that are obtained after installation error correction are expressed as $q'^h = [x'^h_q, y'^h_q, z'^h_q]$. The coordinates of the point q in the first coordinate system established by the kth first electronic device may be converted to the fifth coordinate system according to formula (12) after undergoing installation error correction.

$$[x'^h_q, y'^h_q, z'^h_q] \quad \text{T=We1->h(Wek->e1} \quad (C_e^h \cdot$$
$$[x_q^{ek}, y_q^{ek}, z_q^{ek}]\text{T}+[x_o^{kh}, y_o^{kh}, z_o^{kh}]\text{T})+\text{Gek->e1)}+\text{Ge1->h}$$

$$\text{formula (12)}$$

Coordinates, of an origin of the first coordinate system established by the reference first electronic device, in the fifth coordinate system are expressed as $[x_o^{1h}, y_o^{1h}, z_o^{1h}]$. Coordinates of the point q in the first coordinate system established by the reference first electronic device are expressed as $\text{qe1}=[x_q^{e1}, y_q^{e1}, z_q^{e1}]$. Coordinates of the point q in the fifth coordinate system that are obtained after installation error correction are expressed as $q'^h = [x'^h_q, y'^h_q, z'^h_q]$. The coordinates of the point q in the first coordinate system established by the reference first electronic device may be converted to the fifth coordinate system according to formula (13) after undergoing installation error correction.

$$[x'^h_q, y'^h_q, z'^h_q]\text{T=We1->h}(C_e^h \cdot [x_q^{e1}, y_q^{e1}, z_q^{e1}]\text{T}+[x_o^{1h}, y_o^{1h}, z_o^{1h}]\text{T})+\text{Ge1->h} \quad \text{formula (13)}$$

In another example, coordinates detected by the first electronic device are directly converted to the fifth coordinate system after undergoing installation error correction, without using the reference first electronic device. For example, the attitude error rotation matrix and the position error vector between two point clouds of the movement track of the user detected by the first electronic device and the actual movement track of the user are respectively denoted as We->h and Ge->h. Coordinates, of an origin of the first coordinate system established by the first electronic device, in the fifth coordinate system are expressed as $[x_o^h, y_o^h, z_o^h]$. Coordinates of the point q in the first coordinate system established by the first electronic device are expressed as $\text{qe}=[x_q^e, y_q^e, z_q^e]$. Coordinates of the point q in the fifth coordinate system that are obtained after installation error correction are expressed as $q'^h = [x'^h_q, y'^h_q, z'^h_q]$. The coordinates of the point q in the first coordinate system established by the first electronic device may be converted to the fifth coordinate system according to formula (14) after undergoing installation error correction.

$$[x'^h_q, y'^h_q, z'^h_q]\text{T=We->h}(C_e^h \cdot [x_q^e, y_q^e, z_q^e]\text{T}+[x_o^h, y_o^h, z_o^h]\text{T})+\text{Ge->h} \quad \text{formula (14)}$$

It may be understood that a method for converting, to the fifth coordinate system, the coordinates of the user in the fourth coordinate system that are detected by the first electronic device and that undergo installation error correction is similar to a method for converting, to the fifth coordinate system, the coordinates of the user in the first coordinate system that are detected by the first electronic device and that undergo installation error correction. Details are not described herein again.

During first use, the second electronic device in the whole house may be located by using the UWB module of the first electronic device. A first electronic device in each room or area may determine coordinates of a second electronic device in the room or the area in a first coordinate system of the first electronic device. Optionally, for a plurality of first electronic devices whose signal coverage areas have an overlapping area, one of the plurality of first electronic devices may locate a second electronic device in the overlapping area.

Further, in an implementation, each first electronic device in the whole house converts obtained coordinates of one or more second electronic devices in a first coordinate system to the fifth coordinate system, and sends coordinates of the one or more second electronic devices in the fifth coordinate system to the hub device. In another implementation, each first electronic device in the whole house sends obtained coordinates of one or more second electronic devices in first coordinate system to the hub device, and the hub device converts, to the fifth coordinate system, the coordinates of the second electronic device in the first coordinate system that are received from each first electronic device. Optionally, converting the coordinates of the second electronic device in the first coordinate system to the fifth coordinate system includes: converting, to the fifth coordinate system, the coordinates of the second electronic device in the first coordinate system that undergo installation error correction. The hub device may store the obtained coordinates of the second electronic device in the fifth coordinate system.

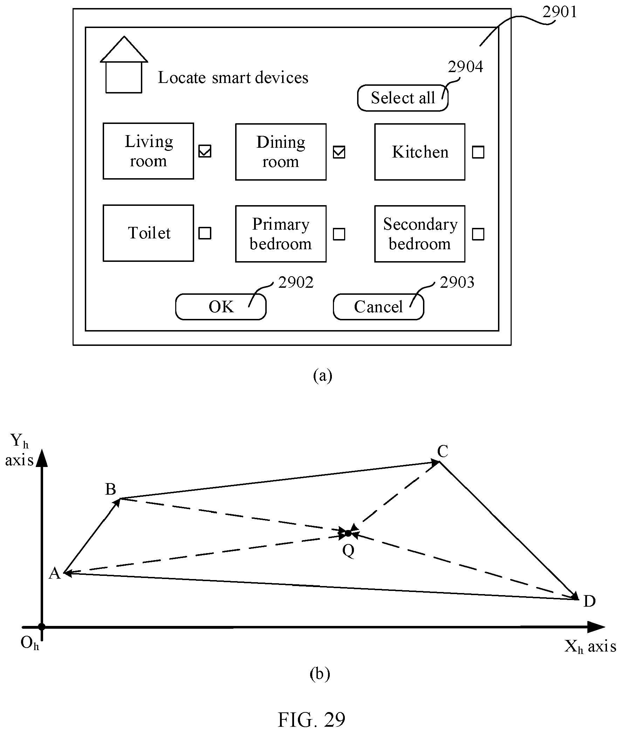

Optionally, after first use, a second electronic device may be added to or removed from the whole house, or a position of the second electronic device may change. In an implementation, the hub device cyclically locates the second electronic device by using the first electronic device in each room or each area, and updates the coordinates of the second electronic device that are stored in the hub device. In another implementation, when detecting the second electronic device newly added to the whole house, the hub device triggers locating the second electronic device by using the first electronic device, and updates the coordinates of the second electronic device that are stored in the hub device. For example, the hub device stores configuration information of all devices such as the first electronic device and the second electronic device in the whole house. The second electronic device accesses the hub device, and corresponding configuration information is newly added. If the hub device determines, based on the configuration information, that the second electronic device is newly added, the hub device triggers the first electronic device to locate the second electronic device. In another implementation, after the second electronic device is added to or removed from the whole house, or the position of the second electronic device changes, the user may manually trigger the first electronic device to locate the second electronic device, and update the coordinates of the second electronic device that are stored in the hub device. For example, the user starts, through a human-machine interaction interface displayed on a control panel, the first electronic device to locate the second electronic device. For example, as shown in (a) in FIG. 29, a "Locate a hub device" interface 2901 is displayed on the control panel. The "Locate a hub device" interface 2901 includes room options such as the living room, a dining room, and a kitchen. The user may select one or more of the room options, and click an "OK" button 2902, to enable a first electronic device in a corresponding room to locate a hub device in the room. The "Locate a hub device" interface 2901 further includes a "Cancel" button 2903, used to cancel performing of locating an IoT device. Optionally, the "Locate an IoT device" interface 2901 further includes a "Select all" button 2904. The user may tap the "Select all" button 2904 to select all rooms in the house, and tap the "OK" button 2902, to enable the first electronic device in the whole house to separately locate the second electronic devices.

Optionally, after first use, the first electronic device in each room or each area may be used to cyclically locate the user in the whole house and track a movement track of each user. For example, a cycle is 1 second. The first electronic device performs detection at a frequency of 10 Hz (hertz) (10 times per second), and sends a detection result to the hub device at a frequency of 1 Hz (once per second). Each first electronic device in the whole house may locate (obtain the coordinates of the user in the fourth coordinate system) and track (obtain a movement track of the user in the fourth coordinate system) the user in a signal coverage area of the first electronic device. Optionally, for the plurality of first electronic devices whose signal coverage areas have the overlapping area, one of the plurality of first electronic devices may locate and track a user in the overlapping area. Further, in an implementation, each first electronic device in the whole house converts obtained coordinates or movement tracks of one or more users in the fourth coordinate system to coordinates or movement tracks in the fifth coordinate system, and sends the coordinates or the movement tracks of the one or more users in the fifth coordinate system to the hub device. In another implementation, each first electronic device in the whole house sends obtained coordinates or movement tracks of one or more users in the fourth coordinate system to the hub device. The hub device converts, to coordinates or movement tracks in the fifth coordinate system, the coordinates or the movement track that is of the user in the fourth coordinate system and that is received from each first electronic device. Optionally, converting the coordinates or the movement track of the user in the fourth coordinate system to the fifth coordinate system includes: converting, to the coordinates or the movement track in the fifth coordinate system after, the coordinates or the movement track that is of the user in the fourth coordinate system and that undergoes installation error correction. The hub device may store and cyclically update an obtained position of the user (for example, the coordinates of the user in the fifth coordinate system) or movement track (a coordinate track in the fifth coordinate system).

It should be noted that step (2) is not mandatory and is optional. For example, at the beginning of installation, correction is performed once. Later, correction is generally not required, or correction is performed once again after a long period of use. When step (2) is performed, step (3) does not need to be performed. When step (2) is not performed, step (3) is performed. That is, either step (2) or step (3) is performed.

(3) Obtain the position information of each device, area, and user, and the like in the fifth coordinate system through conversion from the first coordinate system, the second coordinate system, the third coordinate system, and the fourth coordinate system to the fifth coordinate system.

Conversion from the first coordinate system, the second coordinate system, the third coordinate system, and the fourth coordinate system to the fifth coordinate system may be specifically implemented as follows: Conversion between the second coordinate system, the third coordinate system, and the first coordinate system may be implemented by obtaining $C_e^b$ and $C_e^t$ based on the foregoing principle. The conversion between the fourth coordinate system and the first coordinate system is described in the foregoing principle part. After conversion from all the second coordinate system, the third coordinate system, and the fourth coordinate system to the first coordinate system, Ce may be obtained based on the foregoing principle. Then, conversion from the first coordinate system to the fifth coordinate system is implemented.

$$C_e^h =$$

$$\begin{bmatrix} cos\theta_e^h cos\psi_e^h + sin\varphi_e^h sin\theta_e^h sin\psi_e^h & cos\varphi_e^h sin\psi_e^h & sin\theta_e^h cos\psi_e^h - sin\varphi_e^h cos\theta_e^h sin\psi_e^h \\ -cos\theta_e^h sin\psi_e^h + sin\varphi_e^h sin\theta_e^h cos\psi_e^h & cos\varphi_e^h cos\psi_e^h & -sin\theta_e^h sin\psi_e^h - sin\varphi_e^h cos\theta_e^h cos\psi_e^h \\ -cos\varphi_e^h sin\theta_e^h & sin\varphi_e^h & cos\varphi_e^h cos\theta_e^h \end{bmatrix}$$

formula (15)

Herein, $\psi_e^h, \varphi_e^h$, and $\theta_e^h$ are respectively a heading angle, a pitch, and a roll of the fifth coordinate system relative to the first coordinate system. For the any point q in the space of the whole house, coordinates $qh=[x_q^h, y_q^h, z_q^h]$ of the any point q in the fifth coordinate system are obtained, the coordinates $qe=[x_q^e, y_q^e, z_q^e]$ of the any point q in the first coordinate system are obtained, and coordinates of an origin Oe of the first coordinate system in the fifth coordinate system are $[x_o^h, y_o^h, z_o^h]$. The coordinates of the point q in the first coordinate system may be converted to the fifth coordinate system according to formula (16).

$$[x_q^h, y_q^h, z_q^h]T=C_e^h \cdot [x_q^e, y_q^e, z_q^e]T+[x_o^h, y_o^h, z_o^h]T \quad formula \ (16)$$

Optionally, the first electronic device may convert coordinates of the first electronic device in the first coordinate system or the fourth coordinate system to the fifth coordinate system. To be specific, the coordinates in the fourth coordinate system do not need to be first converted into coordinates in the first coordinate system, and then the coordinates in the first coordinate system are converted into coordinates in the fifth coordinate system. Instead, the coordinates in the fourth coordinate system may be directly converted into the coordinates in the fifth coordinate system. Then, the converted coordinates in the fifth coordinate system are sent to the hub device. $C_m^h$ may be obtained based on the foregoing principle. Then, conversion from the fourth coordinate system to the fifth coordinate system is implemented.

$$C_m^h =$$

$$\begin{bmatrix} cos\theta_m^h cos\psi_m^h + sin\varphi_m^h sin\theta_m^h sin\psi_m^h & cos\varphi_m^h sin\psi_m^h & sin\theta_m^h cos\psi_m^h - sin\varphi_m^h cos\theta_m^h sin\psi_m^h \\ -cos\theta_m^h sin\psi_m^h + sin\varphi_m^h sin\theta_m^h cos\psi_m^h & cos\varphi_m^h cos\psi_m^h & -sin\theta_m^h sin\psi_m^h - sin\varphi_m^h cos\theta_m^h cos\psi_m^h \\ -cos\varphi_m^h sin\theta_m^h & sin\varphi_m^h & cos\varphi_m^h cos\theta_m^h \end{bmatrix}$$

formula (17)

Herein, $\psi_m^h, \varphi_m^h$, and $\theta_m^h$ are respectively a heading angle, a pitch, and a roll of the fifth coordinate system relative to the fourth coordinate system. For the any point q in the space of the whole house, the coordinates $qh=[x_q^h, y_q^h, z_q^h]$ of the any point q in the fifth coordinate system are obtained, coordinates $qm=[x_q^m, y_q^m, z_q^m]$ of the any point q in the fourth coordinate system are obtained, and coordinates of an origin Om of the fourth coordinate system in the fifth coordinate system are $[x_o^h, y_o^h, z_o^h]$. Coordinates of the point q in the first coordinate system may be converted to the fifth coordinate system according to formula (18).

$$[x_q^h, y_q^h, z_q^h]\mathrm{T} = \mathrm{C}_\mathrm{m}^\mathrm{h} \cdot [x_q^m, y_q^m, z_q^m]\mathrm{T} + [x_o^h, y_o^h, z_o^h]\mathrm{T} \quad \text{formula (18)}$$

Optionally, the foregoing conversion is performed by the hub device. The first electronic device separately sends coordinates of the first electronic device in the first coordinate system or the fourth coordinate system to the hub device. The hub device converts the coordinates, that are based on the first coordinate system or the fourth coordinate system of each first electronic device, into coordinates in the fifth coordinate system.

Optionally, one reference first electronic device is set in the plurality of first electronic devices. Another first electronic device other than the reference first electronic device sends coordinate information of the another first electronic device in a first coordinate system or a fourth coordinate system to the reference first electronic device. The reference first electronic device converts coordinates, that are based on the first coordinate system or the fourth coordinate system of each first electronic device, into coordinates of the fifth coordinate system, and sends, to the hub device, the coordinates in the fifth coordinate system that are obtained after conversion.

S2: The second electronic device performs a preset operation based on the position information of the user and the position information of the second electronic device.

In an embodiment of this application, the whole house is divided into one or more rooms and/or one or more areas, which do not overlap each other. The hub device may locate the room or the area by using the first electronic device, and obtain and store a coordinate range of each room or area. For example, the coordinate range of each room or area may be obtained according to the method in (b) in FIG. 14.

The hub device may determine a room or an area in which each first electronic device and each second electronic device are located. In an implementation, the user may query by using the hub device, for example, input a device name (a name of the first electronic device or a name of the second electronic device), a room or an area in which a device is located, or the like. In an implementation, at least one first electronic device is installed in each room or area. The hub device determines, based on an input of the user, a room or an area in which each first electronic device is located. In an implementation, the hub device determines, based on coordinates of the first electronic device or the second electronic device and the coordinate range of each room or area in the whole house, a room or an area in which each first electronic device or each second electronic device is located.

For example, as shown in (b) in FIG. 29, for a room whose horizontal direction is a quadrilateral, a smartphone may be separately placed at four positions in the room, namely, a point A, a point B, a point C, and a point D according to the method shown in (a) in FIG. 14. Coordinates ($x_A^h$, $y_A^h$, 0), ($x_B^h$, $y_B^h$, 0), ($x_C^h$, $y_C^h$, 0), and ($x_D^h$, $y_D^h$, 0) of the four positions, namely, the point A, the point B, the point C, and the point D, in the fifth coordinate system are separately obtained by using the first electronic device 100. A vertical line passing through the position A, a vertical line passing through the position B, a vertical line passing through the position C, and a vertical line passing through the position D may determine an area range of an area obtained, through division, in the room. Coordinates of the second electronic device in the fifth coordinate system are ($x_Q^h$, $y_Q^h$, $z_Q^h$), and ($x_Q^h$, $y_Q^h$, 0) are coordinates of a projected point Q of the second electronic device in a plane XhOhYh. A convex quadrilateral is obtained by connecting A, B, C, and D in sequence in the clockwise direction. Four sides of the convex quadrilateral are respectively $\overrightarrow{AB}$, $\overrightarrow{BC}$, $\overrightarrow{CD}$, and $\overrightarrow{DA}$. If it is determined that the point Q is on the right side of the four sides $\overrightarrow{AB}$, $\overrightarrow{BC}$, $\overrightarrow{CD}$, and $\overrightarrow{DA}$, it is determined that the point Q is located in the convex quadrilateral including the point A, the point B, the point C, and the point D. To be specific, it is determined that the second electronic device is located in the room. For example, if the coordinates ($x_Q^h$, $y_Q^h$, 0) of the point Q and the coordinates of the point A, the point B, the point C, and the point D satisfies formula (19), it is determined that the point Q is located in an area range including the point A, the point B, the point C, and the point D.

$$\overrightarrow{AB} \times \overrightarrow{AQ} < 0$$

$$\overrightarrow{BC} \times \overrightarrow{BQ} < 0 \hspace{4cm} \text{formula (19)}$$

$$\overrightarrow{CD} \times \overrightarrow{CQ} < 0$$

$$\overrightarrow{DA} \times \overrightarrow{DQ} < 0$$

Herein, $\times$ indicates a vector cross product. $\overrightarrow{AB} \times \overrightarrow{AQ}$ indicates a vector cross product of $\overrightarrow{AB}$ and $\overrightarrow{AQ}$. $\overrightarrow{BC} \times \overrightarrow{BQ}$ indicates a vector cross product of $\overrightarrow{BC}$ and $\overrightarrow{BQ}$. $\overrightarrow{CD} \times \overrightarrow{CQ}$ indicates a vector cross product of $\overrightarrow{CD}$ and $\overrightarrow{CQ}$. $\overrightarrow{DA} \times \overrightarrow{DQ}$ indicates a vector cross product of $\overrightarrow{DA}$ and $\overrightarrow{DQ}$. A vector cross product of two vectors is a scalar.

For example,

$$\overrightarrow{AB} = ((x_B^h - x_A^h), (y_B^h - y_A^h)), \ \overrightarrow{AQ} = ((x_Q^h - x_A^h), (y_Q^h - y_A^h)),$$

$$\overrightarrow{BC} = ((x_C^h - x_B^h), (y_C^h - y_B^h)), \ \overrightarrow{BQ} = ((x_Q^h - x_B^h), (y_Q^h - y_B^h)),$$

$$\overrightarrow{CD} = ((x_D^h - x_C^h), (y_D^h - y_C^h)), \ \overrightarrow{CQ} = ((x_Q^h - x_C^h), (y_Q^h - y_C^h)),$$

$$\overrightarrow{DA} = ((x_A^h - x_D^h), (y_A^h - y_D^h)), \ \overrightarrow{DQ} = ((x_Q^h - x_D^h), (y_Q^h - y_D^h)),$$

$$\overrightarrow{AB} \times \overrightarrow{AQ} = (x_B^h - x_A^h)(y_Q^h - y_A^h) \text{-} (x_Q^h - x_A^h)(y_B^h - y_A^h),$$

$$\overrightarrow{BC} \times \overrightarrow{BQ} = (x_C^h - x_B^h)(y_Q^h - y_B^h) \text{-} (x_Q^h - x_B^h)(y_C^h - y_B^h),$$

$$\overrightarrow{CD} \times \overrightarrow{CQ} = (x_D^h - x_C^h)(y_Q^h - y_C^h) \text{-} (x_Q^h - x_C^h)(y_D^h - y_C^h),$$

and

$$\overrightarrow{DA} \times \overrightarrow{DQ} = (x_A^h - x_D^h)(y_Q^h - y_D^h) \text{-} (x_Q^h - x_D^h)(y_A^h - y_D^h).$$

In an example, the hub device may store a device information table in the whole house. The device information table includes information about one or more devices (including but not limited to the first electronic device, the second electronic device, and the like) in the whole house. For example, the information about the device includes a device name and a room or an area (room) in which the device is located, and optionally, may further include coordinates (for example, coordinates in the fifth coordinate system) of the device. For example, the device information table is shown in Table 4.

**Table 4**

| Room | Device name | Coordinates |
|------|-------------|-------------|
| Living room | Home theater (left) | $(x_1^h, y_1^h, z_1^h)$ |
| Living room | Home theater (right) | $(x_2^h, y_2^h, z_2^h)$ |
| Living room | Router 1 | $(x_3^h, y_3^h, z_3^h)$ |

(continued)

| Room | Device name | Coordinates |
|---|---|---|
| Living room | Living-room television | $(x_4^h, y_4^h, z_4^h)$ |
| Primary bedroom | Bedside speaker | $(x_5^h, y_5^h, z_5^h)$ |
| Primary bedroom | Control panel 1 | $(x_6^h, y_6^h, z_6^h)$ |
| Secondary bedroom | Escritoire speaker | $(x_7^h, y_7^h, z_7^h)$ |
| Balcony | Balcony speaker | $(x_8^h, y_8^h, z_8^h)$ |
| ... | ... | ... |

The hub device may further determine a room or an area in which the user is located. In an implementation, the at least one first electronic device is installed in each room or area. The hub device determines the room or the area in which each first electronic device is located. The room or the area in which each first electronic device is located is the room or the area in which the user that can be detected by the first electronic device is located. In an implementation, the hub device determines the room or the area in which each user is located based on coordinates of the user and the coordinate range of each room or area in the whole house. For a specific method, refer to the method of determining, by the hub device based on the coordinates of the second electronic device and the coordinate range of each room or area in the whole house, the room or the area in which each second electronic device is located. Further, the hub device cyclically obtains the coordinates of the user, and determines, based on the coordinates of the user, the room or the area in which the user is located. In another implementation, the hub device obtains a coordinate range of the whole house and the coordinate range of each room or each area in the whole house based on a whole-house floor plan, an installation position of the hub device, a position of the installation position of the hub device in the whole-house floor plan, height information of the whole house, and the like. Then, the hub device may know, based on obtained coordinates of the user through comparison, the room or the area in which the user is located and that is in the whole house. The hub device may determine, based on a room or an area in which the user is currently located and a room or an area in which the user is located within a previous cycle, that the user enters another room or area from one room or area, or leaves the whole house, enters the whole house, or the like.

Optionally, the hub device may further obtain at least one of information such as a physiological feature, an identity category, and a human body attitude from the first electronic device in each room or each area, and then may subsequently notify or control, based on the at least one of the information such as the position information, the physiological feature, the identity category, and the human attitude, a corresponding second electronic device in a corresponding room or a corresponding area to perform the preset operation.

Specific content of S2 may be further described subsequently with reference to a specific scenario.

For example, (b) in FIG. 26 shows an implementation of the human sensing-based automatic control method according to an embodiment of this application. As shown in (b) in FIG. 26, the UWB module of the first electronic device locates the device, the room, the area, and the like in the whole house, obtains coordinates of the device in the whole house and the room or the area in which the device is located, and reports the coordinates and room or the area to the hub device. The millimeter-wave radar module of the first electronic device performs target tracking on the user in the whole house, and cyclically reports, to the hub device, the coordinates of the user in the whole house and the room or the area in which the user is located. The hub device sends a corresponding preset instruction to the second electronic device based on the coordinates of the second electronic device and the coordinates of the user. In an implementation, if it is determined that a relative position between a first user and the second electronic device satisfies a preset condition, the second electronic device is controlled to execute the preset instruction. Coordinates of the first user may be coordinates of one user or an average value of coordinates of a plurality of users. The second electronic device executes the preset instruction. In this way, for example, when the user approaches a smart lamp, the second electronic device can execute the preset instruction, for example, turn on the smart lamp, by performing a procedure shown in (b) in FIG. 26.

It should be noted that, in the human sensing-based automatic control method provided in embodiments of this application, the hub device may determine, based on the coordinates of the second electronic device and the coordinates of the user, that the second electronic device executes the preset instruction. Alternatively, another device other than the hub device may determine, based on the coordinates of the second electronic device and the coordinates of the user, that the second electronic device executes the preset instruction. Alternatively, the hub device sends the coordinates of the second electronic device and the coordinates of the user to the second electronic device, and the second electronic device determines, based on the coordinates, to execute the preset instruction. It may be understood that an execution body of the human sensing-based automatic control method is not limited in embodiments of this application.

5. Description of specific embodiments

After the general descriptions of the overall scenario, the hardware structure of the electronic device, the locating principle, and the human sensing-based automatic control method are provided, the following further describes, with reference to accompanying drawings and specific scenarios, the human sensing-based automatic control method by using a plurality of embodiments. In this way, how a user is enabled to perform automatic control on an IoT device more conveniently according to the technical solutions provided in embodiments of this application is more clearly described, to further improve user experience. In this process, the user does not need to carry any electronic device.

It should be noted that some embodiments include communication and interaction between a plurality of different second electronic devices and a hub device, and even further include communication interaction between the plurality of different second electronic devices. For ease of subsequent description, the following uses a first device, a second device, a third device, and the like to indicate different second electronic devices.

It should be noted that, in specific embodiments, the human sensing-based automatic control method provided in embodiments of this application may be separately refined into a human sensing-based method for automatically adjusting a beam by a routing device, a human sensing-based method for automatically adjusting a to-be-cleaned area by a cleaning device, a human sensing-based method for automatically obtaining human body information by a health management device, a human sensing-based automatic ascent/descent method for a drying device, a human sensing-based method for automatically adjusting light by a lighting device, and the like. The following specifically provides descriptions with reference to the specific embodiments.

**Embodiment 1**

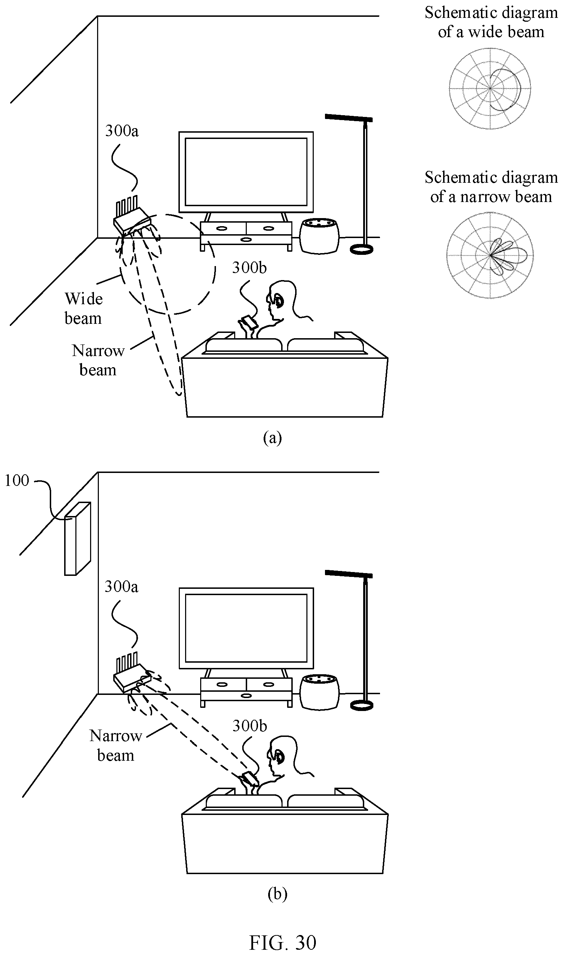

Embodiment 1 relates to FIG. 30, FIG. 31, and FIG. 32, and provides a human sensing-based method for automatically adjusting a beam by a routing device. Most routing devices (for example, routers) all include a plurality of antennas. A signal coverage range of the routing device is related to a beam shape of signals transmitted by the plurality of antennas. The multi-antenna routing device may increase transmit and receive gains of the signal in a beamforming manner. For example, FIG. 30 is a schematic diagram of a scenario of the method for automatically adjusting a beam by a routing device in a whole-house scenario according to an embodiment of this application. As shown in (a) in FIG. 30, in this embodiment, a second electronic device includes a routing device 300a (which may also be referred to as a first terminal) and a terminal device 300b (which may also be referred to as a second terminal). The terminal device 300b accesses a network through the routing device 300a. The routing device 300a is a multi-antenna routing device. The routing device 300a may provide a signal by forming a wide beam or a narrow beam from the beam. The wide beam has a wider coverage angle but a smaller signal gain, and usually include one lobe. The narrow beam has a larger signal gain but a smaller coverage angle, and usually includes a plurality of lobes. The plurality of lobes include one main lobe and a plurality of secondary lobes. The main lobe is also referred to as a maximum beam gain point. Generally, a multi-antenna routing device provides a signal by using a wide beam. As a result, the terminal device 300b of a user may fail to receive the signal provided by the routing device 300a, or although the terminal device 300b receives the signal provided by the routing device 300a, the provided signal is not a signal with a large gain. Consequently, user experience of using the terminal device 300b to access an internet through the routing device 300a or the like is poor. Optionally, the terminal device 300b includes a UWB module.

Based on the foregoing principle, the routing device 300a establishes a coordinate system of the routing device 300a, and performs marking in the foregoing marking manner based on whether the routing device 300a includes a UWB module. The first electronic device 100 obtains a position (for example, specific coordinates) of the routing device 300a and a position of the terminal device 300b through coordinate system conversion. In addition, the first electronic device 100 further obtains a position of the user.

In an implementation, the routing device 300a is controlled, based on the position of the user, the position of the routing device 300a, and the position of the terminal device 300b, to automatically adjust the beam (for example, according to a beamforming algorithm), so that, as shown in (b) in FIG. 30, the terminal device 300b can finally receive a narrow beam provided by the routing device 300a. In this way, the terminal device 300b can obtain a signal that has a large gain and accurate coverage and that is provided by the routing device 300a. Specifically, first, it may be determined whether the position of the user is the same as the position of the terminal device 300b, or whether the positions of (for example, a distance between) the user and the terminal device 300b fall within a preset range. Then, when the positions of the user and the terminal device 300b are the same or fall within the preset range, the routing device is controlled, based on the positions of the routing device 300a and the terminal device 300b or the positions of the routing device 300a and the user, to automatically adjust the beam (for example, according to the beamforming algorithm). Finally, as shown in (b) in FIG. 30, the maximum beam gain point provided by the routing device 300a points to the terminal device 300b, and the terminal device 300b can receive the narrow beam provided by the routing device 300a. This implementation is particularly applicable to scenarios such as a scenario in which the user accesses the internet with the terminal device 300b.

When there are M users, positions of the M users and positions of N terminal devices may be obtained. Then, M1 positions in which the positions of the N terminal devices are consistent with or have an error within the preset range with the positions of the M users may be obtained. In this case, the routing device 300a may be controlled to automatically adjust the beam (for example, according to the beamforming algorithm). The routing device 300a provides narrow pulse signals to the M1 positions in a time division multiplexing manner or the like. Because a time division slot is short, the user does not perceive the time division slot. Finally, all maximum beam gain points provided by the routing device 300a point to terminal devices in the M1 positions in the time division multiplexing manner. All the terminal devices in the M1 positions can receive narrow beams provided by the routing device 300a. M1 is less than or equal to M, and M1 is less than or equal to N. For example, it is obtained that there are five users and two terminal devices in a primary bedroom, and two positions in which the users are consistent with or having an error within the preset range with the terminal devices are obtained based on positions of the obtained five users and two terminal devices. The routing device 300a is controlled to separately provide the narrow beams to terminal devices in the two positions in a manner like time division multiplexing, so that the maximum beam gain points provided by the routing device 300a point to the terminal devices in the two positions. The terminal devices in the two positions can receive the narrow beams provided by the routing device 300a.

In an implementation, the routing device is controlled, based on the position of the routing device 300a and the position of the terminal device 300b, to automatically adjust the beam (for example, according to a beamforming algorithm), so that, as shown in (b) in FIG. 30, the terminal device 300b can finally receive the narrow beam provided by the routing device 300a. In this way, the terminal device 300b can obtain a signal that has a large gain and accurate coverage and that is provided by the routing device 300a. This implementation is particularly applicable to a scenario in which an IoT device (for example, a smart air conditioner) in a home or an office accesses a signal of the routing device 300a.

When there are a plurality of terminal devices 300b, positions of N terminal devices may be obtained. Then, the routing device 300a is controlled to automatically adjust the beam (for example, according to the beamforming algorithm). The routing device 300a provides narrow pulse signals to N positions in a manner like time division multiplexing. Because a time division slot is short, there is almost no delay for the N terminal devices. Finally, the maximum beam gain points provided by the routing device 300a point to terminal devices in the N positions in the time division multiplexing manner. All the terminal devices in the N positions can receive the narrow beams provided by the routing device 300a.

An execution body of the foregoing implementations may be the routing device 300a, the first electronic device 100, or a hub device (not shown in FIG. 30). For example, the hub device, the first electronic device 100, or the routing device 300a control, based on the position of the user, the position of the routing device 300a, and the position of the terminal device 300b, the routing device to automatically adjust the beam. When the routing device 300a is the execution body, the routing device 300a needs to communicate with the hub device or the first electronic device 100 in advance to obtain corresponding positions (for example, the position of the user, the position of the routing device 300a, and the position of the terminal device 300b).

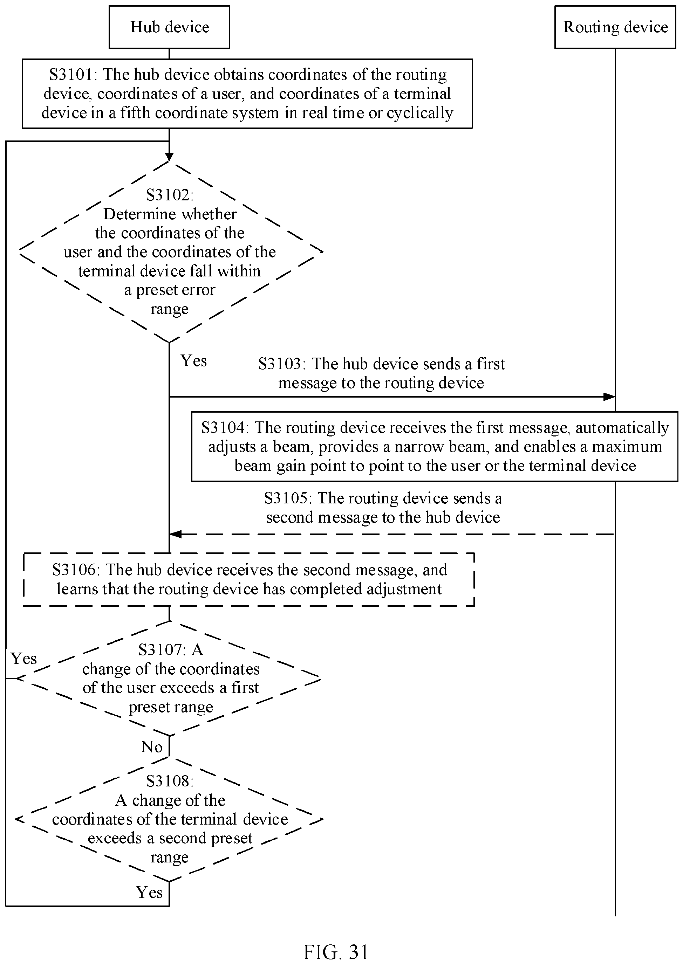

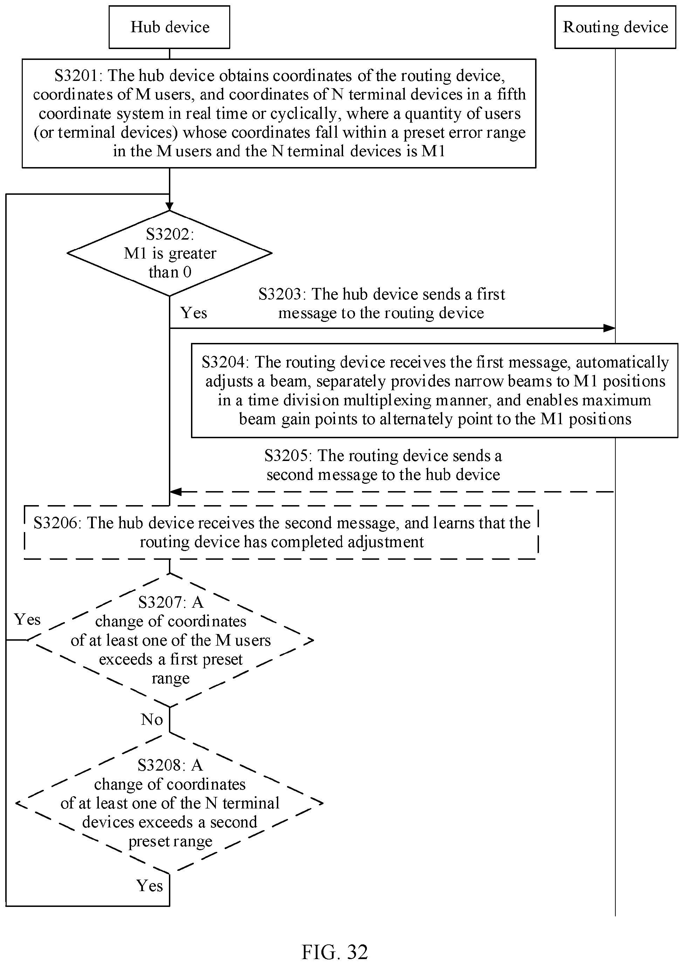

The following describes in detail a process of communication interaction between the hub device and the routing device with reference to FIG. 31 and FIG. 32 by using an example in which the execution body is the hub device, to describe an example of the human sensing-based method for automatically adjusting a beam by a routing device.

For example, FIG. 31 is a schematic flowchart of the human sensing-based method for automatically adjusting a beam by a routing device in the whole-house scenario according to an embodiment of this application. As shown in FIG. 31, the method includes the following steps.

S3101: The hub device obtains coordinates of the routing device, coordinates of the user, and coordinates of the terminal device in a fifth coordinate system in real time or cyclically.

S3102: Determine whether the coordinates of the user and the coordinates of the terminal device fall within a preset error range.

Optionally, the hub device determines whether the coordinates of the user and the coordinates of the terminal device fall within the preset error range. For example, the preset error range is 1 meter. If the coordinates of the user and the coordinates of the terminal device fall within the preset error range, it may be considered that the user is using the terminal device. If the coordinates of the user and the coordinates of the terminal device fall within the preset error range, subsequent steps are performed.

S3103: The hub device sends a first message to the routing device.

In an implementation, the hub device obtains a device attitude of the routing device according to the method described in the foregoing principle part. The hub device further calculates, based on the coordinates of the routing device in the fifth coordinate system, the device attitude of the routing device, and the coordinates of the user or the terminal device in the fifth coordinate system, coordinates of the user or the terminal device in a coordinate system established by the routing device.

Further, in an implementation, the hub device calculates a yaw of the user or the terminal device relative to the routing device based on the coordinates of the user or the terminal device in the coordinate system established by the routing device.

The hub device sends the first message to the routing device. The first message indicates the routing device to automatically adjust the beam. In an example, the first message includes yaw indication information, indicating the yaw of the user or the terminal device relative to the routing device.

S3104: The routing device receives the first message, automatically adjusts the beam, provides a narrow beam, and enables a maximum beam gain point to point to the user or the terminal device.

The routing device receives the first message, obtains the yaw indication information, and obtains the yaw of the user or the terminal device relative to the routing device based on the yaw indication information. The routing device automatically adjusts the beam based on the yaw of the user or the terminal device relative to the routing device, provides the narrow beam, and enables the maximum beam gain point to point to the user or the terminal device.

Optionally, as shown in FIG. 31, the method may further include the following steps.

S3105: The routing device sends a second message to the hub device.

The second message indicates that the routing device has completed automatically adjusting the beam.

S3106: The hub device receives the second message, and learns that the routing device has completed adjustment.

The hub device receives the second message, determines, based on the second message, that the routing device has completed adjustment, and continues to cyclically obtain the coordinates of the user and the coordinates of the terminal device in the fifth coordinate system.

S3107: A change of the coordinates of the user exceeds a first preset range.

If the hub device determines that the change of the coordinates of the user exceeds the first preset range, S3102 to S3104 is performed, so that the routing device automatically adjusts the beam, and enables the maximum beam gain point to point the user or the terminal device whose position changes. In this way, the maximum gain point of the narrow beam provided by the routing device moves with the position of the user. If the hub device determines that a change of the coordinates of the user does not exceed the first preset range, S3108 is performed.

S3108: A change of the coordinates of the terminal device exceeds a second preset range.

If the hub device determines that the change of the coordinates of the terminal device exceeds the second preset range, S3102 to S3104 are performed, so that the routing device automatically adjusts the beam, and enables the maximum beam gain point to point the user or the terminal device whose position changes. In this way, the maximum gain point of the narrow beam provided by the routing device moves with the position of the user.

For example, FIG. 32 is another schematic flowchart of the human sensing-based method for automatically adjusting a beam by a routing device in a whole-house scenario according to an embodiment of this application. As shown in FIG. 32, the method includes the following steps.

S3201: The hub device obtains coordinates of the routing device, coordinates of M users, and coordinates of N terminal devices in a fifth coordinate system in real time or cyclically, where a quantity of users (or terminal devices) whose coordinates fall within a preset error range in the M users and the N terminal devices is M1.

S3202: M1 is greater than 0.

If it is determined that M1 is greater than 0, subsequent steps are performed.

S3203: The hub device sends a first message to the routing device.

In an implementation, the hub device obtains a device attitude of the routing device according to the method described in the foregoing principle part. The hub device further separately calculates, based on the coordinates of the routing device in the fifth coordinate system, the device attitude of the routing device, and the coordinates of the M1 users (or terminal devices) in the fifth coordinate system, coordinates of the M1 users (or terminal devices) in a coordinate system established by the routing device.

Further, in an implementation, the hub device calculates a yaw of the user relative to the routing device based on coordinates of each of the M1 users (or terminal devices) in the coordinate system established by the routing device.

The hub device sends the first message to the routing device. The first message indicates the routing device to automatically adjust the beam. In an example, the first message includes M1 pieces of yaw indication information. Each piece of yaw indication information indicates a yaw of one user (or terminal device) relative to the routing device.

S3204: The routing device receives the first message, automatically adjusts the beam, separately provides narrow beams to M1 positions in a time division multiplexing manner, and enables maximum beam gain points to alternately point to the M1 positions.

The routing device receives the first message, obtains the M1 pieces of yaw indication information, and obtains yaws of the M1 users (or terminal devices) relative to the routing device based on the M1 pieces of yaw indication information. The routing device automatically adjusts the beam based on the yaws of the M1 users (or terminal devices) relative to the routing device, and separately provides the narrow beams to the M1 positions in the time division multiplexing manner, so that the maximum beam gain points alternately point to the M1 positions.

Optionally, as shown in FIG. 32, the method may further include the following steps.

S3205: The routing device sends a second message to the hub device.

S3206: The hub device receives the second message, and learns that the routing device has completed adjustment.

The hub device receives the second message, determines, based on the second message, that the routing device has completed adjustment, and continues to cyclically obtain the coordinates of the user and the coordinates of the terminal device in the fifth coordinate system.

S3207: A change of coordinates of at least one of the M users exceeds a first preset range.

If the hub device determines that the change of the coordinates of the at least one of the M users exceeds the first preset range, S3202 to S3204 are performed, so that the routing device automatically adjusts the beam based on position movement of the user or the terminal device, and separately provides narrow beams to a plurality of positions in the time division multiplexing manner. In this way, the maximum gain point of the narrow beam provided by the routing device moves with a position of the user. If the hub device determines that no change of the coordinates of the user exceeds the first preset range, S3208 is performed.

S3208: A change of coordinates of at least one of the N terminal devices exceeds a second preset range.

If the hub device determines that the change of the coordinates of the at least one of the N terminal devices exceeds the second preset range, S3202 to S3204 are performed, so that the routing device automatically adjusts the beam based on position movement of the user or the terminal device, and separately provides the narrow beams to the plurality of positions in the time division multiplexing manner. In this way, the maximum gain point of the narrow beam provided by the routing device moves with the position of the user.

## Embodiment 2

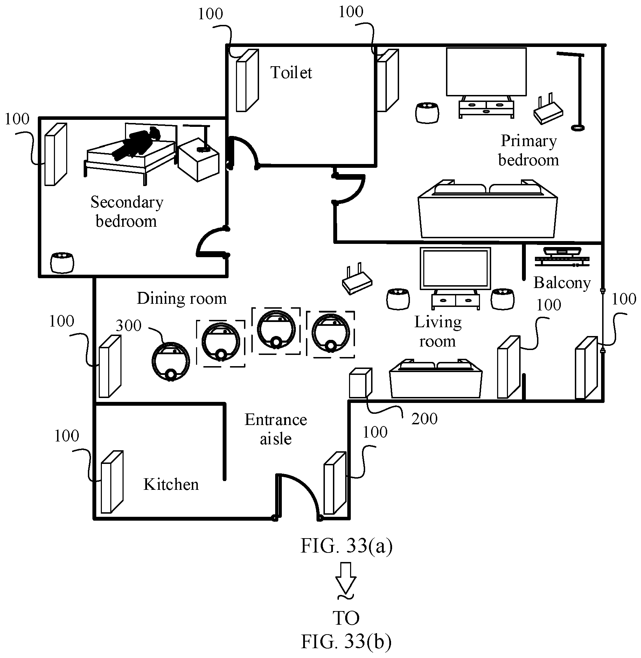

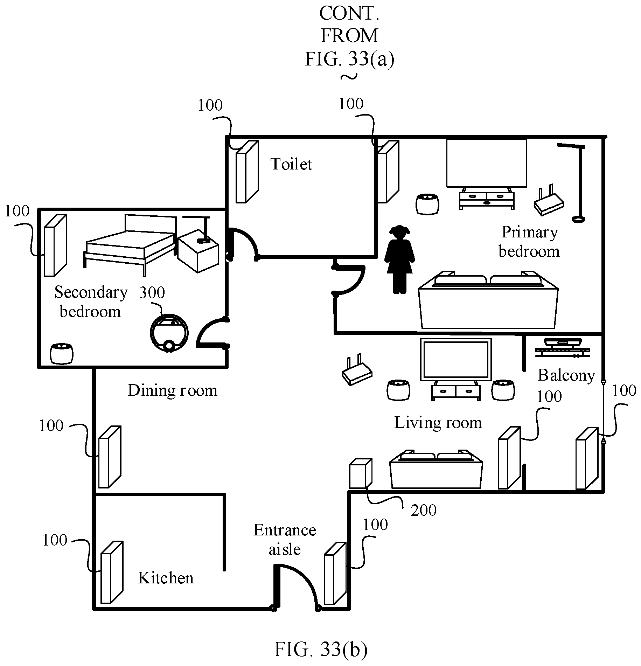

Embodiment 2 relates to FIG. 33(a) and FIG. 33(b), FIG. 34A and FIG. 34B, FIG. 35A and FIG. 35B, and FIG. 36, and provides a human sensing-based method for automatically adjusting a to-be-cleaned area by a cleaning device. The cleaning device (for example, a floor-sweeping robot or a floor-mopping robot) is an important IoT device in a whole-house intelligent system. Generally, the cleaning device can draw a map of a whole house based on a laser radar module and an IMU module of the cleaning device after completing cleaning in the whole house a plurality of times. The cleaning device may perform automatic cleaning based on the whole-house map. A user may install, on an electronic device, an application (application, App) matching the cleaning device, and specify, by using the App, a to-be-cleaned area for the cleaning device, an area that is not to be cleaned, or control a cleaning route of the cleaning device. However, this operation manner is complex, and user experience is poor. According to the human sensing-based method for automatically adjusting a to-be-cleaned area by a cleaning device provided in embodiments of this application, the cleaning device automatically adjusts the to-be-cleaned area based on a position of a user, and automatically avoids a room or an area in which the user is located, without performing an operation by the user and carrying any electronic device by the user. For example, as shown in FIG. 33(a), the user is in a secondary bedroom, and the floor-sweeping robot automatically avoids the secondary bedroom during cleaning, and first cleans an area like a living room. As shown in FIG. 33(b), the user leaves the secondary bedroom, and the floor-sweeping robot enters the secondary bedroom for cleaning. The floor-sweeping robot automatically avoids the user during cleaning.

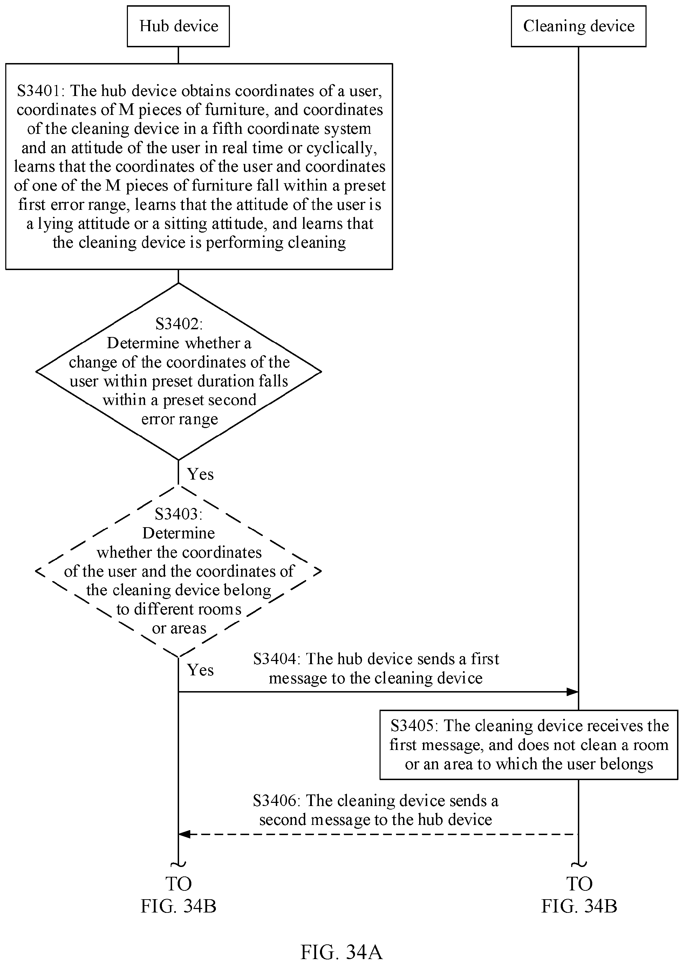

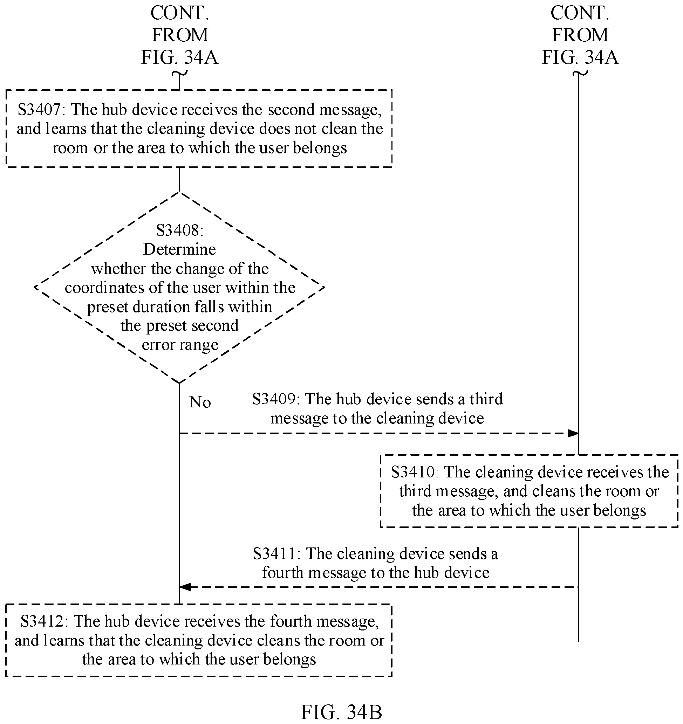

For example, as shown in FIG. 34A and FIG. 34B, a human sensing-based method for automatically adjusting a to-be-cleaned area by a cleaning device provided in an embodiment of this application may include the following steps.

S3401: A hub device obtains coordinates of a user, coordinates of M pieces of furniture, and coordinates of the cleaning device in a fifth coordinate system and an attitude of the user in real time or cyclically, learns that the coordinates of the user and coordinates of one of the M pieces of furniture fall within a preset first error range, learns that the attitude of the user is a lying attitude or a sitting attitude, and learns that the cleaning device is performing cleaning.

For example, a whole house includes the M pieces of furniture. M is greater than or equal to 0. For example, the M pieces of furniture may include a bed, a sofa, and a chair. If the coordinates of the user and the coordinates of the one of the M pieces of furniture fall within the preset first error (for example, 0.5 m) range, it may be considered that the user is on the furniture. For example, the user sits or lies on the bed, the sofa, or the chair. The cleaning device performs cleaning in the house.

The hub device may obtain the coordinates of the user, the coordinates of the M pieces of furniture, and the coordinates of the cleaning device in the whole house in real time or cyclically according to the method described in the foregoing principle part. The hub device may further obtain, based on the coordinates of the user and the coordinates of the M pieces of furniture, that the coordinates of the user and the coordinates of the one of the M pieces of furniture fall within the preset first error range. The hub device may obtain the attitude of the user, and determine that the attitude of the user is the lying attitude or the sitting attitude.

The hub device may also learn that the cleaning device is performing cleaning. In an implementation, when starting cleaning, the cleaning device sends a start indication message to the hub device. If the hub device receives the start indication message, the hub device learns that the cleaning device is performing cleaning. In another implementation, if the hub device determines, based on the coordinates of the cleaning device, that the cleaning device is moving, the hub device learns that the cleaning device is performing cleaning.

Optionally, the hub device obtains a coordinate range of each room or area in the whole house, that is, obtains a whole-house map, and sends the whole-house map to the cleaning device.

S3402: The hub device determines whether a change of the coordinates of the user within preset duration falls within a preset second error range.

For example, the preset duration is 10 minutes, and the preset second error range is 1 meter. Generally, when the user rests, the change of the coordinates of the user within the preset duration falls within the preset second error range. In an implementation, the hub device further determines that the attitude of the user is the lying attitude or the sitting attitude.

S3403: The hub device determines whether the coordinates of the user and the coordinates of the cleaning device belong to different rooms or areas.

Optionally, if the hub device determines that the coordinates of the user and the coordinates of the cleaning device belong to the different rooms or areas, the hub device sends a first message to the cleaning device, to indicate that the cleaning device not to clean a room or an area to which the user belongs. For example, the first message includes first area indication information. The first area indication information indicates a room or an area that is not to be cleaned by the cleaning device.

S3404: The hub device sends the first message to the cleaning device.

S3405: The cleaning device receives the first message, and does not clean the room or the area to which the user belongs.

S3406: The cleaning device sends a second message to the hub device.

Optionally, the cleaning device sends the second message to the hub device, to indicate that the cleaning device does not clean the room or the area to which the user belongs.

S3407: The hub device receives the second message, and learns that the cleaning device does not clean the room or the area to which the user belongs.

The hub device receives the second message, and updates stored running information of the cleaning device to not cleaning the room or the area to which the user belongs.

S3408: The hub device determines whether the change of the coordinates of the user within preset duration falls within the preset second error range.

Optionally, the hub device continues to obtain the coordinates of the user in the whole house in real time or cyclically. If it is determined that the change of the coordinates of the user within the preset duration does not fall within the preset second error range, that is, the user leaves an original position (for example, the second error range is 1 meter) or the user leaves the room or the area (for example, the second error range is 5 meters), the hub device sends a third message to the cleaning device, to indicate the cleaning device to clean the room or the area to which the user belongs.

S3409: The hub device sends the third message to the cleaning device.

Optionally, the third message includes area information. The area information indicates a room or an area that needs to be cleaned.

S3410: The cleaning device receives the third message, and cleans the room or the area to which the user belongs.

In an example, the cleaning device receives the third message, obtains the area information, and cleans the room or the area indicated by the area information.

In an example, the cleaning device stores the room or the area to which the user belongs. After receiving the third message, the cleaning device performs cleaning based on the stored room or area information.

S3411: The cleaning device sends a fourth message to the hub device.

Optionally, the cleaning device sends the fourth message to the hub device, to indicate that the cleaning device cleans the room or the area to which the user belongs. For example, the fourth message includes second area indication information. The second area indication information indicates the room or the area that is cleaned by the cleaning device.

S3412: The hub device receives the fourth message, and learns that the cleaning device cleans the room or the area to which the user belongs.

The hub device receives the fourth message, and updates the stored running information of the cleaning device to cleaning the room or the area to which the user belongs.

In this example, the cleaning device and the user are located in the different rooms or areas. During cleaning, the cleaning device automatically avoids the room or the area in which the user is located. When the user starts an activity or the user leaves the room or the area, the cleaning device automatically enters the room or the area for cleaning.

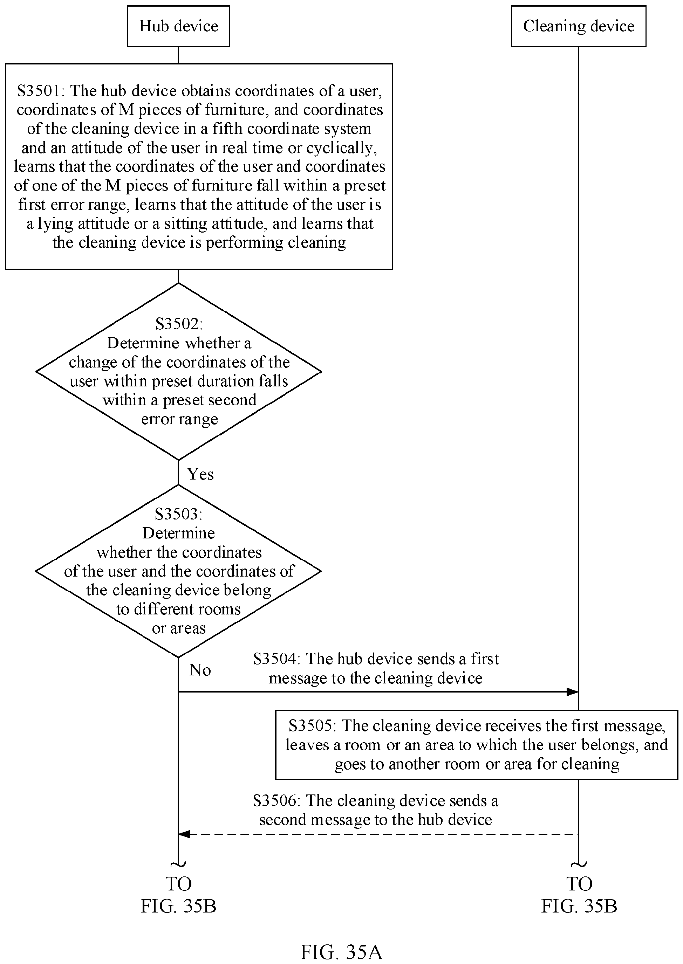

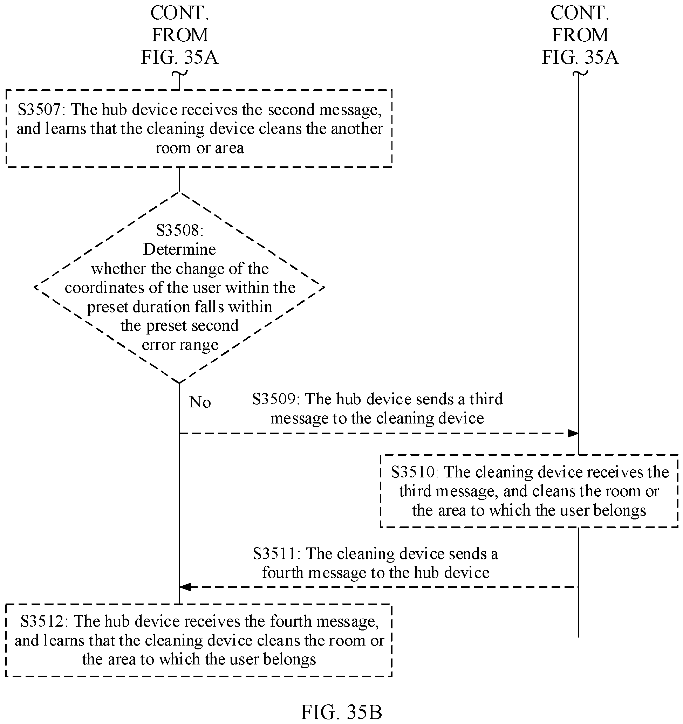

In another example, as shown in FIG. 35A and FIG. 35B, a human sensing-based method for automatically adjusting a to-be-cleaned area by a cleaning device provided in an embodiment of this application may include the following steps.

S3 50 1: A hub device obtains coordinates of a user, coordinates of M pieces of furniture, and coordinates of the cleaning device in a fifth coordinate system and an attitude of the user in real time or cyclically, learns that the coordinates of the user and coordinates of one of the M pieces of furniture fall within a preset first error range, learns that the attitude of the user is a lying attitude or a sitting attitude, and learns that the cleaning device is performing cleaning.

S3502: The hub device determines whether a change of the coordinates of the user within preset duration falls within a preset second error range.

For S3501 and S3502, refer to S3401 and S3402. Details are not described herein again.

S3503: The hub device determines whether the coordinates of the user and the coordinates of the cleaning device belong to different rooms or areas.

Optionally, if the hub device determines that the coordinates of the user and the coordinates of the cleaning device belong to a same room or area, the hub device sends a first message to the cleaning device, to indicate that the cleaning device not to clean a room or an area to which the user belongs.

S3504: The hub device sends the first message to the cleaning device.

S3505: The cleaning device receives the first message, leaves the room or the area to which the user belongs, and goes to another room or area for cleaning.

S3506: The cleaning device sends a second message to the hub device.

S3507: The hub device receives the second message, and learns that the cleaning device cleans the another room or area.

S3508: Determine whether the change of the coordinates of the user within the preset duration falls within the preset second error range.

S3509: The hub device sends the third message to the cleaning device.

S3510: The cleaning device receives the third message, and cleans the room or the area to which the user belongs.

S3511: The cleaning device sends a fourth message to the hub device.

S3512: The hub device receives the fourth message, and learns that the cleaning device cleans the room or the area to which the user belongs.

For S3506 to S3512, refer to S3406 to S3412. Details are not described herein again.

In this example, the cleaning device and the user are located in the same room or area. The cleaning device leaves the room or area where the user is located and cleans other rooms or areas first. If the user starts an activity or the user leaves the room or the area, the cleaning device automatically enters the room or the area for cleaning.

Embodiments of this application further provide some implementations. For example, the user may specify, by using a speech or a mobile device, a to-be-cleaned area or an area that is not to be cleaned. The cleaning device cleans or avoids cleaning the specified area.

In some embodiments, the user specifies the area by using the speech. The cleaning device determines the to-be-cleaned area based on the specified area in the speech of the user, and determines a coordinate range of the to-be-cleaned area based on the to-be-cleaned area and a whole-house map.

In an example, the specified area is the to-be-cleaned area. For example, the user speaks a speech "Clean a living room" or "Clean a bedroom" to a speech input device (for example, a smart speaker). The speech input device performs semantic recognition on the speech input by the user, and generates a corresponding speech instruction. For example, the smart speaker receives the speech "Clean a living room", performs semantic recognition on the received speech, and converts the speech into a corresponding first speech instruction. The first speech instruction indicates the specified area (the specified area is the living room). The smart speaker sends the first speech instruction to the cleaning device. The cleaning device receives the first speech instruction, determines, based on the first speech instruction, that the specified area is the living room, and moves to the living room for cleaning.

In another example, the designated area is the area that is not to be cleaned. For example, the user speaks a speech "Do not clean a living room" or "Do not clean a bedroom" to a speech input device (for example, a smart speaker). The speech input device performs semantic recognition on the speech input by the user, and generates a corresponding speech instruction. For example, the smart speaker receives the speech "Do not clean a living room", performs semantic recognition on the received speech, and converts the speech into a corresponding second speech instruction. The second speech instruction indicates the specified area (the specified area is the living room). The smart speaker sends the second speech instruction to the cleaning device. If the cleaning device receives the second speech instruction, and determines, based on the second speech instruction, that the specified area is the living room, the cleaning device determines that the to-be-cleaned area is an area in a whole house other than the living room. The cleaning device avoids the living room during cleaning.

In some other embodiments, the user specifies, by using a speech, an area determined by using the position of the user as a reference. The to-be-cleaned area is determined based on a current position of the user and the area determined by using the position of the user as the reference.

In an example, the user specifies the to-be-cleaned area. For example, the user speaks a speech "Clean a room in which I am located" or "Clean an area 1 meter around me" to a speech input device (for example, a smart speaker). The speech input device performs semantic recognition on the speech input by the user, and generates a corresponding speech instruction. For example, the smart speaker receives the speech "Clean a room in which I am located", performs semantic recognition on the received speech, and converts the received speech into a corresponding third speech instruction. The third speech instruction indicates the specified area (for example, the specified area is the room in which the user is located) determined by using the position of the user as the reference. The smart speaker sends the third speech instruction to the cleaning device (or the hub device). The cleaning device (or the hub device) receives the third speech instruction, and determines the to-be-cleaned area based on the third speech instruction.

For example, the hub device obtains a quantity of users in the whole house and coordinates of each user. If it is determined that there is one user in the whole house, the room in which the user is located is determined based on coordinates of the user. If it is determined that there is more than one user in the whole house, the hub device sends confirmation indication information to the smart speaker that sends the speech instruction, to indicate the smart speaker to play confirmation information. The confirmation information is for confirming, to the user, an identity of the user who inputs the speech. For example, the smart speaker plays a speech "Which host gave the task". For example, the user inputs "Clean a room in which I am located" again by using a speech. The smart speaker receives the input speech, and sends the third speech instruction to the hub device. The hub device receives the third speech instruction again, determines that the user who inputs the speech is a user closest to the smart speaker, and determines, based on coordinates of the user, the room in which the user is located. For another example, the user inputs a speech "Clean a room in which Dad is located". The smart speaker receives the speech "Clean a room in which Dad is located", performs semantic recognition on the received speech, and converts the received speech into a corresponding fourth speech instruction. The fourth speech instruction indicates the specified area (the specified area is the room in which Dad is located) determined by using the position of the user as the reference. The smart speaker sends the fourth speech instruction to the hub device. If the hub device stores a user identity of each user, the hub device determines the room in which the user is located based on the coordinates of the user. After determining the to-be-cleaned area, the hub device notifies the cleaning device to clean the area.

In another example, the user specifies the area that is not to be cleaned. For example, the user speaks a speech "Do not clean a room in which I am located" or "Do not clean an area 1 meter around me" to a speech input device (for example, a smart speaker). If the cleaning device determines that the specified area is the room in which the user is located, it is determined that the to-be-cleaned area is an area in the whole house other than the room in which the user is located.

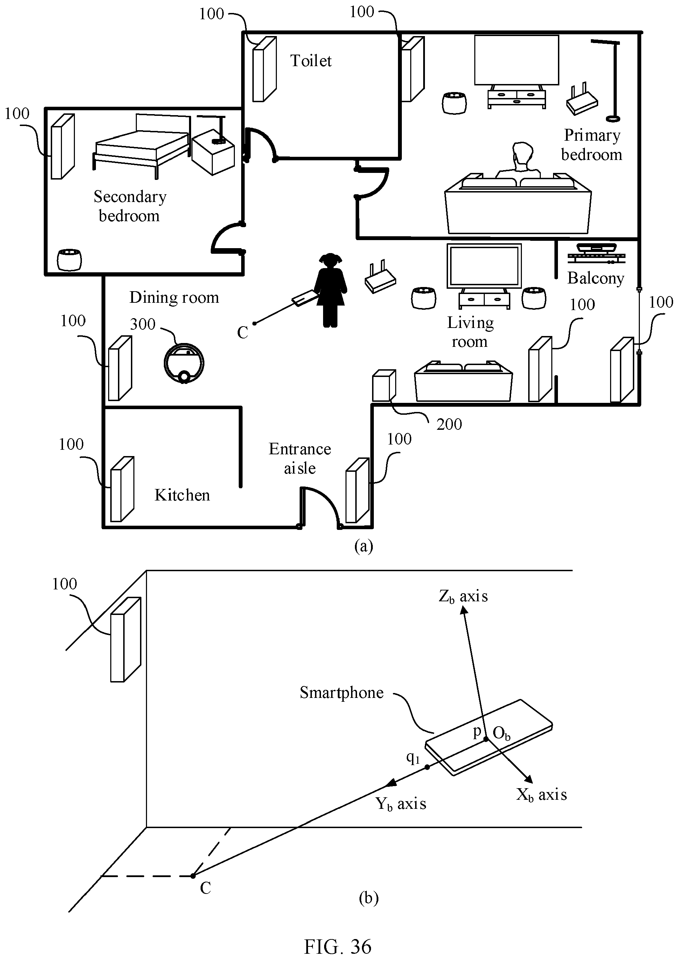

In some other embodiments, the user specifies, by using the mobile device, the to-be-cleaned area or the area that is not to be cleaned. For example, as shown in (a) in FIG. 36, the user points to a point C on the ground by using the mobile device. The hub device obtains coordinates and a device attitude of the mobile device, and obtains coordinates of the point C on the ground based on the coordinates and the device attitude of the mobile device. The hub device sends the coordinates of the point C to a cleaning device 300. The cleaning device 300 moves to the point C for cleaning. Certainly, the user may alternatively point to an area on the ground by using the mobile device. For example, the user points to a point C 1, a point C2, and a point C3 on the ground by using the mobile device. The hub device obtains coordinates of the point C1, coordinates of the point C2, and coordinates of the point C3, that is, obtains a coordinate range of a triangular area, that uses the point C1, the point C2, and the point C3 as vertexes, on the ground. For example, the user points to a point C1, a point C2, a point C3, and a point C4 on the ground by using the mobile device. The hub device obtains coordinates of the point C1, coordinates of the point C2, coordinates of the point C3, and coordinates of the point C4, that is, obtains a coordinate range of a quadrilateral area, that uses the point C1, the point C2, the point C3, and the point C4 as vertexes, on the ground. The cleaning device 300 learns that the to-be-cleaned area is an area formed by a plurality of points at which the mobile device points to the ground.

For example, the mobile device is a smartphone. As shown in (b) in FIG. 36, the first electronic device 100 locates the smartphone, to obtain coordinates (namely, coordinates of a point p) of the smartphone in the fifth coordinate system. The smartphone determines a device attitude of the smartphone by using an IMU module. The smartphone establishes a second coordinate system based on the coordinates of the point p and the device attitude. A point q1 whose distance from an origin Ob is 1 and that is on a Yb axis of the second coordinate system established by the smartphone is defined. The first electronic device 100 obtains the coordinates of the point q1. A straight line is determined based on the coordinates of the point p and the coordinates of the point q1. An intersection between the straight line and the ground is the point C.

**Embodiment 3**

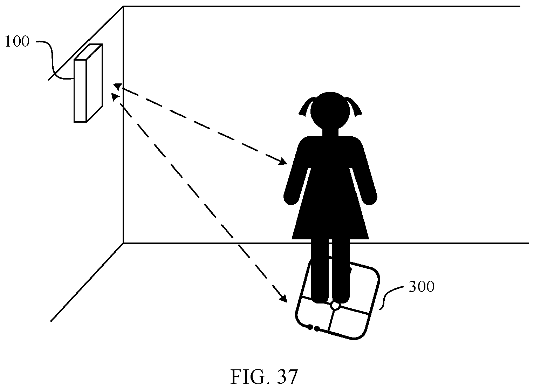

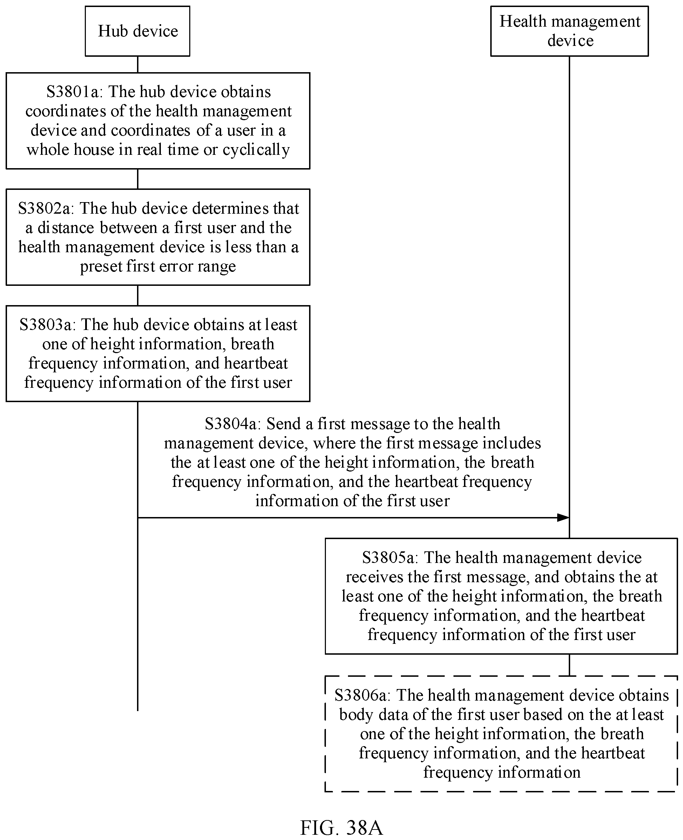

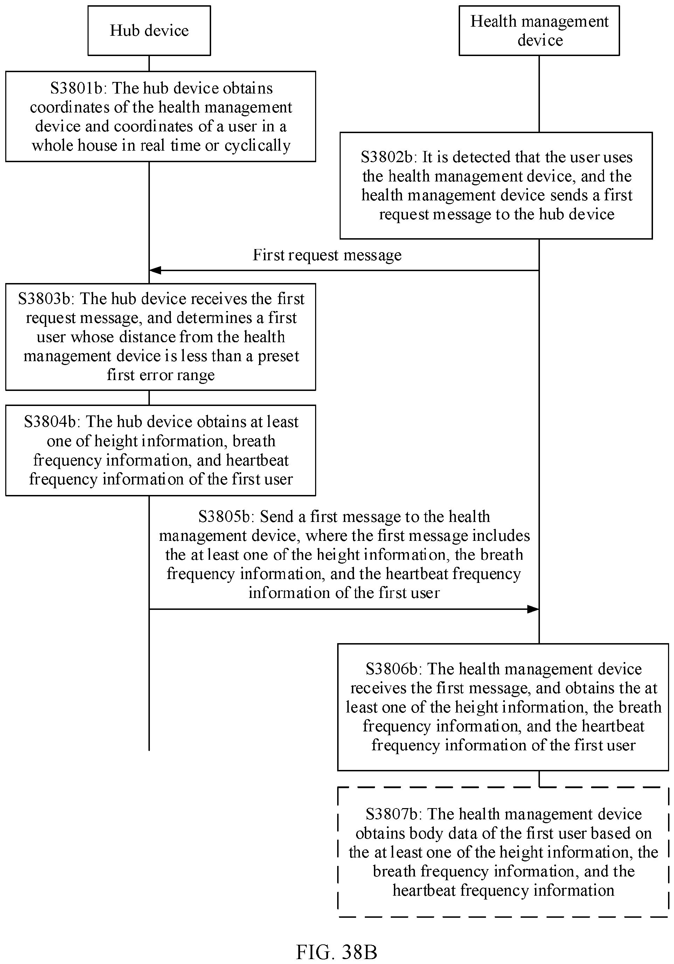

Embodiment 3 relates to FIG. 37, FIG. 38A, and FIG. 38B, and provides a human sensing-based method for automatically obtaining human body information by a health management device.

The health management device includes a body fat scale, a physical examination scale, a body weight scale, and the like. Generally, the health management device (for example, the body fat scale) can measure a body weight of a user, and may calculate, with reference to height information manually input by the user, body data such as a body fat rate, a body mass index (body mass index, BMI), a muscle mass, a basal metabolic rate, and a visceral fat level of the user. In addition, the user also needs to manually match, with the user, body data such as the body weight and the body fat rate that are obtained through measurement by the body fat scale. A user operation is complex.

According to the human sensing-based method for automatically obtaining human body information by a health management device provided in embodiments of this application, a user does not need to manually input information, and the user does not need to carry any device neither. Human body information such as a height, a breath frequency, and a heartbeat frequency of the user is automatically obtained, to obtain body data of the user. For example, as shown in FIG. 37, when the user stands on a body fat scale 300, the body fat scale 300 may automatically obtain the information such as the height, the breath frequency, and the heartbeat frequency of the user, and calculate the body data of the user.

For example, as shown in FIG. 38A, a human sensing-based method for automatically obtaining human body information by a health management device provided in an embodiment of this application may include the following steps.

S3801a: A hub device obtains coordinates of the health management device and coordinates of a user in a whole house in real time or cyclically.

S3802a: The hub device determines that a distance between a first user and the health management device is less than a preset first error range.

The hub device determines, based on the coordinates of the health management device and coordinates of one or more users in the whole house, that the distance between the first user in the one or more users and the health management device is less than the preset first error range. For example, the first error range is 0.5 meter. If the hub device determines that the distance between the first user and the health management device is less than the preset first error range, the hub device determines that the first user uses the health management device (for example, the first user stands on a body fat scale).

In an example, if the hub device determines that there is no user whose distance from the health management device is less than the preset first error range, it indicates that a position of the health management device changes after the position of the health management device is obtained last time. The hub device may obtain the coordinates of the health management device in real time again, and obtains the first user whose distance from the health management device is less than the preset first error range.

S3803a: The hub device obtains at least one of height information, breath frequency information, and heartbeat frequency information of the first user.

The hub device obtains the at least one of the height information, the breath frequency information, and the heartbeat frequency information of the first user according to the method described in the foregoing principle part.

S3804a: The hub device sends a first message to the health management device. The first message includes the at least one of the height information, the breath frequency information, and the heartbeat frequency information of the first user.

S3805a: The health management device receives the first message, and obtains the at least one of the height information, the breath frequency information, and the heartbeat frequency information of the first user.

S3 806a: The health management device obtains the body data of the first user based on the at least one of the height information, the breath frequency information, and the heartbeat frequency information.

Optionally, the health management device obtains the body data of the first user based on the at least one of the height information, the breath frequency information, and the heartbeat frequency information. The body data includes a body fat rate, a body mass index (body mass index, BMI), a muscle mass, a basal metabolic rate, a visceral fat level, and the like.

Optionally, if a plurality of users all use the health management device, each time after obtaining body data, the health management device needs to store the currently obtained body data to one of the plurality of users.

In an implementation, the health management device (or a first electronic device or the hub device) stores historical body data of each user. The currently obtained body data and the one of the plurality of users may be matched by comparing one or more items (for example, a height and a body weight) of the currently obtained body data with the stored body data. For example, in the stored user body data, a height of a user 1 is 178 cm, a height of a user 2 is 160 cm, and a height of a user 3 is 120 cm. If the height in the currently obtained body data is 160 cm, the currently obtained body data is stored as body data of the user 2.

In an implementation, the hub device or the first electronic device obtains and stores an identity of each user. For example, the user performs unlocking through a smart door lock by using a fingerprint, and the hub device obtains the user identity based on the fingerprint of the user. The first message sent by the hub device to the health management device may further include user identity indication information. The health management device obtains an identity of the first user based on the identity indication information, and may match the currently obtained body data with the one of the plurality of users.

For example, as shown in FIG. 38B, a human sensing-based method for automatically obtaining human body information by a health management device provided in an embodiment of this application may include the following steps.

S3801b: A hub device obtains coordinates of the health management device and coordinates of a user in a whole house in real time or cyclically.

S3802b: It is detected that the user uses the health management device, and the health management device sends a first request message to a hub device.

The health management device detects that the user uses the health management device. For example, a body fat scale detects, by using a gravity sensor, that the user stands on the body fat scale. The health management device sends the first request message to the hub device. The first request message indicates the hub device to obtain user data.

S3803b: The hub device receives the first request message, and determines a first user whose distance from the health management device is less than a preset first error range.

The hub device receives the first request message, and determines, based on the coordinates of the health management device and coordinates of one or more users in the whole house, the first user whose distance from the health management device is less than the preset first error range. For example, the first error range is 0.5 meter. If the hub device determines that the distance between the first user and the health management device is less than the preset first error range, the hub device determines that the first user uses the health management device (for example, the first user stands on the body fat scale).

In an example, if the hub device determines that there is no user whose distance from the health management device is less than the preset first error range, it indicates that a position of the health management device changes after the position of the health management device is obtained last time. The hub device may obtain the coordinates of the health management device in real time again, and obtains the first user whose distance from the health management device is less than the preset first error range.

S3804b: The hub device obtains at least one of height information, breath frequency information, and heartbeat frequency information of the first user.

S3805b: The hub device sends a first message to the health management device. The first message includes the at least one of the height information, the breath frequency information, and the heartbeat frequency information of the first user.

S3806b: The health management device receives the first message, and obtains the at least one of the height information, the breath frequency information, and the heartbeat frequency information of the first user.

S3807b: The health management device obtains body data of the first user based on the at least one of the height information, the breath frequency information, and the heartbeat frequency information.

For S3804b to S3807b, refer to S3803a to S3806a. Details are not described herein again.

In this embodiment, when the user uses the health management device, the hub device automatically obtains the height information, the breath frequency information, the heartbeat frequency information, and the like of the first user whose distance from the health management device is less than the preset first error range. In this way, the health management device can automatically calculate the body data like the body fat rate, the body mass index (body mass index, BMI), the muscle mass, the basal metabolic rate, and the visceral fat level, without inputting information by the user. This improves convenience of using the health management device by the user. Further, the health management device may further automatically match, with a corresponding user, body data measured each time, to reduce a user operation.

**Embodiment 4**

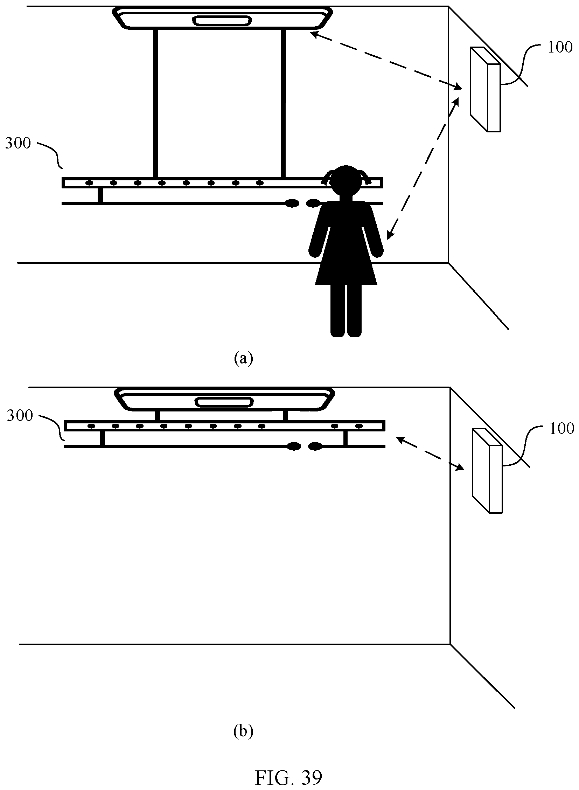

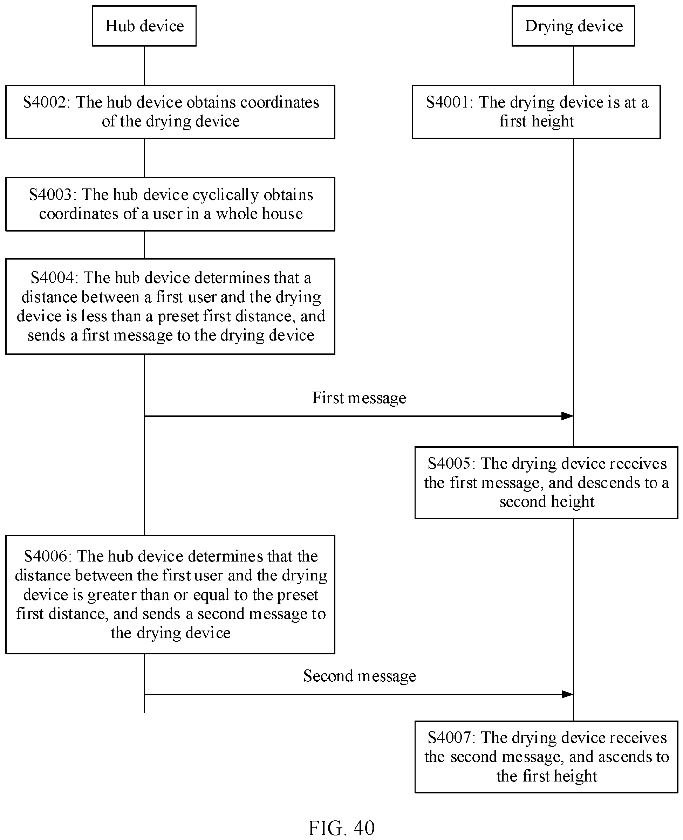

Embodiment 4 relates to FIG. 39 and FIG. 40, and provides a human sensing-based automatic ascent/descent method for a drying device.

According to the human sensing-based automatic ascent/descent method for a drying device provided in embodiments of this application, the drying device automatically ascends or descends based on a position of a user, without performing a manual operation by the user. This improves user experience. For example, as shown in (a) in FIG. 39, the user approaches a smart clothes hanger 300, and the smart clothes hanger 300 automatically descends. As shown in (b) in FIG. 39, the user leaves the smart clothes hanger 300, and the smart clothes hanger 300 automatically ascends. The user does not need to perform the manual operation, and the user does not need to carry any device neither.

For example, as shown in FIG. 40, a human sensing-based automatic ascent/descent method for a drying device provided in an embodiment of this application may include the following steps.

S4001: The drying device is at a first height.

For example, after the drying device is installed, a height of the drying device from the ground is the first height.

S4002: A hub device obtains coordinates of the drying device.

The hub device obtains the coordinates of the drying device in real time or cyclically. It should be noted that the coordinates of the drying device may be coordinates of a UWB module in the drying device, coordinates of the gravity center or the center of the drying device, or the like.

S4003: The hub device cyclically obtains coordinates of a user in a whole house.

S4004: The hub device determines that a distance between a first user and the drying device is less than a preset first distance, and sends a first message to the drying device.

For example, the preset first distance is 0.2 meter. That the distance between the first user and the drying device is less than the preset first distance means that the first user approaches the drying device. The hub device determines that the distance between the first user and the drying device is less than the preset first distance, and sends the first message to the drying device. The first message indicates the drying device to descend.

Optionally, the hub device further determines duration within which the distance between the first user and the drying device is less than preset first distance. The hub device sends the first message to the drying device if the hub device determines that the duration within which the distance between the first user and the drying device is less than the preset first distance is greater than a preset duration threshold.

Optionally, the hub device further obtains a user action. For example, when determining that the distance between the first user and the drying device is less than the preset first distance, and the first user performs a preset action, the hub device sends the first message to the drying device. For example, the preset action includes raising a hand, raising an arm, and raising the head. In an implementation, a camera device is disposed in a room or an area in which the air drying device is located. When determining that the distance between the first user and the drying device is less than the preset first distance, the hub device notifies the camera device to start to collect a user image. The camera device sends the collected user image to the hub device. The hub device determines, based on the user image, that the user performs the preset action.

In an implementation, the hub device obtains a height of the first user, and determines a descent height of the drying device based on the height of the first user. In an example, a first instruction sent by the hub device includes height indication information. The height indication information indicates the height of the user. In another example, the hub device determines a descent value based on the height of the user. A first instruction sent by the hub device includes second indication information. The second indication information indicates the descent value. For example, a correspondence between the height of the user and the descent value of the drying device is shown in Table 5.

**Table 5**

| Height (centimeter) | Descent value (meter) |
| --- | --- |
| Less than 160 | 0.55 |
| Greater than or equal to 160 and less than 165 | 0.50 |
| Greater than or equal to 165 and less than 170 | 0.45 |
| Greater than or equal to 170 and less than 175 | 0.40 |
| Greater than or equal to 175 and less than 180 | 0.35 |
| Greater than or equal to 180 | 0.30 |

The hub device may determine a corresponding first descent value based on the height of the first user and the correspondence between the height of the user and the descent value of the drying device shown in Table 5. Optionally, the first message includes first indication information. The first indication information indicates the descent value of the drying device.

S4005: The drying device receives the first message, and descends to a second height.

In an implementation, the drying device receives the first message, and descends to a preset second height.

In another implementation, the drying device receives the first message, obtains the first indication information, and obtains the descent value of the drying device based on the first indication information. The drying device determines the second height based on a current height value and the descent value.

S4006: The hub device determines that the distance between the first user and the drying device is greater than or equal to the preset first distance, and sends a second message to the drying device.

That the distance between the first user and the drying device is greater than or equal to the preset first distance means that the first user leaves the drying device. The hub device sends the second message to the drying device. The second message indicates the drying device to ascend.

S4007: The drying device receives the second message, and ascends to the first height.

In this embodiment, if the hub device detects that the user approaches the drying device, the hub device notifies the drying device to descend. If the hub device detects that the user leaves the drying device, the hub device notifies the drying device to ascend. The drying device automatically descends or ascends based on control of the hub device, without performing a manual operation by the user. Further, the drying device can further adjust a descent height value based on the height of the user, to facilitate use by the user.

**Embodiment 5**

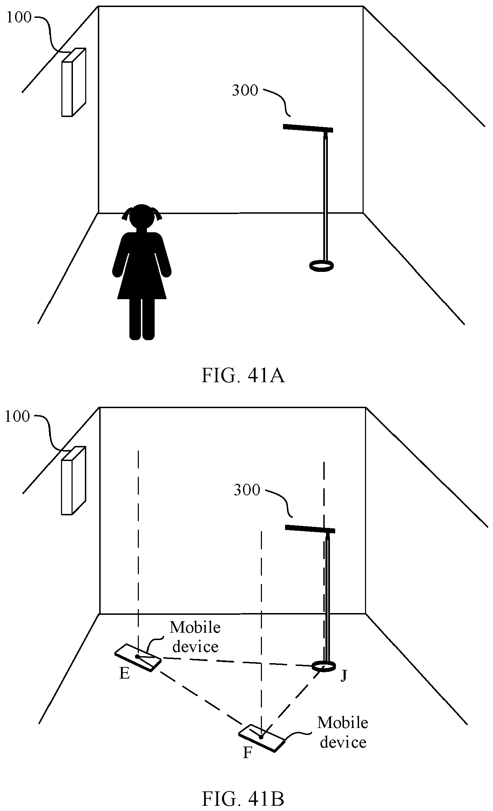

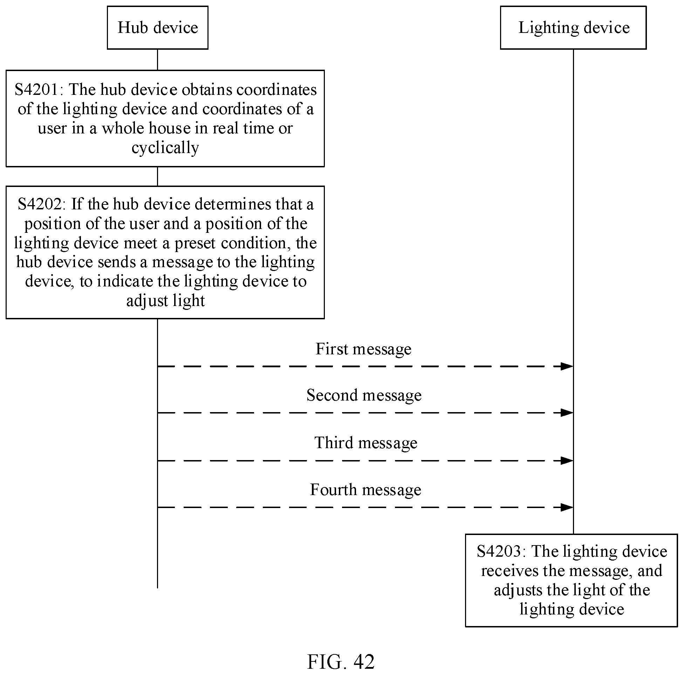

Embodiment 5 relates to FIG. 41A, FIG. 41B, and FIG. 42, and provides a human sensing-based method for automatically adjusting light by a lighting device.

According to the human sensing-based method for automatically adjusting light by a lighting device provided in embodiments of this application, on/off, brightness, a color, and the like of the lighting device are automatically adjusted based on a relative position between the user and the lighting device. This improves user experience. For example, as shown in FIG. 41A, the first electronic device 100 and the lighting device (the second electronic device 300) are disposed in a room. A hub device obtains coordinates of the lighting device and coordinates of the user by using the first electronic device, and adjusts on/off, the brightness, the color, and the like of the lighting device based on the relative position between the user and the lighting device.

According to the method described in the principle part, the hub device may obtain the coordinates of the lighting device and a room or an area in which the lighting device is located, and may further obtain the coordinates of the users in the whole house in real time or cyclically. In this way, the hub device can determine that the user enters or leaves the room or the area in which the lighting device is located. According to the human sensing-based method for automatically adjusting light by a lighting device provided in embodiments of this application, if the user enters the room or the area in which the lighting device is located, the lighting device is automatically turned on (lit). If the user leaves the room or the area in which the lighting device is located, the lighting device is automatically turned off (extinguished).

The hub device may further obtain a distance between the user and the lighting device based on the coordinates of the lighting device and the coordinates of the user. The lighting device automatically adjusts the brightness based on a change of the distance between the user and the lighting device.

In an example, an area in a preset direction of the lighting device may be determined as an illumination area of the lighting device. For example, as shown in FIG. 41B, mobile devices are respectively placed at two vertexes E and F of the illumination area, and the lighting device is located at a point J. A three-dimensional area enclosed by a vertical line passing through the position E, a vertical line passing through the position F, and a vertical line passing through the position J is the illumination area of the lighting device. The hub device obtains coordinates of the point E, coordinates of the point F, and coordinates of the point J, that is, obtains a coordinate range of the illumination area of the lighting device. According to the method described in the principle part, the hub device may determine, based on the coordinates of the user, that the user enters or leaves the illumination area of the lighting device. If the user enters the illumination area of the lighting device, the lighting device is automatically turned on (lit). If the user leaves the illumination area of the lighting device, the lighting device is automatically turned off (extinguished).

The hub device may further obtain a user identity, obtain brightness or a color that is of the lighting device and that matches the user identity, and control the lighting device to light up with the brightness or the color corresponding to the user identity. For example, a first user enters the room or the area in which the lighting device is located or the illumination area, and the lighting device lights up with brightness or a color that matches an identity of the first user. A second user enters the room or the area in which the lighting device is located or the illumination area, and the lighting device lights up with brightness or a color that matches an identity of the second user.

For example, as shown in FIG. 42, a human sensing-based method for automatically adjusting light by a lighting device provided in an embodiment of this application may include the following steps.

S4201: A hub device obtains coordinates of the lighting device and coordinates of a user in a whole house in real time or cyclically.

S4202: If the hub device determines that a position of the user and a position of the lighting device meet a preset condition, the hub device sends a message to the lighting device, to indicate the lighting device to adjust light.

The hub device determines whether the preset condition is met based on the coordinates of the lighting device and coordinates of each user in the whole house.

In an example, a first preset condition includes that the user enters a room or an area in which the lighting device is located, a distance between the user and the lighting device is less than or equal to a preset distance, or the user enters an area in a preset direction of the lighting device. The hub device determines that the first preset condition is met, and sends a first message to the lighting device, to indicate to turn on (light) the lighting device.

Optionally, the first message includes first indication information. The first indication information indicates brightness of the lighting device. For example, the hub device or a server stores historical information about adjusting the brightness of the lighting device by each user. If the hub device determines that the preset condition is met, the hub device obtains identity information of the user, and determines corresponding brightness value of the lighting device based on the identity information of the user and the stored historical information about adjusting the brightness of the lighting device by each user. The first message sent by the hub device to the lighting device includes the first indication information. In this way, during turning on, the lighting device can be turned on with the brightness matching the user.

Optionally, the first message includes second indication information. The second indication information indicates a color of the lighting device. For example, the hub device or the server stores color information that is of the lighting device and that corresponds to each user. If the hub device determines that the preset condition is met, the hub device obtains the identity information of the user, and determines the corresponding color of the lighting device based on the identity information of the user. The first message sent by the hub device to the lighting device includes the second indication information. In this way, during turning on, the lighting device can be turned on with the color matching the user.

In an example, a second preset condition includes that the user leaves a room or an area in which the lighting device is located, a distance between the user and the lighting device is greater than a preset distance, or the user leaves an area in a preset direction of the lighting device. The hub device determines that the second preset condition is met, and sends a second message to the lighting device, to indicate to turn off (extinguish) the lighting device.

In an example, a third preset condition includes that a distance between the user and the lighting device changes (increases or decreases) after the lighting device is turned on. The hub device determines that the third preset condition is met, and sends a third message to the lighting device, to indicate the lighting device to reduce brightness. Optionally, the third message includes third indication information that indicates a brightness decrease value of the lighting device. For example, a correspondence between the brightness of the lighting device and the distance between the user and the lighting device is preset. The brightness decrease value of the lighting device is determined based on the distance between the user and the lighting device and the correspondence between the brightness of the lighting device and the distance between the user and the lighting device.

In an example, a fourth preset condition includes that the distance between the user and the lighting device changes (increases or decreases) after the lighting device is turned on. The hub device determines that the fourth preset condition is met but the second preset condition is not met, and sends a fourth message to the lighting device, to indicate the lighting device to increase brightness. Optionally, the fourth message includes fourth indication information that indicates a brightness increase value of the lighting device.

S4203: The lighting device receives the message, and adjusts the light of the lighting device.

For example, if the lighting device receives the first message, the lighting device is turned on (lit). If the first message includes the first indication information, the lighting device is turned on, based on the first indication information, with the brightness matching the user. If the first message includes the second indication information, the lighting device is turned on, based on the second indication information, with the color matching the user.

For example, if the lighting device receives the second message, the lighting device is turned off (extinguished).

For example, if the lighting device receives the third message, the brightness of the lighting device is reduced. If the third message includes the third indication information, the brightness of the lighting device is reduced based on the value indicated by the third indication information.

For example, if the lighting device receives the fourth message, the brightness of the lighting device is increased. If the fourth message includes the fourth indication information, the brightness of the lighting device is increased based on the value indicated by the fourth indication information.

In this embodiment, the lighting device is automatically lit or extinguished and the brightness, color, or the like of the lighting device is automatically adjusted based on a relative position between the user and the lighting device, without performing a manual operation by the user. This improves user experience.

It should be noted that the methods in embodiments, the implementations, and the examples of embodiments of this application may be separately combined, and combined embodiments, implementations, or examples also fall within the protection scope of embodiments of this application. Steps or technical features in embodiments of this application may be randomly combined, and combined implementations also fall within the protection scope of embodiments of this application.

It may be understood that, to implement the foregoing functions, the device in the foregoing whole-house system includes a corresponding hardware structure and/or software module for implementing each function. A person skilled in the art should be aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the foregoing device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be another division during actual implementation.

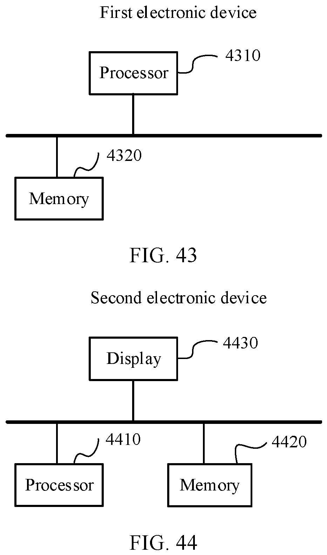

In an example, FIG. 43 is a schematic diagram of a possible structure of the first electronic device in the foregoing embodiments. The electronic device 4300 includes a processor 4310 and a memory 4320.

The processor 4310 is configured to: control and manage an action of the electronic device 4300. For example, the processor 4310 may be configured to: calculate coordinates of a user and a room or an area in which the user is located; calculate coordinates of a second electronic device and a room or an area in which the second electronic device is located; calculate a distance between the user and the second electronic device; and determine an instruction to be executed by the second electronic device; and/or is configured for another process of the technology described in this specification.

The memory 4320 is configured to store program code and data of the electronic device 4300.

Certainly, unit modules in the electronic device 4300 include but are not limited to the processor 43 10 and the memory 4320. For example, the electronic device 4300 may further include a power supply unit. The power supply unit is configured to supply power to the electronic device 4300.

In an example, FIG. 44 is a schematic diagram of a possible structure of the second electronic device in the foregoing embodiments. The electronic device 4400 includes a processor 4410, a memory 4420, and a display 4430.

The processor 4410 is configured to: control and manage an action of the electronic device 4400.

The memory 4420 is configured to store program code and data of the electronic device 4400.

The display 4430 is configured to display information, an image, a video, and the like on the electronic device 4400.

Certainly, unit modules in the electronic device 4400 include but are not limited to the processor 4410, the memory 4420, and the display 4430. For example, the electronic device 4400 may further include a power supply unit. The power supply unit is configured to supply power to the electronic device 4400.

An embodiment of this application further provides a computer-readable storage medium. The computer-readable storage medium stores computer program code. When a processor of an electronic device executes the computer program code, the electronic device performs the method in the foregoing embodiments.

An embodiment of this application further provides a computer program product. When the computer program product runs on a computer, the computer is enabled to perform the method in the foregoing embodiments.

The electronic device 4300, the electronic device 4400, the computer-readable storage medium, or the computer program product provided in embodiments of this application may be configured to perform a corresponding method provided above. Therefore, for beneficial effects that can be achieved by the electronic device 4300, the electronic device 4400, the computer-readable storage medium, or the computer program product, refer to the beneficial effects of the corresponding method provided above. Details are not described herein again.

A person skilled in the art may clearly learn from the foregoing descriptions of the implementations that, for convenience and brevity of description, division into the foregoing functional modules is only used as an example for description. During actual application, the foregoing functions may be allocated to different functional modules for implementation based on a requirement, that is, an inner structure of an electronic device is divided into different functional modules, to complete all or some of the functions described above.

In the several embodiments provided in this application, it should be understood that the disclosed electronic device and method may be implemented in other manners. For example, the described electronic device embodiment is merely an example. For example, division into the modules or the units is merely logical function division and may be other division during actual implementation. For example, a plurality of units or components may be combined or integrated into another electronic device, or some features may be ignored or not performed. In addition, the displayed or discussed mutual couplings or direct couplings or communication connections may be implemented through some interfaces. The indirect couplings or communication connections between electronic devices or units may be implemented in electrical, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a routing device and a terminal device, wherein R is a positive integer greater than or equal to 1;

the hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device;
the hub device sends a first message to the routing device; and
the routing device receives the first message, and adjusts a beam based on a position of the routing device and a position of the user, so that a maximum gain point of an adjusted beam points to the user.

2. The communication system according to claim 1, wherein before the hub device sends the first message to the routing device,
the hub device learns that a distance between the user and the terminal device is less than a preset error range.

3. The communication system according to claim 1 or 2, wherein before the hub device obtains the position information of the R second electronic devices and the position information of the user in the whole-house coordinate system provided by the hub device,

the hub device learns that a position change of the user is greater than a first preset range; or
the hub device learns that a position change of the terminal device is greater than a second preset range.

4. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a routing device and N terminal devices, wherein R and N each are a positive integer greater than or equal to 1;

the hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device, wherein a quantity of users whose distances from the N terminal devices fall within a preset error range in the M users is M1, and M1>0;
the hub device sends a first message to the routing device; and
the routing device receives the first message, and adjusts a beam based on a position of the routing device and positions of the M1 users, so that maximum beam gain points alternately point to the positions of the M1 users in a time division multiplexing manner.

5. The communication system according to claim 4, wherein before the hub device obtains the position information of the R second electronic devices and the position information of the M users in the whole-house coordinate system provided by the hub device,

the hub device learns that a position change of at least one of the M users is greater than a first preset range; or

the hub device learns that a position change of at least one of the N terminal devices is greater than a second preset range.

6. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a first device and a mobile device, and the mobile device comprises a second ultra-wide band module, wherein R is a positive integer greater than or equal to 1;

the hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device;
the hub device sends a first message to the first device; and
the first device receives the first message, and cleans an area in a whole house other than a first area to which the user belongs.

7. The communication system according to claim 6, wherein before the hub device sends the first message to the first device,

the hub device obtains, based on position measurement and conversion performed by the first electronic device on the mobile device and communication between the hub device and the first electronic device, position information of M pieces of furniture in the whole-house coordinate system provided by the hub device; and
the hub device learns that a distance between the user and one of the M pieces of furniture is less than a preset first error range.

8. The communication system according to claim 7, wherein before the hub device sends the first message to the first device,
the hub device learns that an attitude of the user is a lying attitude or a sitting attitude.

9. The communication system according to any one of claims 6 to 8, wherein
if the user and the first device belong to a same area, after receiving the first message, the first device leaves the first area to which the user belongs.

10. The communication system according to any one of claims 6 to 8, wherein

the hub device learns that a change of the user within preset duration is greater than or equal to a preset second error range;
the hub device sends a third message to the first device; and
the first device receives the third message, and enters the first area to which the user belongs.

11. The communication system according to any one of claims 6 to 10, wherein

the hub device obtains, based on position measurement and conversion performed by the first electronic device on the mobile device and communication between the hub device and the first electronic device, a coordinate range of each area in the whole house in the whole-house coordinate system provided by the hub device;
the hub device sends coordinate range information of each area in the whole house to the first device; and
the first device performs cleaning based on the coordinate range information of each area in the whole house.

12. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device;

the hub device obtains a first user whose distance from the first device is less than a preset first error range in the one or more users;

the hub device obtains at least one of height information, breath frequency information, and heartbeat frequency information of the first user; and

the hub device sends a first message to the first device, wherein the first message comprises the at least one of the height information, the breath frequency information, and the heartbeat frequency information of the first user.

13. The communication system according to claim 12, wherein
the first device receives the first message, and obtains at least one of a body fat rate, a body mass index BMI, a muscle mass, a basal metabolic rate, and a visceral fat level of the first user based on the at least one of the height information, the breath frequency information, and the heartbeat frequency information of the first user.

14. The communication system according to claim 13, wherein before the hub device obtains the first user whose distance from the first device is less than the preset first error range,

the first device sends a first request message to the hub device, wherein the first request message indicates the hub device to obtain user data; and
the hub device receives the first request message.

15. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device, wherein a distance between the first device and the ground is a first height;

the hub device learns that a distance between a first user in the one or more users and the first device is less than a preset first distance, and sends a first message to the first device; and

the first device receives the first message, and descends to a second height above the ground, wherein the second height is less than the first height.

16. The communication system according to claim 15, wherein

the hub device obtains height information of the first user;
the hub device sends indication information to the first device, wherein the indication information indicates a height of the first user; and
the first device receives the indication information, and obtains the second height based on the indication information.

17. The communication system according to claim 15 or 16, wherein before the hub device sends the first message to the first device,
the hub device learns that duration within which the distance between the first user and the first device is less than the preset first distance is greater than a preset value.

18. The communication system according to any one of claims 15 to 17, wherein before the hub device sends the first message to the first device,
the hub device learns that the first user performs a preset action.

19. The communication system according to any one of claims 15 to 18, wherein

the hub device learns that the distance between the first user and the first device is greater than or equal to the preset first distance, and sends a second message to the first device; and

the first device receives the second message, and ascends to the first height above the ground.

20. A human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device;

if a preset condition is met between a position of the first device and a position of a first user in the one or more users, the hub device notifies the first device to adjust light; and

the first device adjusts the light based on the notification of the hub device.

21. The communication system according to claim 20, wherein

the preset condition comprises that the first user enters a first area to which the first device belongs, a distance between the first user and the first device is less than or equal to a preset distance, or the first user enters a second area in a preset direction of the first device; and

that the hub device notifies the first device to adjust the light comprises:

the hub device sends a first message to the first device, wherein the first message indicates to light the first device.

22. The communication system according to claim 21, wherein

the hub device obtains an identity of the first user and a first brightness value corresponding to the identity of the first user;

the hub device sends first indication information to the first device, wherein the first indication information indicates the first brightness value; and

the first device receives the first indication information, and lights up with the first brightness value based on the first indication information.

23. The communication system according to claim 21, wherein

the hub device obtains an identity of the first user and a first color corresponding to the identity of the first user;

the hub device sends second indication information to the first device, wherein the second indication information indicates the first color; and

the first device receives the second indication information, and lights up with the first color based on the second indication information.

24. The communication system according to claim 20, wherein

the preset condition comprises that the first user leaves a first area to which the first device belongs, a distance between the first user and the first device is greater than a preset distance, or the first user leaves a second area in a preset direction of the first device; and

that the hub device notifies the first device to adjust the light comprises:

the hub device sends a second message to the first device, wherein the second message indicates to extinguish the first device.

25. The communication system according to claim 20, wherein

the preset condition comprises that a distance between the first user and the first device changes; and

that the hub device notifies the first device to adjust the light comprises:

the hub device sends a third message to the first device, wherein the third message indicates the first device to reduce brightness; or

the hub device sends a fourth message to the first device, wherein the fourth message indicates the first device to increase brightness.

26. The communication system according to any one of claims 12 to 25, wherein the R second electronic devices comprise a mobile device, and the mobile device comprises a second ultra-wide band module; and position measurement performed by the first electronic device on the first device comprises:

the first electronic device measures a position of the mobile device, and measures the position of the first device based on the position of the mobile device.

27. A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a routing device and a terminal device, wherein R is a positive integer greater than or equal to 1; and the method comprises:

obtaining, by the hub device based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device;

sending, by the hub device, a first message to the routing device; and

receiving, by the routing device, the first message, and adjusting a beam based on a position of the routing device and a position of the user, so that a maximum gain point of an adjusted beam points to the user.

28. The method according to claim 27, wherein before the sending, by the hub device, a first message to the routing device, the method further comprises:

obtaining, by the hub device, that a distance between the user and the terminal device is less than a preset error range.

29. The method according to claim 27 or 28, wherein before the obtaining, by the hub device, position information of the R second electronic devices and position information of a user in a whole-house coordinate system provided by the hub device, the method further comprises:

obtaining, by the hub device, that a position change of the user is greater than a first preset range; or

obtaining, by the hub device, that a position change of the terminal device is greater than a second preset range.

30. A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a routing device and N terminal devices, wherein R and N each are a positive integer greater than or equal to 1; and the method comprises:

obtaining, by the hub device based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device, wherein a quantity of users whose distances from the N terminal devices fall within a preset error range in the M users is M1, and M1>0;

sending, by the hub device, a first message to the routing device; and

receiving, by the routing device, the first message, and adjusting a beam based on a position of the routing device and positions of the M1 users, so that maximum beam gain points alternately point to the positions of the M1 users in a time division multiplexing manner.

31. The method according to claim 30, wherein before the obtaining, by the hub device, position information of the R second electronic devices and position information of M users in a whole-house coordinate system provided by the hub device, the method further comprises:

obtaining, by the hub device, that a position change of at least one of the M users is greater than a first preset range; or

obtaining, by the hub device, that a position change of at least one of the N terminal devices is greater than a second preset range.

32. A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a first device and a mobile device, and the mobile device comprises a second ultra-wide band module, wherein R is a positive integer greater than or equal to 1; and the method comprises:

obtaining, by the hub device based on position measurement for the mobile device, measurement for a human body position, and conversion that are performed by the first electronic device, and communication between the hub device and the first electronic device, position information of the first device and position information of a user in a whole-house coordinate system provided by the hub device;

sending, by the hub device, a first message to the first device; and

receiving, by the first device, the first message, and cleaning an area in a whole house other than a first area to which the user belongs.

33. The method according to claim 32, wherein before the sending, by the hub device, a first message to the first device, the method further comprises:

obtaining, by the hub device based on position measurement and conversion performed by the first electronic device on the mobile device and communication between the hub device and the first electronic device, position information of M pieces of furniture in the whole-house coordinate system provided by the hub device; and

obtaining, by the hub device, that a distance between the user and one of the M pieces of furniture is less than a preset first error range.

34. The method according to claim 33, wherein before the sending, by the hub device, a first message to the first device, the method further comprises:

obtaining, by the hub device, that an attitude of the user is a lying attitude or a sitting attitude.

35. The method according to any one of claims 32 to 34, wherein the method further comprises:

if the user and the first device belong to a same area, leaving, by the first device after receiving the first message, the first area to which the user belongs.

36. The method according to any one of claims 32 to 34, wherein the method further comprises:

obtaining, by the hub device, that a change of the user within preset duration is greater than or equal to a preset second error range;

sending, by the hub device, a third message to the first device; and

receiving, by the first device, the third message, and entering the first area to which the user belongs.

37. The method according to any one of claims 32 to 36, wherein the method further comprises:

obtaining, by the hub device based on position measurement and conversion performed by the first electronic device on the mobile device and communication between the hub device and the first electronic device, a coordinate range of each area in the whole house in the whole-house coordinate system provided by the hub device;

sending, by the hub device, coordinate range information of each area in the whole house to the first device; and

performing, by the first device, cleaning based on the coordinate range information of each area in the whole house.

38. A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device;

obtaining, by the hub device, a first user whose distance from the first device is less than a preset first error range in the one or more users;

obtaining, by the hub device, at least one of height information, breath frequency information, and heartbeat frequency information of the first user; and

sending, by the hub device, a first message to the first device, wherein the first message comprises the at least one of the height information, the breath frequency information, and the heartbeat frequency information of the first user.

39. The method according to claim 38, wherein the method further comprises:
receiving, by the first device, the first message, and obtaining at least one of a body fat rate, a body mass index BMI, a muscle mass, a basal metabolic rate, and a visceral fat level of the first user based on the at least one of the height information, the breath frequency information, and the heartbeat frequency information of the first user.

40. The method according to claim 39, wherein before the obtaining, by the hub device, a first user whose distance from the first device is less than a preset first error range, the method further comprises:

sending, by the first device, a first request message to the hub device, wherein the first request message indicates the hub device to obtain user data; and

receiving, by the hub device, the first request message.

41. A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device, wherein a distance between the first device and the ground is a first height;

obtaining, by the hub device, that a distance between a first user in the one or more users and the first device is less than a preset first distance, and sending a first message to the first device; and

receiving, by the first device, the first message, and descending to a second height above the ground, wherein the second height is less than the first height.

42. The method according to claim 41, wherein the method further comprises:

obtaining, by the hub device, height information of the first user;

sending, by the hub device, indication information to the first device, wherein the indication information indicates a height of the first user; and

receiving, by the first device, the indication information, and obtaining the second height based on the indication information.

43. The method according to claim 41 or 42, wherein before the sending, by the hub device, a first message to the first device, the method further comprises:
obtaining, by the hub device, that duration within which the distance between the first user and the first device is less than the preset first distance is greater than a preset value.

**44.** The method according to any one of claims 41 to 43, wherein before the sending, by the hub device, a first message to the first device, the method further comprises:
obtaining, by the hub device, that the first user performs a preset action.

**45.** The method according to any one of claims 41 to 44, wherein the method further comprises:

obtaining, by the hub device, that the distance between the first user and the first device is greater than or equal to the preset first distance, and sending a second message to the first device; and
receiving, by the first device, the second message, and ascending to the first height above the ground.

**46.** A human sensing-based automatic control method, applied to a human sensing-based communication system, wherein the system comprises a hub device, a first electronic device, and R second electronic devices; any two of the hub device, the first electronic device, and any one of the R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device;
if a preset condition is met between a position of the first device and a position of a first user in the one or more users, notifying, by the hub device, the first device to adjust light; and
adjusting, by the first device, the light based on the notification of the hub device.

**47.** The method according to claim 46, wherein

the preset condition comprises that the first user enters a first area to which the first device belongs, a distance between the first user and the first device is less than or equal to a preset distance, or the first user enters a second area in a preset direction of the first device; and
the notifying, by the hub device, the first device to adjust light comprises:
sending, by the hub device, a first message to the first device, wherein the first message indicates to light the first device.

**48.** The method according to claim 47, wherein the method further comprises:

obtaining, by the hub device, an identity of the first user and a first brightness value corresponding to the identity of the first user;
sending, by the hub device, first indication information to the first device, wherein the first indication information indicates the first brightness value; and
receiving, by the first device, the first indication information; and lighting the first device with the first brightness value based on the first indication information.

**49.** The method according to claim 47, wherein the method further comprises:

obtaining, by the hub device, an identity of the first user and a first color corresponding to the identity of the first user;
sending, by the hub device, second indication information to the first device, wherein the second indication information indicates the first color; and
receiving, by the first device, the second indication information; and lighting the first device with the first color based on the second indication information.

**50.** The method according to claim 46, wherein

the preset condition comprises that the first user leaves a first area to which the first device belongs, a distance between the first user and the first device is greater than a preset distance, or the first user leaves a second area in a preset direction of the first device; and
the notifying, by the hub device, the first device to adjust light comprises:

sending, by the hub device, a second message to the first device, wherein the second message indicates to extinguish the first device.

51. The method according to claim 46, wherein

the preset condition comprises that a distance between the first user and the first device changes; and
the notifying, by the hub device, the first device to adjust light comprises:

sending, by the hub device, a third message to the first device, wherein the third message indicates the first device to reduce brightness; or
sending, by the hub device, a fourth message to the first device, wherein the fourth message indicates the first device to increase brightness.

52. The method according to any one of claims 38 to 51, wherein the R second electronic devices comprise a mobile device, and the mobile device comprises a second ultra-wide band module; and
position measurement performed by the first electronic device on the first device comprises:
the first electronic device measures a position of the mobile device, and measures the position of the first device based on the position of the mobile device.

53. A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a routing device and a terminal device, wherein R is a positive integer greater than or equal to 1;

the hub device obtains, based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device; and
the hub device sends a first message to the routing device, wherein the first message indicates the routing device to adjust a beam based on a position of the routing device and a position of the user, so that a maximum gain point of an adjusted beam points to the user.

54. The hub device according to claim 53, wherein before the hub device sends the first message to the routing device, the hub device learns that a distance between the user and the terminal device is less than a preset error range.

55. The hub device according to claim 53 or 54, wherein before the hub device obtains the position information of the R second electronic devices and the position information of the user in the whole-house coordinate system provided by the hub device,

the hub device learns that a position change of the user is greater than a first preset range; or
the hub device learns that a position change of the terminal device is greater than a second preset range.

56. A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a routing device and N terminal devices, wherein R and N each are a positive integer greater than or equal to 1;

the hub device obtains, based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device, wherein a quantity of users whose distances from the N terminal devices fall within a preset error range in the M users is M1, and M1>0; and
the hub device sends a first message to the routing device, wherein the first message indicates the routing device to adjust a beam based on a position of the routing device and positions of the M1 users, so that maximum beam gain points alternately point to the positions of the M1 users in a time division multiplexing manner.

**57.** The hub device according to claim 56, wherein before the hub device obtains the position information of the R second electronic devices and the position information of the M users in the whole-house coordinate system provided by the hub device,

the hub device learns that a position change of at least one of the M users is greater than a first preset range; or the hub device learns that a position change of at least one of the N terminal devices is greater than a second preset range.

**58.** A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a first device and a mobile device, and the mobile device comprises a second ultra-wide band module, wherein R is a positive integer greater than or equal to 1;

the hub device obtains, based on position measurement for the mobile device, measurement for a human body position, and conversion that are performed by the first electronic device, and communication between the hub device and the first electronic device, position information of the first device and position information of a user in a whole-house coordinate system provided by the hub device; and
the hub device sends a first message to the first device, wherein the first message indicates the first device to clean an area in a whole house other than a first area to which the user belongs.

**59.** The hub device according to claim 58, wherein before the hub device sends the first message to the first device,

the hub device obtains, based on position measurement and conversion performed by the first electronic device on the mobile device and communication between the hub device and the first electronic device, position information of M pieces of furniture in the whole-house coordinate system provided by the hub device; and
the hub device learns that a distance between the user and one of the M pieces of furniture is less than a preset first error range.

**60.** The hub device according to claim 59, wherein before the hub device sends the first message to the first device, the hub device learns that an attitude of the user is a lying attitude or a sitting attitude.

**61.** The hub device according to any one of claims 58 to 60, wherein

the hub device learns that a change of the user within preset duration is greater than or equal to a preset second error range; and
the hub device sends a third message to the first device, wherein the third message indicates the first device to enter the first area to which the user belongs.

**62.** The hub device according to any one of claims 58 to 61, wherein

the hub device obtains, based on position measurement and conversion performed by the first electronic device on the mobile device and communication between the hub device and the first electronic device, a coordinate range of each area in the whole house in the whole-house coordinate system provided by the hub device; and
the hub device sends coordinate range information of each area in the whole house to the first device.

**63.** A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device;
the hub device obtains a first user whose distance from the first device is less than a preset first error range in the one or more users;
the hub device obtains at least one of height information, breath frequency information, and heartbeat frequency information of the first user; and

the hub device sends a first message to the first device, wherein the first message comprises the at least one of the height information, the breath frequency information, and the heartbeat frequency information of the first user.

64. The hub device according to claim 63, wherein before the hub device obtains the first user whose distance from the first device is less than the preset first error range,

the hub device receives a first request message from the first device, wherein the first request message indicates the hub device to obtain user data.

65. A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device, wherein a distance between the first device and the ground is a first height; and

the hub device learns that a distance between a first user in the one or more users and the first device is less than a preset first distance, and sends a first message to the first device, wherein the first message indicates the first device to descend to a second height above the ground, and the second height is less than the first height.

66. The hub device according to claim 65, wherein

the hub device obtains height information of the first user; and

the hub device sends indication information to the first device, wherein the indication information indicates a height of the first user, and the height of the first user is for obtaining the second height.

67. The hub device according to claim 65 or 66, wherein before the hub device sends the first message to the first device,

the hub device learns that duration within which the distance between the first user and the first device is less than the preset first distance is greater than a preset value.

68. The hub device according to any one of claims 65 to 67, wherein before the hub device sends the first message to the first device,

the hub device learns that the first user performs a preset action.

69. The hub device according to any one of claims 65 to 68, wherein

the hub device learns that the distance between the first user and the first device is greater than or equal to the preset first distance, and sends a second message to the first device, wherein the second message indicates the first device to ascend to the first height above the ground.

70. A hub device, wherein any two of the hub device, a first electronic device, and any one of R second electronic devices communicate in a wired communication or wireless communication manner; the first electronic device comprises a first ultra-wide band module and a millimeter-wave radar module; and the R second electronic devices comprise a first device, wherein R is a positive integer greater than or equal to 1;

the hub device obtains, based on position measurement for the first device, measurement for a human body position, and conversion that are performed by the first electronic device, and communication between the hub device and the first electronic device, position information of the first device and position information of one or more users in a whole-house coordinate system provided by the hub device; and

if a preset condition is met between a position of the first device and a position of a first user in the one or more users, the hub device notifies the first device to adjust light.

71. The hub device according to claim 70, wherein

the preset condition comprises that the first user enters a first area to which the first device belongs, a distance between the first user and the first device is less than or equal to a preset distance, or the first user enters a second area in a preset direction of the first device; and
that the hub device notifies the first device to adjust the light comprises:
the hub device sends a first message to the first device, wherein the first message indicates to light the first device.

72. The hub device according to claim 71, wherein

the hub device obtains an identity of the first user and a first brightness value corresponding to the identity of the first user; and
the hub device sends first indication information to the first device, wherein the first indication information indicates the first brightness value.

73. The hub device according to claim 71, wherein

the hub device obtains an identity of the first user and a first color corresponding to the identity of the first user; and
the hub device sends second indication information to the first device, wherein the second indication information indicates the first color.

74. The hub device according to claim 70, wherein

the preset condition comprises that the first user leaves a first area to which the first device belongs, a distance between the first user and the first device is greater than a preset distance, or the first user leaves a second area in a preset direction of the first device; and
that the hub device notifies the first device to adjust the light comprises:
the hub device sends a second message to the first device, wherein the second message indicates to extinguish the first device.

75. The hub device according to claim 70, wherein

the preset condition comprises that a distance between the first user and the first device changes; and
that the hub device notifies the first device to adjust the light comprises:

the hub device sends a third message to the first device, wherein the third message indicates the first device to reduce brightness; or
the hub device sends a fourth message to the first device, wherein the fourth message indicates the first device to increase brightness.

76. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a routing device and a terminal device, wherein R is a positive integer greater than or equal to 1; and the method comprises:

obtaining, by the hub device based on position measurement for the R second electronic devices, measurement for a human body position, and conversion that are performed by the first electronic device, and communication between the hub device and the first electronic device, position information of the R second electronic devices and position information of a user in a whole-house coordinate system provided by the hub device; and
sending, by the hub device, a first message to the routing device, wherein the first message indicates the routing device to adjust a beam based on a position of the routing device and a position of the user, so that a maximum gain point of an adjusted beam points to the user.

77. The method according to claim 76, wherein before the sending, by the hub device, a first message to the routing device, the method further comprises:
obtaining, by the hub device, that a distance between the user and the terminal device is less than a preset error range.

78. The method according to claim 76 or 77, wherein before the obtaining, by the hub device, position information of the R second electronic devices and position information of a user in a whole-house coordinate system provided by the hub device, the method further comprises:

obtaining, by the hub device, that a position change of the user is greater than a first preset range; or

obtaining, by the hub device, that a position change of the terminal device is greater than a second preset range.

79. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a routing device and N terminal devices, wherein R and N each are a positive integer greater than or equal to 1; and the method comprises:

obtaining, by the hub device based on position measurement for the R second electronic devices, measurement for a human body position, and conversion that are performed by the first electronic device, and communication between the hub device and the first electronic device, position information of the R second electronic devices and position information of M users in a whole-house coordinate system provided by the hub device, wherein a quantity of users whose distances from the N terminal devices fall within a preset error range in the M users is M1, and M1>0; and

sending, by the hub device, a first message to the routing device, wherein the first message indicates the routing device to adjust a beam based on a position of the routing device and positions of the M1 users, so that maximum beam gain points alternately point to the positions of the M1 users in a time division multiplexing manner.

80. The method according to claim 79, wherein before the obtaining, by the hub device, position information of the R second electronic devices and position information of M users in a whole-house coordinate system provided by the hub device, the method further comprises:

obtaining, by the hub device, that a position change of at least one of the M users is greater than a first preset range; or

obtaining, by the hub device, that a position change of at least one of the N terminal devices is greater than a second preset range.

81. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a first device and a mobile device, and the mobile device comprises a second ultra-wide band module, wherein R is a positive integer greater than or equal to 1; and the method comprises:

obtaining, by the hub device based on position measurement for the mobile device, measurement for a human body position, and conversion that are performed by the first electronic device, and communication between the hub device and the first electronic device, position information of the first device and position information of a user in a whole-house coordinate system provided by the hub device; and

sending, by the hub device, a first message to the first device, wherein the first message indicates the first device to clean an area in a whole house other than a first area to which the user belongs.

82. The method according to claim 81, wherein before the sending, by the hub device, a first message to the first device, the method further comprises:

obtaining, by the hub device based on position measurement and conversion performed by the first electronic device on the mobile device and communication between the hub device and the first electronic device, position information of M pieces of furniture in the whole-house coordinate system provided by the hub device; and

obtaining, by the hub device, that a distance between the user and one of the M pieces of furniture is less than a preset first error range.

83. The method according to claim 82, wherein before the sending, by the hub device, a first message to the first device, the method further comprises:
obtaining, by the hub device, that an attitude of the user is a lying attitude or a sitting attitude.

84. The method according to any one of claims 81 to 83, wherein the method further comprises:

obtaining, by the hub device, that a change of the user within preset duration is greater than or equal to a preset second error range; and

sending, by the hub device, a third message to the first device, wherein the third message indicates the first device to enter the first area to which the user belongs.

85. The method according to any one of claims 81 to 84, wherein the method further comprises:

obtaining, by the hub device based on position measurement and conversion performed by the first electronic device on the mobile device and communication between the hub device and the first electronic device, a coordinate range of each area in the whole house in the whole-house coordinate system provided by the hub device; and

sending, by the hub device, coordinate range information of each area in the whole house to the first device.

86. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device;

obtaining, by the hub device, a first user whose distance from the first device is less than a preset first error range in the one or more users;

obtaining, by the hub device, at least one of height information, breath frequency information, and heartbeat frequency information of the first user; and

sending, by the hub device, a first message to the first device, wherein the first message comprises the at least one of the height information, the breath frequency information, and the heartbeat frequency information of the first user.

87. The method according to claim 86, wherein before the obtaining, by the hub device, a first user whose distance from the first device is less than a preset first error range, the method further comprises:
receiving, by the hub device, a first request message from the first device, wherein the first request message indicates the hub device to obtain user data.

88. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device, wherein a distance between the first device and the ground is a first height; and

obtaining, by the hub device, that a distance between a first user in the one or more users and the first device is less than a preset first distance, and sending a first message to the first device, wherein the first message indicates the first device to descend to a second height above the ground, and the second height is less than the first height.

89. The method according to claim 88, wherein the method further comprises:

obtaining, by the hub device, height information of the first user; and

sending, by the hub device, indication information to the first device, wherein the indication information indicates a height of the first user, and the height of the first user is for obtaining the second height.

90. The method according to claim 88 or 89, wherein before the sending, by the hub device, a first message to the first device, the method further comprises:
obtaining, by the hub device, that duration within which the distance between the first user and the first device is less than the preset first distance is greater than a preset value.

91. The method according to any one of claims 88 to 90, wherein before the sending, by the hub device, a first message to the first device, the method further comprises:
obtaining, by the hub device, that the first user performs a preset action.

92. The method according to any one of claims 88 to 91, wherein the method further comprises:
obtaining, by the hub device, that the distance between the first user and the first device is greater than or equal to the preset first distance, and sending a second message to the first device, wherein the second message indicates the first device to ascend to the first height above the ground.

93. A human sensing-based automatic control method, applied to a hub device, wherein any two of the hub device, a first electronic device, and any one of R second electronic devices communicate in a wired communication or wireless communication manner; the first electronic device comprises a first ultra-wide band module and a millimeter-wave radar module; the R second electronic devices comprise a first device, wherein R is a positive integer greater than or equal to 1; and the method comprises:

obtaining, by the hub device based on position measurement for the first device, measurement for a human body position, and conversion that are performed by the first electronic device, and communication between the hub device and the first electronic device, position information of the first device and position information of one or more users in a whole-house coordinate system provided by the hub device; and
if a preset condition is met between a position of the first device and a position of a first user in the one or more users, notifying, by the hub device, the first device to adjust light.

94. The method according to claim 93, wherein

the preset condition comprises that the first user enters a first area to which the first device belongs, a distance between the first user and the first device is less than or equal to a preset distance, or the first user enters a second area in a preset direction of the first device; and
the notifying, by the hub device, the first device to adjust light comprises:
sending, by the hub device, a first message to the first device, wherein the first message indicates to light the first device.

95. The method according to claim 94, wherein the method further comprises:

obtaining, by the hub device, an identity of the first user and a first brightness value corresponding to the identity of the first user; and
sending, by the hub device, first indication information to the first device, wherein the first indication information indicates the first brightness value.

96. The method according to claim 94, wherein the method further comprises:

obtaining, by the hub device, an identity of the first user and a first color corresponding to the identity of the first user; and
sending, by the hub device, second indication information to the first device, wherein the second indication information indicates the first color.

97. The method according to claim 93, wherein

the preset condition comprises that the first user leaves a first area to which the first device belongs, a distance between the first user and the first device is greater than a preset distance, or the first user leaves a second area in a preset direction of the first device; and
the notifying, by the hub device, the first device to adjust light comprises:
sending, by the hub device, a second message to the first device, wherein the second message indicates to extinguish the first device.

**98.** The method according to claim 93, wherein

the preset condition comprises that a distance between the first user and the first device changes; and
the notifying, by the hub device, the first device to adjust light comprises:

sending, by the hub device, a third message to the first device, wherein the third message indicates the first device to reduce brightness; or
sending, by the hub device, a fourth message to the first device, wherein the fourth message indicates the first device to increase brightness.

**99.** A computer-readable storage medium, wherein the computer-readable storage medium comprises a computer program, and when the computer program is run on an electronic device, the electronic device is enabled to perform the method according to any one of claims 76 to 98.

(a)

(b)

FIG. 1

First electronic device 100
Antenna

Wireless communication module
140
(Wi-Fi/Bluetooth/ZigBee or the
like)

Antenna

Millimeter-wave
radar module 160

Power management
module 130

Power supply 131

Processor 110

Antenna

UWB module 150

Memory 120

FIG. 2

Hub device 200

Antenna

Wireless communication
module 240
(Wi-Fi/Bluetooth/ZigBee or
the like)

Processor 210

Memory 220

Power management
module 230

Power supply 231

FIG. 3

Second electronic device 300

Antenna                                    Antenna

Wireless communication module 360
(Wi-Fi/Bluetooth/ZigBee or the like)

UWB module 350

Loudspeaker
370A

Receiver
370B

Audio
module
370

Microphone
370C

Headset jack
370D

Processor 310

Memory 320

USB interface
330

Display 380

IMU module
390

Power supply module
340

FIG. 4

UWB module 150

Receiver 1502

Receive antenna 1

Power amplifier

Mixer

Filter

Sampling module

...

...

...

...

...

Receive antenna n

Power amplifier

Mixer

Filter

Sampling module

First processing module

Transmitter 1501

Transmit antenna

Power amplifier

Modulator

Digital-to-analog converter

Data signal generator

Pulse generator

Timing start indication information

FIG. 5A

EP 4 387 280 A1

Millimeter-wave radar module 160

FIG. 5B

FIG. 6

UWB module 350

Receiver 3502

Transmitter 3501

Receive antenna

Power amplifier

Mixer

Filter

Sampling module

Processing module

Timing start indication information

Transmit antenna

Power amplifier

Modulator

Pulse generator

Digital-to-analog converter

Data signal generator

FIG. 7(a)

FIG. 7(b)

FIG. 7(c)

FIG. 7(d)

FIG. 7(e)

(a)

(b)

FIG. 8

Z$_e$ axis

Antenna 2

X$_e$ axis

O$_e$

Antenna 0  Antenna 1

Y$_e$ axis

L-shaped antenna structure

(a)

Z$_e$ axis

Antenna 2

X$_e$ axis

O$_e$

Antenna 0  Antenna 1

Y$_e$ axis

Triangular antenna structure

(b)

(c)

FIG. 9

(a)

(b)

FIG. 10

FIG. 11

FIG. 12(a)

FIG. 12(b)

FIG. 12(c)

FIG. 12(d) (CONTINUED)

FIG. 12(e) (CONTINUED)

Z_e axis

β

N2

d2

Antenna 2

M2

β

L2 (λ/2)

L1 (λ/2)

X_e axis

Antenna 0

Antenna 1

O_e

N0

α

N1

UWB signal

d1

Component of
the UWB signal
on X_eO_eY_e

UWB signal

M1

Component of
the UWB signal
on X_eO_eY_e

Y_e axis

FIG. 12(f) (CONTINUED)

Z_e axis

100

O_e

Y_e axis

X_e axis

Mobile
phone

Smart speaker

FIG. 13(a)

FIG. 13(b)

FIG. 13(c) (CONTINUED)

FIG. 14

(a)

(b)

FIG. 15

(a)

(b)

FIG. 16

FIG. 17

(a)

(b)

FIG. 18

FIG. 18 (CONTINUED)

FIG. 19(a)

Two transmit antennas and four receive antennas

FIG. 19(b)-1

One transmit antenna and eight receive antennas

FIG. 19(b)-2

FIG. 19(c)-1 (CONTINUED)

FIG. 19(c)-2 (CONTINUED)

Reflection
point

(a)

$Z_m$ axis

First electronic
device 100

$Y_m$ axis

$X_m$ axis

$u^m = [x_u^m, y_u^m, z_u^m]^T$

H

$h^m$

(b)

FIG. 20

S2100: A millimeter-wave radar module receives a reflected signal

S2101: The millimeter-wave radar module performs a two-dimensional fast Fourier transform on a digital difference frequency signal

Range FFT

Doppler FFT

S2102: The millimeter-wave radar module obtains a distance between a reflection point and the millimeter-wave radar and a radial speed

S2103: The millimeter-wave radar module determines a signal coming direction of the reflected signal

S2104: The millimeter-wave radar module determines coordinates of the reflection point in a fourth coordinate system

S2105: The millimeter-wave radar module determines coordinates of a smart device or a user in the fourth coordinate system

S2106: The millimeter-wave radar module tracks the smart device or the user

FIG. 21

Target tracking result

Range FFT result

S2201: Extract phase information

S2202: Unwrap a phase

S2203: Calculate a phase difference

S2204: Perform band-pass filtering

S2205: Estimate a range

S2206: Perform determining

FIG. 22

FIG. 23

FIG. 24

(a)

(b)

FIG. 25

S1: Establish a first coordinate system, a second coordinate system, a third coordinate system, a fourth coordinate system, and a fifth coordinate system, and obtain position information of a device, an area, and a user in the fifth coordinate system through conversion from the first coordinate system, the second coordinate system, the third coordinate system, and the fourth coordinate system to the fifth coordinate system

S2: A second electronic device performs a preset operation based on the position information of the user and position information of the second electronic device

(a)

Hub device 200
Determine, based on the coordinates of the second electronic device and the coordinates of the user, that the second electronic device executes a preset instruction

Coordinates of the second electronic device and a room or an area in which the second electronic device is located

Report coordinates of a user in a whole house and a room or an area in which the user is located

Deliver the preset instruction

First electronic device 100

| UWB module | Millimeter-wave radar module |

Second electronic device 300

(b)

FIG. 26

FIG. 27(a)

Secondary
bedroom

Toilet

Primary
bedroom

Balcony

Dining
room

Living
room

2701

Kitchen

Entrance
aisle

FIG. 27(b)

**FIG. 27(c) (CONTINUED)**

$$E(W, G) = \frac{1}{n} \sum \left\| q^{i} - (W q^{i} - G) \right\|^2$$

**FIG. 28**

(a)

(b)

FIG. 29

Schematic diagram
of a wide beam

Schematic diagram
of a narrow beam

(a)

(b)

FIG. 30

| Hub device | | Routing device |
|---|---|---|

S3101: The hub device obtains coordinates of the routing device, coordinates of a user, and coordinates of a terminal device in a fifth coordinate system in real time or cyclically

S3102: Determine whether the coordinates of the user and the coordinates of the terminal device fall within a preset error range

Yes

S3103: The hub device sends a first message to the routing device

S3104: The routing device receives the first message, automatically adjusts a beam, provides a narrow beam, and enables a maximum beam gain point to point to the user or the terminal device

S3105: The routing device sends a second message to the hub device

S3106: The hub device receives the second message, and learns that the routing device has completed adjustment

Yes

S3107: A change of the coordinates of the user exceeds a first preset range

No

S3108: A change of the coordinates of the terminal device exceeds a second preset range

Yes

FIG. 31

| Hub device | | Routing device |

S3201: The hub device obtains coordinates of the routing device, coordinates of M users, and coordinates of N terminal devices in a fifth coordinate system in real time or cyclically, where a quantity of users (or terminal devices) whose coordinates fall within a preset error range in the M users and the N terminal devices is M1

S3202: M1 is greater than 0

Yes

S3203: The hub device sends a first message to the routing device

S3204: The routing device receives the first message, automatically adjusts a beam, separately provides narrow beams to M1 positions in a time division multiplexing manner, and enables maximum beam gain points to alternately point to the M1 positions

S3205: The routing device sends a second message to the hub device

S3206: The hub device receives the second message, and learns that the routing device has completed adjustment

Yes

S3207: A change of coordinates of at least one of the M users exceeds a first preset range

No

S3208: A change of coordinates of at least one of the N terminal devices exceeds a second preset range

Yes

FIG. 32

FIG. 33(a)

TO
FIG. 33(b)

CONT.
FROM
FIG. 33(a)

100                    100

Toilet

100

Secondary        300
bedroom

Primary
bedroom

Dining room

Living room

Balcony
100                    100

100

100

Entrance
aisle           100

200

Kitchen

FIG. 33(b)

Hub device

Cleaning device

S3401: The hub device obtains coordinates of a user, coordinates of M pieces of furniture, and coordinates of the cleaning device in a fifth coordinate system and an attitude of the user in real time or cyclically, learns that the coordinates of the user and coordinates of one of the M pieces of furniture fall within a preset first error range, learns that the attitude of the user is a lying attitude or a sitting attitude, and learns that the cleaning device is performing cleaning

S3402: Determine whether a change of the coordinates of the user within preset duration falls within a preset second error range

Yes

S3403: Determine whether the coordinates of the user and the coordinates of the cleaning device belong to different rooms or areas

Yes

S3404: The hub device sends a first message to the cleaning device

S3405: The cleaning device receives the first message, and does not clean a room or an area to which the user belongs

S3406: The cleaning device sends a second message to the hub device

TO
FIG. 34B

TO
FIG. 34B

FIG. 34A

CONT.
FROM
FIG. 34A

CONT.
FROM
FIG. 34A

S3407: The hub device receives the second message, and learns that the cleaning device does not clean the room or the area to which the user belongs

S3408: Determine whether the change of the coordinates of the user within the preset duration falls within the preset second error range

No

S3409: The hub device sends a third message to the cleaning device

S3410: The cleaning device receives the third message, and cleans the room or the area to which the user belongs

S3411: The cleaning device sends a fourth message to the hub device

S3412: The hub device receives the fourth message, and learns that the cleaning device cleans the room or the area to which the user belongs

FIG. 34B

| Hub device | | Cleaning device |
|---|---|---|

S3501: The hub device obtains coordinates of a user, coordinates of M pieces of furniture, and coordinates of the cleaning device in a fifth coordinate system and an attitude of the user in real time or cyclically, learns that the coordinates of the user and coordinates of one of the M pieces of furniture fall within a preset first error range, learns that the attitude of the user is a lying attitude or a sitting attitude, and learns that the cleaning device is performing cleaning

S3502: Determine whether a change of the coordinates of the user within preset duration falls within a preset second error range

Yes

S3503: Determine whether the coordinates of the user and the coordinates of the cleaning device belong to different rooms or areas

No

S3504: The hub device sends a first message to the cleaning device

S3505: The cleaning device receives the first message, leaves a room or an area to which the user belongs, and goes to another room or area for cleaning

S3506: The cleaning device sends a second message to the hub device

TO
FIG. 35B

TO
FIG. 35B

FIG. 35A

CONT.
FROM
FIG. 35A

CONT.
FROM
FIG. 35A

S3507: The hub device receives the second message, and learns that the cleaning device cleans the another room or area

S3508: Determine whether the change of the coordinates of the user within the preset duration falls within the preset second error range

No

S3509: The hub device sends a third message to the cleaning device

S3510: The cleaning device receives the third message, and cleans the room or the area to which the user belongs

S3511: The cleaning device sends a fourth message to the hub device

S3512: The hub device receives the fourth message, and learns that the cleaning device cleans the room or the area to which the user belongs

FIG. 35B

(a)

(b)

FIG. 36

FIG. 37

Hub device

Health management device

S3801a: The hub device obtains coordinates of the health management device and coordinates of a user in a whole house in real time or cyclically

S3802a: The hub device determines that a distance between a first user and the health management device is less than a preset first error range

S3803a: The hub device obtains at least one of height information, breath frequency information, and heartbeat frequency information of the first user

S3804a: Send a first message to the health management device, where the first message includes the at least one of the height information, the breath frequency information, and the heartbeat frequency information of the first user

S3805a: The health management device receives the first message, and obtains the at least one of the height information, the breath frequency information, and the heartbeat frequency information of the first user

S3806a: The health management device obtains body data of the first user based on the at least one of the height information, the breath frequency information, and the heartbeat frequency information

FIG. 38A

Hub device

Health management device

S3801b: The hub device obtains coordinates of the health management device and coordinates of a user in a whole house in real time or cyclically

S3802b: It is detected that the user uses the health management device, and the health management device sends a first request message to the hub device

First request message

S3803b: The hub device receives the first request message, and determines a first user whose distance from the health management device is less than a preset first error range

S3804b: The hub device obtains at least one of height information, breath frequency information, and heartbeat frequency information of the first user

S3805b: Send a first message to the health management device, where the first message includes the at least one of the height information, the breath frequency information, and the heartbeat frequency information of the first user

S3806b: The health management device receives the first message, and obtains the at least one of the height information, the breath frequency information, and the heartbeat frequency information of the first user

S3807b: The health management device obtains body data of the first user based on the at least one of the height information, the breath frequency information, and the heartbeat frequency information

FIG. 38B

(a)

(b)

FIG. 39

| Hub device | | Drying device |
|---|---|---|

S4002: The hub device obtains coordinates of the drying device

S4001: The drying device is at a first height

S4003: The hub device cyclically obtains coordinates of a user in a whole house

S4004: The hub device determines that a distance between a first user and the drying device is less than a preset first distance, and sends a first message to the drying device

First message

S4005: The drying device receives the first message, and descends to a second height

S4006: The hub device determines that the distance between the first user and the drying device is greater than or equal to the preset first distance, and sends a second message to the drying device

Second message

S4007: The drying device receives the second message, and ascends to the first height

FIG. 40

FIG. 41A

FIG. 41B

```
┌─────────────────┐                              ┌──────────────────┐
│   Hub device    │                              │  Lighting device │
└────────┬────────┘                              └─────────┬────────┘
         │                                                 │
┌────────┴──────────────────────┐                          │
│ S4201: The hub device obtains │                          │
│ coordinates of the lighting   │                          │
│ device and coordinates of a   │                          │
│ user in a whole house in real │                          │
│ time or cyclically            │                          │
└────────┬──────────────────────┘                          │
┌────────┴──────────────────────┐                          │
│ S4202: If the hub device      │                          │
│ determines that a position of │                          │
│ the user and a position of    │                          │
│ the lighting device meet a    │                          │
│ preset condition, the hub     │                          │
│ device sends a message to the │                          │
│ lighting device, to indicate  │                          │
│ the lighting device to adjust │                          │
│ light                         │                          │
└────────┬──────────────────────┘                          │
         │          First message                          │
         │ - - - - - - - - - - - - - - - - - - - - - - - ->│
         │          Second message                         │
         │ - - - - - - - - - - - - - - - - - - - - - - - ->│
         │          Third message                          │
         │ - - - - - - - - - - - - - - - - - - - - - - - ->│
         │          Fourth message                         │
         │ - - - - - - - - - - - - - - - - - - - - - - - ->│
         │                              ┌──────────────────┴──────┐
         │                              │ S4203: The lighting     │
         │                              │ device receives the     │
         │                              │ message, and adjusts    │
         │                              │ the light of the        │
         │                              │ lighting device         │
         │                              └─────────────────────────┘
```

FIG. 42

First electronic device

Processor — 4310

4320

Memory

FIG. 43

Second electronic device

Display — 4430

4410

4420

Processor

Memory

FIG. 44

## INTERNATIONAL SEARCH REPORT

| International application No. |
|---|
| **PCT/CN2022/117923** |

**A. CLASSIFICATION OF SUBJECT MATTER**

H04W 4/02(2018.01)i; H04W 16/28(2009.01)i; H04L 12/28(2006.01)i

According to International Patent Classification (IPC) or to both national classification and IPC

**B. FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; VEN; ENTXTC; ENTXT; VCN; CNKI; IEEE: 家居, 家电, 电器, 扫地机, 清扫, 清理, 清洁, 扫地, 扫拖, 打扫, 机器人, 体脂秤, 体重秤, 体检秤, 路由, 波束, 位置, 坐标, 灯, 晾衣架, 超宽带, 雷达, 全屋, UWB, radar, household, light+, locat+, beam+, sweep+ robot, robot vacuum, drying rack, laundry rack, route+, scales

**C. DOCUMENTS CONSIDERED TO BE RELEVANT**

| Category* | Citation of document, with indication, where appropriate, of the relevant passages | Relevant to claim No. |
|---|---|---|
| X | US 2017328997 A1 (GOOGLE INC.) 16 November 2017 (2017-11-16) paragraphs [0051]-[0425], and figures 1, 14A, and 14B | 20, 21, 24, 25, 46, 47, 50, 51, 70, 71, 74, 75, 93, 94, 97-99 |
| Y | US 2017328997 A1 (GOOGLE INC.) 16 November 2017 (2017-11-16) paragraphs [0051]-[0425], and figures 1, 14A, and 14B | 15-19, 22, 23, 41-45, 48, 49, 65-69, 72, 73, 88-92, 95, 96, 99 |
| Y | CN 110528234 A (GREE ELECTRIC APPLIANCES, INC. OF ZHUHAI et al.) 03 December 2019 (2019-12-03) description, paragraphs [0053]-[0064] | 15-19, 41-45, 65-69, 88-92, 99 |
| Y | CN 112118659 A (GUANGDONG GENIUS TECHNOLOGY CO., LTD.) 22 December 2020 (2020-12-22) description, paragraphs [0071]-[0087] | 22, 23, 48, 49, 72, 73, 95, 96, 99 |
| A | CN 113257415 A (ALIBABA GROUP HOLDING LTD.) 13 August 2021 (2021-08-13) entire document | 1-99 |
| A | CN 106541407 A (SAMSUNG ELECTRONICS CO., LTD.) 29 March 2017 (2017-03-29) entire document | 1-99 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2022** | **02 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| | International application No. |
|---|---|
| | **PCT/CN2022/117923** |

**C.    DOCUMENTS CONSIDERED TO BE RELEVANT**

| Category* | Citation of document, with indication, where appropriate, of the relevant passages | Relevant to claim No. |
|---|---|---|
| A | KR 20190076332 A (UNIV SOOKMYUNG WOMENS IND ACAD COOP. FOUND) 02 July 2019 (2019-07-02)<br>    entire document | 1-99 |

Form PCT/ISA/210 (second sheet) (January 2015)

## INTERNATIONAL SEARCH REPORT
### Information on patent family members

| International application No. |
| --- |
| **PCT/CN2022/117923** |

| Patent document cited in search report | | | Publication date (day/month/year) | Patent family member(s) | | | Publication date (day/month/year) |
| --- | --- | --- | --- | --- | --- | --- | --- |
| US | 2017328997 | A1 | 16 November 2017 | JP | 2021099361 | A | 01 July 2021 |
|  |  |  |  | JP | 2019515246 | A | 06 June 2019 |
|  |  |  |  | EP | 3455644 | A1 | 20 March 2019 |
|  |  |  |  | US | 2020233079 | A1 | 23 July 2020 |
|  |  |  |  | WO | 2017196991 | A1 | 16 November 2017 |
|  |  |  |  | CN | 108700645 | A | 23 October 2018 |
|  |  |  |  | KR | 20180105174 | A | 27 September 2018 |
| CN | 110528234 | A | 03 December 2019 | None | | | |
| CN | 112118659 | A | 22 December 2020 | None | | | |
| CN | 113257415 | A | 13 August 2021 | None | | | |
| CN | 106541407 | A | 29 March 2017 | US | 2017083023 | A1 | 23 March 2017 |
|  |  |  |  | EP | 3144765 | A1 | 22 March 2017 |
| KR | 20190076332 | A | 02 July 2019 | None | | | |

Form PCT/ISA/210 (patent family annex) (January 2015)

144

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111243793

- CN 202110872916

**Non-patent literature cited in the description**

- **QIN YONGYUAN.** Inertial Navigation. Beijing: Science Press, May 2006